**Europäisches Patentamt**

**European Patent Office**

**Office européen des brevets**

(19)

(11) **EP 1 333 310 A1**

(12) **EUROPEAN PATENT APPLICATION**
published in accordance with Art. 158(3) EPC

(43) Date of publication:
06.08.2003 Bulletin 2003/32

(51) Int Cl.$^7$: **G02B 27/28**

(21) Application number: 01981058.9

(22) Date of filing: 09.11.2001

(86) International application number:
**PCT/JP01/09836**

(87) International publication number:
**WO 02/039176 (16.05.2002 Gazette 2002/20)**

(84) Designated Contracting States:
**AT BE CH CY DE DK ES FI FR GB GR IE IT LI LU MC NL PT SE TR**

(30) Priority: 10.11.2000 JP 2000343913
10.11.2000 JP 2000343893
10.11.2000 JP 2000343899
10.11.2000 JP 2000343923
10.11.2000 JP 2000343933

(71) Applicant: **Sumitomo Electric Industries, Ltd.**
**Osaka-shi, Osaka 541-0041 (JP)**

(72) Inventors:
• **SANO, T.,**
**Yokohama Wks of Sumitomo Elec. Ind. Ltd**
**Yokohama-shi, Kanagawa 244-888 (JP)**

• **MURASHIMA, K.,**
**Yokohama Wks Sumitomto Elec Ind.Ltd**
**Yokahama-shi, Kanagawa 244-8588 (JP)**
• **SHIOZAKI, M,**
**Yokohama Wks, Sumitomo Elec. Ind. Ltd**
**Yokohama-shi, Kanagawa 244-8588 (JP)**
• **INOUE, A.,**
**Yokohama Wks of Sumitomo Elec. Ind. Ltd**
**Yokohama-shi, Kanagawa 244-8588 (JP)**
• **SUGANUMA, H.,**
**Yokohama Wks, Sumitomo Elec. Ind Ltd**
**Yokohama-shi, Kanagawa 244-8588 (JP)**

(74) Representative: **HOFFMANN - EITLE**
**Patent- und Rechtsanwälte**
**Arabellastrasse 4**
**81925 München (DE)**

(54) **INTERLEAVER, FILTER INCLUDED THEREIN, AND INTERLEAVER SYSTEM**

(57) The present invention relates to an interleaver and others with a transmission spectrum excellent in isolation between signal channels and flat near each channel wavelength. The interleaver is provided with an input port for receiving a signal of multiple channels, and first and second output ports for outputting signals of first and second channel groups, respectively, separated from the signal of multiple channels. Each of transmission spectra of output light from the first output port and output light from the second output port has such flatness that a difference between a maximum transmittance and a minimum transmittance in a wavelength range of ±0.06 nm centered, about each signal channel wavelength falls within 0.4 dB, preferably within 0.2 dB, and crosstalk between adjacent signal channels is controlled to -20 dB or less, preferably to -30 dB or less.

*Fig.5*

EP 1 333 310 A1

## Description

## Technical Field

The present invention relates to an interleaver configured to separate a multiple-channel signal received through an input port, into a signal of a first channel group and a signal of a second channel group, to output the signal of the first channel group to a first output port, and to output the signal of the second channel group to a second output port, a filter included in the interleaver, and an interleaver system.

## Background Art

WDM (Wavelength Division Multiplexing) transmission systems for transmitting multiplexed signals of multiple channels are able to transmit a large capacity of information at high speed. For further increase in capacity in the WDM transmission systems, research is under way to utilize more signal channels (or to increase the number of multiplexed signals). In the existing WDM transmission systems, use of new wavelengths between the signal channels already under use is being contemplated in order to make use of more channels (or to multiplex signals of more wavelengths). For implementing it, it becomes necessary to use an interleaver for separating the signal channels already used, from signal channels newly employed. Namely, the interleaver receives a signal of multiple channels (channel wavelengths: $\lambda_1$, $\lambda_2$, $\lambda_3$, $\lambda_4$, $\lambda_5$, $\lambda_6$,...) through an input port, separates the signal of the multiple channels into a signal of a first channel group (channel wavelengths: $\lambda_1$, $\lambda_3$, $\lambda_5$, ..., $\lambda_{2n-1}$, ...) and a signal of a second channel group (channel wavelengths: $\lambda_2$, $\lambda_4$, $\lambda_6$, ..., $\lambda_{2n}$, ...), outputs the signal of the first channel group thus separated, from a first output port, and outputs the signal of the second channel group thus separated, from a second output port. However, there holds the relation of $\lambda_1 < \lambda_2 < \lambda_3 < \lambda_4 < \lambda_5 < \lambda_6 <...$ .

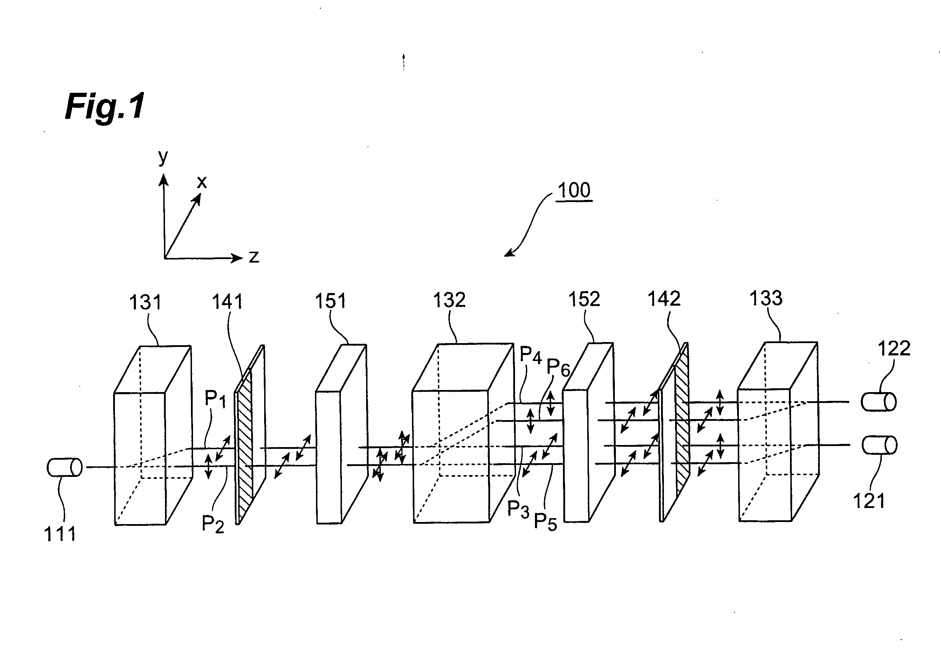

Fig. 1 is an illustration showing a configuration of an interleaver 100 according to a first conventional example. The interleaver 100 shown in this figure is disclosed in U.S. Pat. No. 5,694,233. In this Fig. 1, the illustration is based on an orthogonal coordinate system the z-axis of which is taken along the traveling direction of light. This interleaver 100 has a birefrigent material 131, a wave plate 141, a wavelength selection filter 151, a birefrigent material 132, a wavelength selection filter 152, a wave plate 142, and a birefrigent material 133 arranged in order from an input port 111 toward output ports 121, 122.

In this interleaver 100, the birefrigent material 131 separates the signal of multiple channels (channel wavelengths: $\lambda_1$, $\lambda_2$, $\lambda_3$, $\lambda_4$, $\lambda_5$, $\lambda_6$, ...) received through the input port 111, into a polarization component of a first orientation (a direction of the x-axis in-the drawing) and a polarization component of a second orientation (a direction of the y-axis in the drawing), outputs the polarization component of the first orientation into a first path $P_1$, and outputs the polarization component of the second orientation into a second path $P_2$.

The polarization component of the first orientation, outputted from the birefrigent material 131 into the first path $P_1$, travels without passing through the wave plate 141, to arrive at the wavelength selection filter 151. This wavelength selection filter 151 transmits the signal of the first channel group out of the arriving polarization component of the first orientation while maintaining it as a polarization component of the first orientation, but it converts the signal of the second channel group into a polarization component of the second orientation. On the other hand, the polarization component of the second orientation, outputted from the birefrigent material 131 into the second path $P_2$, is converted into a polarization component of the first orientation by the wave plate 141, and thereafter the wavelength selection filter 151 transmits the signal of the first channel group out of the arriving polarization component of the second orientation while maintaining it as a polarization component of the first orientation, but it converts the signal of the second channel group into a polarization component of the second orientation.

Each of the signal groups having propagated via the wavelength selection filter 151 and through the first path $P_1$ and through the second path $P_2$, respectively, and having arrived at the birefrigent material 132 is separated into the polarization component of the first orientation and the polarization component of the second orientation by this birefrigent material 132. Then this birefrigent material 132 outputs the signal of the first channel group (the polarization component of the first orientation) having propagated through the first path $P_1$, into a third path $P_3$ and outputs the signal of the second channel group (the polarization component of the second orientation) having propagated through the first path $P_1$, into a fourth path $P_4$. On the other hand, the signal of the first channel group (the polarization component of the first orientation) having passed through the second path $P_2$ is outputted into a fifth path $P_5$ and the signal of the second channel group (the polarization component of the second orientation) having propagated through the second path $P_2$ is outputted into a sixth path $P_6$.

The signal of the first channel group (the polarization component of the first orientation) outputted from the birefrigent material 132 into the third path $P_3$ passes through the wavelength selection filter 152 having the same characteristics as the wavelength selection filter 151, while remaining as the polarization component of the first orientation, and it is then converted into a polarization component of the second orientation by the wave plate 142. The signal of the second channel group (the polarization component of the second orientation) outputted from the birefrigent material 132 into the fourth path $P_4$ is converted into a polarization component of the first orientation by the wavelength selection filter 152 having the same characteristics as the wavelength selection filter 151, and it is further converted into a polarization component of the second orientation by the wave plate 142. On the other hand, the signal of the first channel group (the polarization component of the first orientation) outputted from the birefrigent material 132 into the fifth path $P_5$ travels through the wavelength selection filter 152 having the same characteristics as the wavelength selection filter 151, while remaining as the polarization component of the first orientation, and it then travels without passing through the wave plate 142. Likewise, the signal of the second channel group (the polarization component of the second orientation) outputted from the birefrigent material 132 into the sixth path $P_6$ is converted into a polarization component of the first orientation by the wavelength selection filter 152 having the same characteristics as the wavelength selection filter 151, and it then travels without passing through the wave plate 142.

Then the birefrigent material 133 multiplexes polarized waves of the signal of the first channel group (the polarization component of the second orientation) having propagated through the third path $P_3$ and the signal of the first channel group (the polarization component of the first orientation) having propagated through the fifth path $P_5$, and outputs the signals of the first channel group thus multiplexed, from the first output port 121. The birefrigent material 133 also multiplexes polarized waves of the signal of the second channel group (the polarization component of the second orientation) having propagated through the fourth path $P_4$ and the signal of the second channel group (the polarization component of the first orientation) having propagated through the sixth path $P_6$, and outputs the signals of the second channel group thus multiplexed, from the second output port 122.

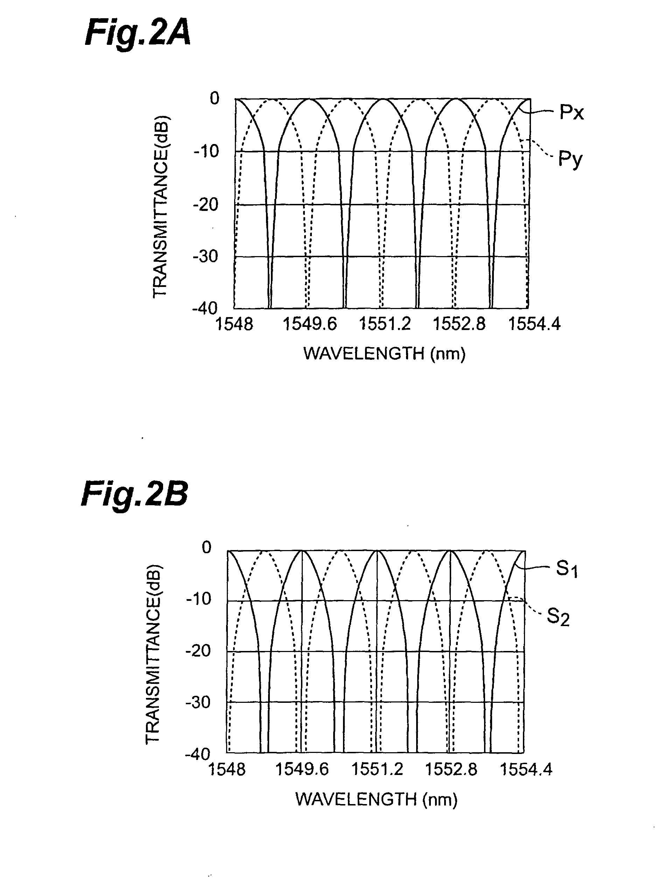

Fig. 2A and Fig. 2B show an example of transmission spectra of the interleaver 100 according to the aforementioned first conventional example, wherein Fig. 2A shows a transmission spectrum ($P_x$) of the polarization component of the first orientation outputted from the wavelength selection filter 151 and a transmission spectrum ($P_y$) of the polarization component of the second orientation outputted from the wavelength selection filter 151 and Fig. 2B shows a transmission spectrum ($S_1$) of the output light (the signal of the first channel group) outputted from the first output port 121 and a transmission spectrum ($S_2$) of the output light (the signal of the second channel group) outputted from the second output port 122. As seen from these Fig. 2A and Fig. 2B, the signal wavelengths (channel wavelengths) included in the first channel group to be outputted from the first output port 121 are 1548.0 nm, 1549.6 nm, 1551.2 nm, 1552.8 nm, and 1554.4 nm. On the other hand, the signal wavelengths (channel wavelengths) included in the second channel group to be outputted from the second output port 122 are 1548.8 nm, 1550.4 nm, 1552.0 nm, and 1553.6 nm.

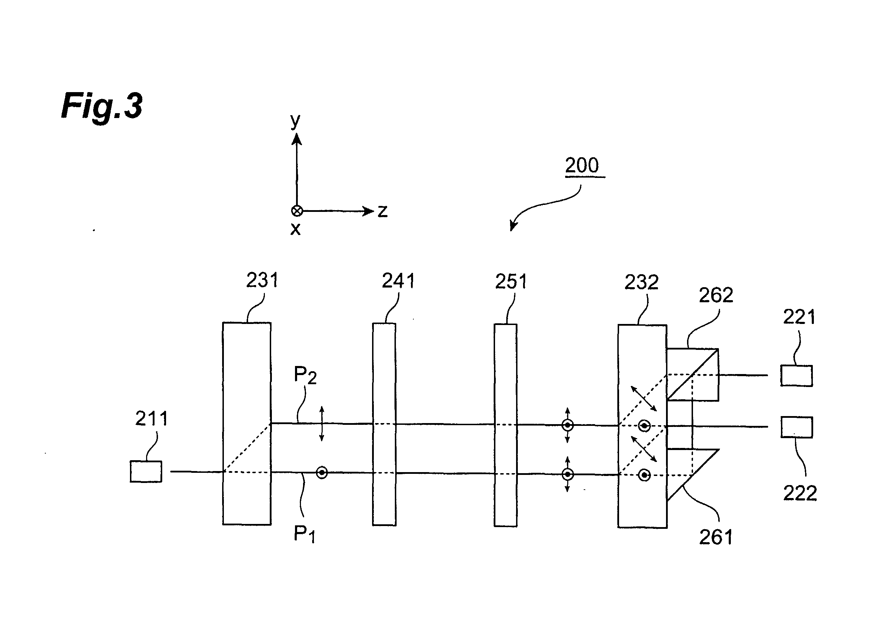

Next, Fig. 3 is an illustration showing a configuration of an interleaver 200 according to a second conventional example. The interleaver 200 shown in this figure is disclosed in U.S. Pat. No. 5, 978,116. In this Fig. 2, the illustration is also based on the orthogonal coordinate system the z-axis of which is taken along the traveling direction of light. This interleaver 200 has a birefrigent material 231, a polarization rotator 241, a wavelength selection filter 251, a birefrigent material 232, and combining elements 261, 262 arranged in order from an input port 211 toward output ports 221, 222. The wavelength selection filter 251 has a structure consisting of a stack of an arbitrary number of birefrigent materials.

In this interleaver 200, the birefrigent material 231 separates a signal of multiple channels (channel wavelengths: $\lambda_1, \lambda_2, \lambda_3, \lambda_4, \lambda_5, \lambda_6, ...$) received through the input port 211, into a polarization component of a first orientation (the direction of the x-axis in the drawing) and a polarization component of a second orientation (the direction of the y-axis in the drawing), outputs the polarization component of the first orientation thus separated, into a first path $P_1$, and also outputs the polarization component of the second orientation thus separated, into a second path $P_2$.

The signal groups outputted from the birefrigent material 231 into the first path $P_1$ and into the second path $P_2$, respectively, travel to arrive at the wavelength selection filter 251 while their polarization orientation is maintained or rotated by 90° by the polarization rotator 241. Then the wavelength selection filter 251 outputs, for example, the signal of the first channel group having propagated through the first path $P_1$, as a polarization component of the first orientation and outputs the signal of the second channel group having propagated through the first path $P_1$, as a polarization component of the second orientation. It also outputs the signal of the first channel group having propagated through the second path $P_2$, as a polarization component of the second orientation and outputs the signal of the second channel group having propagated through the second path $P_2$, as a polarization component of the first orientation.

Then the birefrigent material 232 and the combining elements 261, 262 multiplex polarized waves of the signal of the first channel group (the polarization component of the first orientation) having propagated through the first path $P_1$ and the signal of the first channel group (the polarization component of the second orientation) having propagated through the second path $P_2$, and output the signals of the first channel group thus multiplexed, from the first output port 221. On the other hand, the birefrigent material 232 multiplexes polarized waves of the signal of the second channel group (the polarization component of the second orientation) having propagated through the first path $P_1$ and the signal of the second channel group (the polarization component of the first orientation) having propagated through the second path $P_2$, and outputs the signals of the second channel group thus multiplexed, from the second output port 222.

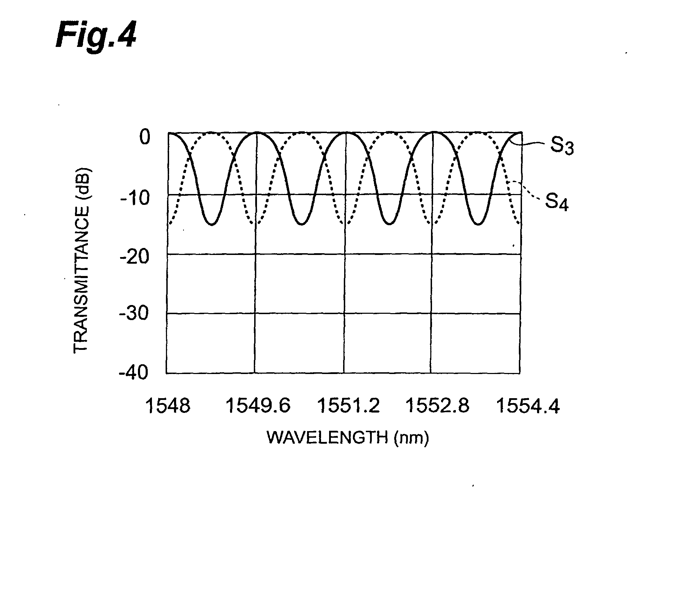

Fig. 4 shows an example of transmission spectra of the interleaver 200 according to the above-stated second conventional example. This Fig. 4 shows a transmission spectrum ($S_3$) of the signal of the first channel group outputted from the first output port 221 and a transmission spectrum ($S_4$) of the signal of the second channel group outputted from the second output port 222. As seen from this Fig. 4, the signal wavelengths (channel wavelengths) included in the first channel group to be outputted from the first output port 221 are 1548.0 nm, 1549.6 nm, 1551.2 nm, 1552.8 nm, and 1554.4 nm. On the other hand, the signal wavelengths (channel wavelengths) included in the second channel group to be outputted from the second output port 222 are 1548.8 nm, 1550.4 nm, 1552.0 nm, and 1.553.6.

**Disclosure of the Invention**

The inventors studied the conventional interleavers and found the following problems. Namely, the interleaver 100 according to the first conventional example is configured to output the signal of the first channel group (channel wavelengths $\lambda_{2n-1}$) from the first output port 121 and output the signal of the second channel group (channel wavelengths $\lambda_{2n}$) from the second output port 122, and gives rise to losses in light of wavelengths between the channel wavelengths $\lambda_{2n-1}$ and the channel wavelengths $\lambda_{2n}$ (similarly between the channel wavelengths $\lambda_{2n}$ and the channel wavelengths $\lambda_{2n+1}$) due to the structure provided with the two wavelength selection filters 151, 152 having the same transmission characteristics and others. Accordingly, it is excellent in isolation between the signal channels, but the transmittance is not flat near each channel wavelength where the transmittance becomes maximum. For this reason, it had the problem that powers of the signals outputted from the interleaver 100 varied with variation in each channel wavelength.

On the other hand, the interleaver 200 according to the second conventional example gives rise to no loss in light of the wavelengths between the channel wavelengths $\lambda_{2n-1}$ and the channel wavelengths $\lambda_{2n}$ (similarly between the channel wavelengths $\lambda_{2n}$ and the channel wavelengths $\lambda_{2n+1}$), and outputs light of any wavelengths from either of the first output port 221 and the second output port 222. Accordingly, the interleaver 200 according to the second conventional example permits achievement of a flat top profile on the basis of the transmission spectra flatter near each channel wavelength where the transmittance becomes maximum, but is inferior in the isolation between the signal channels, as compared with the interleaver 100 according to the aforementioned first conventional example.

The present invention has been accomplished in order to solve the above-stated problems, and an object of the present invention is to provide an interleaver that is excellent in the isolation between signal channels and that provides transmission spectra flat near each channel wavelength where the transmittance is maximum, a filter included in the interleaver, and an interleaver system.

An interleaver according to the present invention is an optical device for separating a signal of multiple channels into a signal of a first channel group and a signal of a second channel group, which comprises an input port for receiving the signal of the multiple channels, a first output port for outputting the signal of the first channel group separated, and a second output sport for outputting the signal of the second channel group separated.

Particularly, in the interleaver according to the present invention, each of transmission spectra of the output light from the first output port and the output light from the second output port has such flatness that in a wavelength range of $\pm 0.06$ nm centered about each signal channel wavelength, a difference between a maximum transmittance and a minimum transmittance falls within 0.4 dB, preferably within 0.2 dB, and crosstalk between adjacent channels is controlled to not more than -20 dB, preferably to not more than -30 dB.

The interleaver according to the present invention, having the transmission spectra as described above, can be modified in various ways of modification.

For example, the interleaver according to a first embodiment is characterized by comprising an etalon filter having such loss characteristics that losses become maximum at channel wavelengths in the signals of the respective channels, and particularly, each of first and second application examples of the first embodiment comprises first polarization separating means, polarization plane parallelizing means, wavelength selection means, second polarization separating means, polarization plane orthogonalizing means, polarized wave multiplexing means, and the etalon filter.

The first polarization separating means separates a signal of multiple channels received through the input port, into polarization components of a first orientation and a second orientation orthogonal to each other, outputs the polarization component of the first orientation separated, into a first path, and outputs the polarization component of the second orientation separated, into a second path. The polarization plane parallelizing means parallelizes a plane of polarization of the signal group outputted from the first polarization separating means into the first path, with a plane of polarization of the signal group outputted from the first polarization separating means into the second path. The wavelength selection means outputs a signal of the first channel group out of the signal group outputted from the polarization plane parallelizing means into the first path, as a polarization component of the first orientation into the first path, and outputs a signal of the second channel group out of the signal group outputted from the polarization plane parallelizing means into the first path, as a polarization component of the second orientation into the first path. On the other hand, the wavelength selection means outputs a signal of the first channel group out of the signal group outputted from the polarization plane parallelizing means into the second path, as a polarization component of the first orientation into the second path, and outputs a signal of the second channel group out of the signal group outputted from the polarization plane parallelizing means into the second path, as a polarization component of the second orientation into the second path. The second polarization separating means separates the signal group outputted from the wavelength selection means into the first path, into polarization components of the first orientation and the second orientation, thereafter outputs a signal of the first channel group corresponding to the polarization component of the first orientation into a third path, and outputs a signal of the second channel group corresponding to the polarization component of the second orientation into a fourth path. On the other hand, the second polarization separating means separates the signal group outputted from the wavelength selection means into the second path, into polarization components of the first orientation and the second orientation, thereafter outputs a signal of the first channel group corresponding to the polarization component of the first orientation into a fifth path, and outputs a signal of the second channel group corresponding to the polarization component of the second orientation into a sixth path. The polarization plane orthogonalizing means orthogonalizes a plane of polarization of the signal of the first channel group outputted from the second polarization separating means into the third path, to a plane of polarization of the signal of the first channel group outputted from the second polarization separating means into the fifth path, and orthogonalizes a plane of polarization of the signal of the second channel group outputted from the second polarization separating means into the fourth path, to a plane of polarization of the signal of the second channel group outputted from the second polarization separating means into the sixth path. The polarized wave multiplexing means multiplexes polarized waves of the signal of the first channel group outputted from the polarization plane orthogonalizing means into the third path and the signal of the first channel group outputted from the polarization plane orthogonalizing means into the fifth path and outputs the multiplexed signals of the first channel group to the first output port. On the other hand, the polarized wave multiplexing means multiplexes polarized waves of the signal of the second channel group outputted from the polarization plane orthogonalizing means into the fourth path and the signal of the second channel group outputted from the polarization plane orthogonalizing means into the sixth path and outputs the multiplexed signals of the second channel group to the second output port.

Particularly, in the first application example of the first embodiment, the etalon filter provides a loss to one of the signal groups propagating in the third path and in the fourth path, respectively, and the signal group propagating in the first path, and provides a loss to one of the signal groups propagating in the fifth path and in the sixth path, respectively, and the signal group propagating in the second path. On the other hand, in the second application example of the first embodiment, the etalon filter provides a loss to either one of the signal group propagating in the first path and the signal group propagating in the second path, or provides a loss to either one of the signal group propagating in the third path and the signal group propagating in the fifth path and to either one of the signal group propagating in the fourth path and the signal group propagating in the sixth path.

Each of third and fourth application examples of the first embodiment comprises first polarization separating means, wavelength selection means, second polarization separating means, polarized wave multiplexing means, and the etalon filter. Here the etalon filter in the third application example provides a loss to one of the signal groups propagating in the third path and in the fourth path, respectively, and the signal group propagating in the first path and provides a loss to one of the signal groups propagating in the fifth path and in the sixth path, respectively, and the signal group propagating in the second path. On the other hand, the etalon filter in the fourth application example provides a loss to either one of the signal group propagating in the first path and the signal group propagating in the second path, or provides a loss to either one of the signal group propagating in the third path and the signal group propagating in the fifth path and to either one of the signal group propagating in the fourth path and the signal group propagating in the sixth path. Preferably, the second and fourth application examples of the first embodiment described above further comprise optical path length adjusting means for adjusting an optical path length difference between optical path lengths of the third path and the fifth path caused by the etalon filter and for adjusting an optical path length difference between optical path lengths of the fourth path and the sixth path caused by the etalon filter.

Next, an interleaver according to a second embodiment comprises first polarization separating means, polarization plane parallelizing means, a filter, polarization plane orthogonalizing means, and polarized wave multiplexing means. Particularly, the filter converts a signal of the first channel group out of a signal group outputted from the polarization plane parallelizing means into a first path, into a polarization state a principal component of which is a polarization component of the first orientation, to output the signal into a third path, and converts a signal of the second channel group out of the signal group outputted from the polarization plane parallelizing means into the first path, into a polarization state a principal component of which is a polarization component of the second orientation, to output the signal into a fourth path. On the other hand, the filter also converts a signal of the first channel group out of a signal group outputted from the polarization plane parallelizing means into a second path, into a polarization state a principal component of which is a polarization component of the first orientation, to output the signal into a fifth path, and converts a signal of the second channel group out of the signal group outputted from the polarization plane parallelizing means into the second path, into a polarization state a principal component of which is a polarization component of the second orientation, to output the signal into a sixth path.

The filter applied to the interleaver according to the second embodiment comprises first wavelength selection means, second polarization separating means, and second wavelength selection means. The first wavelength selection means outputs one of signals of the first channel group and the second channel group arriving as polarization components of the first orientation, while maintaining the signal as a polarization component of the first orientation, and converts the other signal into a polarization component of the second orientation to output the signal. The second polarization separating means separates the signal groups outputted from the first wavelength selection means, into polarized waves of signals of the first channel group and signals of the second channel group and outputs the signals into respective paths different from each other. The second wavelength selection means converts a signal of one channel group outputted as a polarization component of the first orientation from the second polarization separating means, into a polarization state a principal component of which is a polarization component of the first orientation, to outputs the signal, and converts a signal of the other channel group outputted as a polarization component of the second orientation from the second polarization separating means, into a polarization state a principal component of which is a polarization component of the second orientation, to output the signal.

In the filter applied to the interleaver according to the second embodiment, preferably, the first wavelength selection means outputs each of the polarization component of the first orientation and the polarization component of the second orientation at a predetermined wavelength interval and the second wavelength selection means reverses each of the polarization component of the first orientation and the polarization component of the second orientation into the reverse orientation at a wavelength interval equal to half of the predetermined wavelength interval. In the filter applied to the interleaver according to the second embodiment, a polarization split ratio between the polarization component of the first orientation and the polarization component of the second orientation in the second wavelength selection means is preferably neither 1:0 nor 0:1.

Next, an interleaver according to a third embodiment comprises first polarization separating means, polarization plane parallelizing means, a filter, polarization plane orthogonalizing means, and polarized wave multiplexing means. Particularly, the filter in the third embodiment converts one of a signal of the first channel group outputted from the polarization plane parallelizing means into a first path and a signal of the first channel group outputted from the polarization plane parallelizing means into a second path, into a polarization state a principal component of which is a polarization component of the first orientation, to output the signal into a third path, and outputs the other signal as a polarization component of the first orientation into a fifth path. On the other hand, the filter converts one of a signal of the second channel group outputted from the polarization plane parallelizing means into the first path and a signal of the second channel group outputted from the polarization plane parallelizing means into the second path, into a polarization state a principal component of which is a polarization component of the second orientation, to output the signal into a fourth path, and converts the other signal into a polarization component of the second orientation to output the signal into a sixth path.

The filter applied to the interleaver according to the third embodiment comprises first wavelength selection means, second polarization separating means, and second wavelength selection means. The first wavelength selection means outputs as a polarization component of the first orientation the signal of the first channel group out of the signal group arriving through the first path, and converts the signal of the second channel group into a polarization component of the second orientation. On the other hand, the first wavelength selection means outputs as a polarization component of the first orientation the signal of the first channel group out of the signal group arriving through the second path, and converts the signal of the second channel group into a polarization component of the second orientation. The second polarization separating means separates polarized waves of the signal of the first channel group and the signal of the second channel group outputted from the first wavelength selection means into the first path, from each other, thereafter outputs the signal of the first channel group corresponding to the polarization component of the first orientation into the third path, and outputs the signal of the second channel group corresponding to the polarization component of the second orientation into the fourth path. On the other hand, the second polarization separating means also separates polarized waves of the signal of the first channel group and the signal of the second channel group outputted from the first wavelength selection means into the second path, from each other, thereafter outputs the signal of the first channel group corresponding to the first polarization component into the fifth path, and outputs the signal of the second channel group corresponding to the polarization component of the second orientation into the sixth path. The second wavelength selection means converts one of the signals of the first channel group outputted from the second polarization separating means into the third path and into the fifth path, into a polarization state a principal component of which is a polarization component of the first orientation, and converts one of the signals of the second channel group outputted from the second polarization separating means into the fourth path and into the sixth path, into a polarization state a principal component of which is a polarization component of the second orientation.

The filter applied to the interleaver according to the third embodiment may further comprise third wavelength selection means for outputting a signal of the first channel group propagating in a path without the second wavelength selection means out of the third path and the fifth path, as a polarization component of the first orientation. In this case, preferably, the third wavelength selection means has the same transmission characteristics as the first wavelength selection means. The filter may further comprise fourth wavelength selection means for outputting a signal of the second channel group propagating in a path without the second wavelength selection means out of the fourth path and the sixth path, as a polarization component of the second orientation. In this case, preferably, the fourth wavelength selection means has transmission characteristics opposite to those of the first wavelength selection means, for each of the polarization component of the first orientation and the polarization component of the second orientation. The filter may further comprise optical path length adjusting means for adjusting a path length difference between optical path lengths of the third path and the fifth path and for adjusting a path length difference between optical path lengths of the fourth path and the sixth path. If there is a path length difference between the path lengths of the third path and the fifth path, dispersion will occur between the signals of the first channel group outputted from the first output port; and if there is a path length difference between the path lengths of the fourth and sixth paths, dispersion will occur between the signals of the second channel group outputted from the second output port. However, the provision of the optical path length adjusting means decreases the path length difference between the path lengths of the third path and the fifth path and the path length difference between the path lengths of the fourth path and the sixth path, thus effectively suppressing the dispersion between the signals outputted from each output port.

In the filter applied to the interleaver according to the third embodiment, preferably, the first wavelength selection means outputs the polarization component of the first orientation and the polarization component of the second orientation at a predetermined wavelength interval and the second wavelength selection means reverses each of the polarization component of the first orientation and the polarization component of the second orientation into the reverse orientation at a wavelength.interval equal to half of the predetermined wavelength interval. In the filter, a polarization split ratio between the polarization component of the first orientation and the polarization component of the second orientation in the second wavelength selection means is preferably neither 1:0 nor 0:1.

Further, in the filter applied to the interleaver according to the third embodiment, the second wavelength selection means and the third wavelength selection means are preferably integrated into one, in order to enable compactification thereof. In addition, the second wavelength selection means and the fourth wavelength selection means are also preferably integrated into one.

The filter applied to the interleaver according to the third embodiment may comprise third wavelength selection means for outputting a signal of the first channel group propagating in a path without the second wavelength selection means out of the third path and the fifth path, as a polarization component of the first orientation, and fourth wavelength selection means for outputting a signal of the second channel group propagating in a path without the second wavelength selection means out of the fourth path and the sixth path, as a polarization component of the second orientation. In addition, the third wavelength selection means and the fourth wavelength selection means are preferably integrated into one, in order to enable compactification thereof. In this case, the second wavelength selection means, the third wavelength selection means, and the fourth wavelength selection means are more preferably integrated into one.

An interleaver system according to the present invention comprises splitting means, first and second interleavers, and multiplexing means. The splitting means splits a signal of multiple channels into two signal groups. The first interleaver has the structure similar to the interleaver according to the foregoing third embodiment and separates one of the signal groups split by the splitting means, into a signal of the first channel group and a signal of the second channel group. The second interleaver also has the structure similar to the interleaver according to the foregoing third embodiment and separates the other of the signal groups split by the splitting means, into a signal'of the first channel group and a signal of the second channel group. The multiplexing means multiplexes the signal of the first channel group outputted from the first interleaver and the signal of the first channel group outputted from the second interleaver, and also multiplexes the signal of the second channel group outputted from the first interleaver and the signal of the second channel group outputted from the second interleaver.

In the interleaver system, the path in the first interleaver and the path in the second interleaver, each of which is provided with the second wavelength selection means, are different from each other.

Next, an interleaver according to the fourth embodiment comprises first polarization separating means, first wavelength selection means, second. polarization separating means, second wavelength selection means, and polarized wave multiplexing means.

In the interleaver according to the fourth embodiment, preferably, the first wavelength selection means outputs each of a polarization component of the first orientation and a polarization component of the second orientation at a predetermined wavelength interval and the second wavelength selection means reverses each of the polarization component of the first orientation and the polarization component of the second orientation into the reverse orientation at a wavelength interval equal to half of the predetermined wavelength interval. In the fourth embodiment, a polarization split ratio between the polarization component of the first orientation and the polarization component of the second orientation in the second wavelength selection means is preferably neither 1:0 nor 0:1.

Next, an interleaver according to the fifth embodiment comprises first polarization separating means, polarization plane parallelizing means, first wavelength selection means, second polarization separating means, polarization plane orthogonalizing means, first polarized wave multiplexing means, and a filter having such loss characteristics that losses are maximum at channel wavelengths in a signal of respective channels and configured to output a polarization component of the first orientation arriving at a first input end, to a first output end and output a polarization component of the second orientation arriving at a second input end, to a second output end. Particularly, the filter in the fifth embodiment is disposed on one of the following locations: a first path and a second path between the first polarization separating means and the polarization plane parallelizing means; a third path and a fourth path between the second polarization separating means and the polarization plane orthogonalizing means; a fifth path and a sixth path between the second polarization separating means and the polarization plane orthogonalizing means; a third path and a fifth path between the polarization plane orthogonalizing means and the first polarized wave multiplexing means; and, a fourth path and a sixth path between the polarization plane orthogonalizing means and the first polarized wave multiplexing means.

The filter applied to the interleaver according to the fifth embodiment comprises first optical rotation means, third polarization separating means, second wavelength selection means, second polarized wave multiplexing means, second optical rotation means, first polarizing means, and second polarizing means.

The first optical rotation means rotates a plane of polarization of a signal group received through the first input end, by an angle θ and outputs the signal group into a seventh path. On the other hand, the first optical rotation means rotates a plane of polarization of a signal group received through the second input end, by the angle θ and outputs the signal group into an eighth path. The third polarization separating means separates the signal group outputted from the first optical rotation means into the seventh path, into a polarization component of the first orientation and a polarization component of the second orientation, thereafter outputs the polarization component of the first orientation separated, into a ninth path, and also outputs the polarization component of the second orientation separated, into a tenth path. The third polarization separating means also separates the signal group outputted from the first optical rotation means into the eighth path, into a polarization component of the first orientation and a polarization component of the second orientation, thereafter outputs the polarization component of the first orientation separated, into an eleventh path, and also outputs the polarization component of the second orientation separated, into a twelfth path. The second wavelength selection means converts the polarization component of the second orientation outputted from the third polarization separating means into the tenth path, into a polarization state a principal component of which is a polarization component of the second orientation, and also converts the polarization component of the first orientation outputted from the third polarization separating means into the eleventh path, into a polarization state a principal component of which is a polarization component of the first orientation. The second polarized wave multiplexing means multiplexes polarized waves of the polarization component of the first orientation outputted from the third polarization separating means into the ninth path and the principal polarization component of the signal group outputted from the second wavelength selection means into the tenth path and outputs the multiplexed polarization components into a thirteenth path. On the other hand, the second polarized wave multiplexing means multiplexes polarized waves of the principal polarization component of the signal group outputted from the second wavelength selection means into the eleventh path and the second polarization component outputted from the third polarization separating means into the twelfth path and outputs the multiplexed polarization components into a fourteenth path. The second optical rotation means rotates a plane of polarization of the polarization component outputted from the second polarized wave multiplexing means into the thirteenth path, by an angle -θ, and also rotates a plane of polarization of the polarization component outputted from the second polarized wave multiplexing means into the fourteenth path, by the angle -θ. The first polarizing means transmits the polarization component of the first orientation out of the polarization components outputted from the second optical rotation means into the thirteenth path and guides the polarization component to the first output end. The second polarizing means transmits the polarization component of the second orientation out of the polarization components outputted from the second optical rotation means into the fourteenth path and guides the polarization component to the second output end.

In the filter applied to the interleaver according to the fifth embodiment, the rotation angle θ of the plane of polarization in the first optical rotation means and the rotation angle -θ of the plane of polarization in the second optical rotation means both are preferably variable. The reason is that the transmittances of the polarization components of the first and second orientations are dependent upon wavelengths, the transmittances are dependent upon the rotation angle of the plane of polarization, and it is thus feasible to adjust the transmission characteristics of the filter by adjusting values of θ. The filter may comprise optical path length adjusting means for adjusting a path length difference between optical path lengths of the ninth path and the tenth path caused by provision of the second wavelength selection means and for adjusting a path length difference between optical path lengths of the eleventh path and the twelfth path caused by provision of the second wavelength selection means.

Each of the embodiments according to the present invention will be able to be further fully understood on the basis of the following detailed description and accompanying drawings. It should be noted that these embodiments are presented merely for the illustrative purpose, and it is to be understood that the invention is not limited to these embodiments.

The scope of further application of the present invention will become apparent from the following detailed description. However, the detailed description and specific examples are presented to illustrate the preferred embodiments of the present invention, but are presented only for the illustrative purpose. It is evident that various modifications and improvements within the spirit and scope of the present invention are obvious to those skilled in the art from the detailed description.

## Brief Description of the Drawings

Fig. 1 is an illustration showing the configuration of the interleaver according to the first conventional example.

Fig. 2A and Fig. 2B are an example of the transmission spectra of the interleaver according to the first conventional example.

Fig. 3 is an illustration showing the configuration of the interleaver according to the second conventional example.

Fig. 4 is an example of the transmission spectra of the interleaver according to the second conventional example.

Fig. 5 is an illustration showing a configuration of an interleaver, particularly, according to a first application example, among a plurality of application examples corresponding to the first embodiment of the interleaver according to the present invention.

Fig. 6 is a transmission spectrum of an etalon filter applied to the interleaver according to the first application example shown in Fig. 5.

Fig. 7A and Fig. 7B are transmission spectra of light outputted from the first output port, out of the light received through the input port, in the interleaver according to the first application example shown in Fig. 5.

Fig. 8A and Fig. 8B are transmission spectra of light outputted from the second output port, out of the light received through the input port, in the interleaver according to the first application example shown in Fig. 5.

Fig. 9 is an illustration showing a configuration of an interleaver, particularly, according to a second application example, among a plurality of application examples corresponding to the first embodiment of the interleaver according to the present invention.

Fig. 10 is a transmission spectrum of an etalon filter applied to the interleaver according to the second application example shown in Fig. 9.

Fig. 11A and Fig. 11B are transmission spectra of light outputted from the first output port, out of the light received through the input port, in the interleaver according to the second application example shown in Fig. 9.

Fig. 12A and Fig. 12B are transmission spectra of light outputted from the second output port, out of the light received through the input port, in the interleaver according to the second application example shown in Fig. 9.

Fig. 13 is an illustration showing a configuration of an interleaver, particularly, according to a third application example, among a plurality of application examples corresponding to the first embodiment of the interleaver according to the present invention.

Fig. 14 is an illustration showing a configuration of an interleaver, particularly, according to a fourth application example, among a plurality of application examples corresponding to the first embodiment of the interleaver according to the present invention.

Fig. 15 is an illustration showing a configuration of the second embodiment of the interleaver according to the present invention.

Fig. 16A shows a transmission spectrum of light outputted from the first output port, out of the light received through the input port, and Fig. 16B shows a transmission spectrum of light outputted from the second output port, out of the light received through the input port, in the interleaver according to the second embodiment shown in Fig. 15.

Fig. 17 is an illustration showing a configuration of an interleaver, particularly, according to a first application example, among a plurality of application examples corresponding to the third embodiment of the interleaver according to the present invention.

Fig. 18A shows a transmission spectrum of light outputted from the first output port, out of the light received through the input port, and Fig. 18B shows a transmission spectrum of light outputted from the second output port, out of the light received through the input port, in the interleaver according to the first application example shown in Fig. 17 (No. 1).

Fig. 19A shows a transmission spectrum of light outputted from the first output port, out of the light received through the input port, and Fig. 19B shows a transmission spectrum of light outputted from the second output port, out of the light received through the input port, in the interleaver according to the first application example shown in Fig. 17 (No. 2).

Fig. 20 is an illustration showing a configuration of an interleaver, particularly, according to a second application example, among a plurality of application examples corresponding to the third embodiment of the interleaver according to the present invention.

Fig. 21 is an illustration showing a configuration of an integral body of three wavelength selection filters applied to the interleaver according to the second application example shown in Fig. 20.

Fig. 22A shows a transmission spectrum of light outputted from the first output port, out of the light received through the input port, and Fig. 22B shows a transmission spectrum of light outputted from the second output port, out of the light received through the input port, in the interleaver according to the second application example shown in Fig. 20 (No. 1).

Fig. 23A shows a transmission spectrum of light outputted from the first output port, out of the light received through the input port, and Fig. 23B shows a transmission spectrum of light outputted from the second output port, out of the light received through the input port, in the interleaver according to the second application example shown in Fig. 20 (No. 2).

Fig. 24A and Fig. 24B show transmission spectra of light outputted from the second output port, out of the light received through the input port in the interleaver.

Fig. 25 is an illustration showing a configuration of an interleaver system, particularly, as a third application example, among a plurality of application examples corresponding to the third embodiment of the interleaver according to the present invention.

Fig. 26 is an illustration showing a configuration of the fourth embodiment of the interleaver according to the present invention.

Fig. 27A shows a transmission spectrum of light outputted from the first output port, out of the light received through the input port, and Fig. 27B shows a transmission spectrum of light outputted from the second output port, out of the light received through the input port, in the interleaver according to the fourth embodiment shown in Fig. 26.

Fig. 28 is an illustration showing a configuration of an embodiment of the filter (a filter according to the present invention) applied to the fifth embodiment of the interleaver according to the present invention.

Fig. 29 is an illustration showing a configuration of an interleaver, particularly, according to a first application example, among a plurality of application examples corresponding to the fifth embodiment of the interleaver according to the present invention.

Fig. 30 shows a transmission spectrum of the filter (Fig. 28) applied to the interleaver according to the first application example shown in Fig. 29.

Fig. 31A shows a transmission spectrum of light outputted from the first output port, out of the light received through the input port, in the interleaver according to the first application example shown in Fig. 29, and Fig. 31B is an enlargement of the transmission spectrum shown in Fig. 31A.

Fig. 32A shows a transmission spectrum of light outputted from the second output port, out of the light received through the input port, in the interleaver according to the first application example shown in Fig. 29, and Fig. 32B is an enlargement of the transmission spectrum shown in Fig. 32A.

Fig. 33 is an illustration showing a configuration of an interleaver, particularly, according to a second application example, among a plurality of application examples corresponding to the fifth embodiment of the interleaver according to the present invention.

**Best Modes for Carrying Out the Invention**

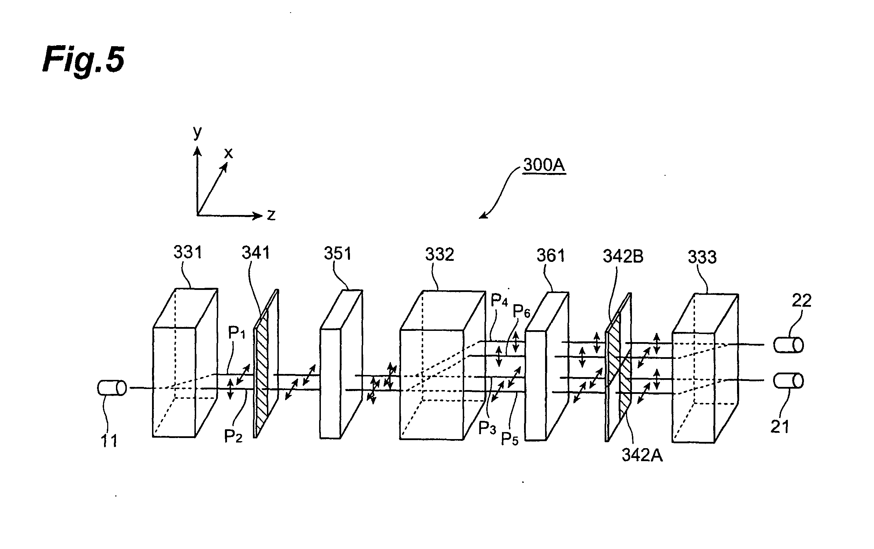

Each of the embodiments of the interleavers and others according to the present invention will be described below in detail with reference to Figs. 5, 6, 7A-8B, 9-10, 11A-12B, 13-15, 16A, 16B, 17, 18A-19B, 20-21, 22A-24B, 25-26, 27A, 27B, 28-30, 31A-32B, and 33. In the description of the drawings the same reference symbols will denote the same elements and same portions and redundant description will be omitted.

(First Embodiment)

The following will describe the first to fourth application examples of the interleaver and the filter included therein according to the first embodiment with reference to Figs. 5, 6, 7A-8B, 9-10, 11A-12B, and 13-14.

(First Application Example of First Embodiment)

First, the first application example of the interleaver according to the first embodiment will be described. Fig. 5 is an illustration showing a configuration of the interleaver, particularly, according to the first application example among a plurality of application examples corresponding to the first embodiment of the interleaver according to the present invention. In this Fig. 5, the illustration is based on the orthogonal coordinate system the z-axis of which is taken along the traveling direction of light. The interleaver 300A according to the first application example has a birefrigent material 331, a wave plate 341, a wavelength selection filter 351, a birefrigent material 332, an etalon filter 361, wave plates 342A, 42B, and a birefrigent material 333 arranged in the order named from an input port 11 to output ports 21, 22.

The birefrigent material (first polarization separating means) 331 has the C-axis on the xz plane, separates the signal of multiple channels (channel wavelengths: $\lambda_1$, $\lambda_2$, $\lambda_3$, $\lambda_4$, $\lambda_5$, $\lambda_6$, ...) received through the input port 11, into a polarization component of a first orientation (the direction of the x-axis in the drawing) and a polarization component of a second orientation (the direction of the y-axis in the drawing) orthogonal to each other, outputs the polarization component of the first orientation separated, into a first path $P_1$, and outputs the polarization component of the second orientation separated, into a second path $P_2$.

The wave plate 341 rotates the plane of polarization of the signal group (the polarization component of the second orientation) outputted from the birefrigent material 331 into the second path $P_2$, by 90° to convert the signal group into a polarization component of the first orientation. On the other hand, the signal group (the polarization component of the first orientation) outputted from the birefrigent material 331 into the first path $P_1$ propagates through the first path $P_1$ while remaining as the polarization component of the first orientation, without passing through the wave plate 341. Namely, the wave plate 341 acts as polarization plane parallelizing means for parallelizing the plane of polarization of the polarization component of the first orientation outputted from the birefrigent material 31 into the first path $P_1$, with the plane of polarization of the polarization component of the second orientation outputted into the second path $P_2$ so as to match them with each other.

Among the polarization components of the first orientation having propagated from the wave plate 341 through the first path $P_1$ and through the second path $P_2$, respectively, the wavelength selection filter (wavelength selection means) 351 outputs the signal of the first channel group (channel wavelengths: $\lambda_1$, $\lambda_3$, $\lambda_5$,..., $\lambda_{2n-1}$) while maintaining it as a polarization component of the first orientation, and converts the signal of the second channel group (channel wavelengths: $\lambda_2$, $\lambda_4$, $\lambda_6$, ..., $\lambda_{2n}$) into a polarization component of the second orientation to output it. This wavelength selection filter 351 is comprised of a birefrigent material having the C-axis on the xy plane. In this birefrigent material, let $n_o$ be the refractive index for the ordinary ray, $n_e$ be the refractive index for the extraordinary ray, and L be the thickness in the z-axis direction. When light (signal) of wavelength $\lambda$ travels in the z-axis direction in the birefrigent material, there occurs a phase difference $\delta$ represented by the following equation, between the ordinary ray and the extraordinary ray.

$$5 = 2\Pi L(n_e - n_o)/\lambda$$

This phase difference $\delta$ is dependent upon the wavelength $\lambda$. The wavelength selection filter 351 makes use of the dependence of the phase difference $\delta$ on the wavelength $\lambda$. For example, supposing the wavelength selection filter 351 is made of the birefrigent material of LiNbO2 ($n_o$ = 2.2113, $n_e$ = 2.1381) and the frequency spacing of the 1.55μm-band signal is 100 GHz, the thickness L in the z-axis direction is 2.051 cm.

The birefrigent material (second polarization separating means) 332 has the C-axis on the yz plane, separates the signal group outputted from the wavelength selection filter 351 into the first path $P_1$, into a polarization component of the first orientation (a signal of the first channel group) and a polarization component of the second orientation (a signal of the second channel group), and separates the signal group outputted from the wavelength selection filter 351 into the second path $P_2$, into a polarization component of the first orientation (a signal of the first channel group) and a polarization component of the second orientation (a signal of the second channel group). Then the birefrigent material 332 outputs the polarization component of the first orientation (the signal of the first channel group) having propagated through the first path $P_1$, into a third path $P_3$, and outputs the polarization component of the second orientation (the signal of the second channel group) having propagated through the first path $P_1$, into a fourth path $P_4$. On the other hand, the birefrigent material 332 outputs the polarization component of the first orientation (the signal of the first channel group) having propagated through the second path $P_2$, into a fifth path $P_5$, and outputs the polarization component of the second orientation (the signal of the second channel group) having propagated through the second path $P_2$, into a sixth path $P_6$.

The etalon filter 361 is a loss filter making use of multiple reflection between two or more parallel planes, has such loss characteristics that losses periodically vary against wavelengths, and is designed so that the losses become maximum at the respective channel wavelengths. The etalon filter 361 is placed between the birefrigent material 332 and the wave plates 342A, 342B, and provides losses to all the signals of the channels in the third path $P_3$, in the fourth path $P_4$, in the fifth path $P_5$, and in the sixth path $P_6$.

The wave plate 342A rotates the plane of polarization of the signal of the first channel group (the polarization component of the first orientation) outputted from the etalon filter 361 into the third path $P_3$, by 90° to convert it into a polarization component of the second orientation. The wave plate 342B rotates the plane of polarization of the signal of the second channel group (the polarization component of the second orientation) outputted from the etalon filter 361 into the sixth path $P_6$, by 90° to convert it into a polarization component of the first orientation. On the other hand, the signal of the second channel group (the polarization component of the second orientation) outputted from the etalon filter 361 into the fourth path $P_4$ propagates while remaining as the polarization component of the second orientation, without passing through the wave plates 342A, 42B. The signal of the first channel group (the polarization component of the first orientation) outputted from the etalon filter 361 into the fifth path $P_5$ propagates while remaining as the polarization component of the first orientation, without passing through the wave plates 342A, 342B. Namely, the wave plates 342A, 342B act as polarization plane orthogonalizing means for orthogonalizing the planes of polarization of the signals of the first channel group propagating in the third path $P_3$ and in the fifth path $P_5$, respectively, with each other and for orthogonalizing the planes of polarization of the signals of the second channel group propagating each in the fourth path $P_4$ and in the sixth path $P_6$ with each other.

The birefrigent material (polarized wave multiplexing means) 333 has the C-axis on the xz plane, multiplexes polarized waves of the signals of the first channel group having propagated through the third path $P_3$ and through the fifth path $P_5$, respectively, and outputs the multiplexed signals of the first channel group to the first output port 21. On the other hand, the birefrigent material 333 multiplexes polarized waves of the signals of the second channel group having propagated in the fourth path $P_4$ and in the sixth path $P_6$, respectively, and outputs the multiplexed signals of the second channel group to the second output port 22.

In the interleaver 300A according to the first application example, the birefrigent material 331 separates the signal of multiple channels (channel wavelengths: $\lambda_1$, $\lambda_2$, $\lambda_3$, $\lambda_4$, $\lambda_5$, $\lambda_6$,...) received through the input port 11, into the polarization component of the first orientation and the polarization component of the second orientation, outputs the polarization component of the first orientation separated, into the first path $P_1$, and outputs the polarization component of the second orientation separated, into the second path $P_2$. The polarization component of the first orientation outputted from the birefrigent material 331 into the first path $P_1$ travels without passing through the wave plate 341 to arrive at the wavelength selection filter 351. In this wavelength selection filter 351, the signal of the first channel group (channel wavelengths: $\lambda_1$, $\lambda_3$, $\lambda_5$, ..., $\lambda_{2n-1}$) passes while remaining as the polarization component of the first orientation, and the signal of the second channel group (channel wavelengths: $\lambda_2$, $\lambda_4$, $\lambda_6$,..., $\lambda_{2n}$) is converted into the polarization component of the second orientation to be outputted toward the birefrigent material 332. The wave plate 341 converts the polarization component of the second orientation of the signal group outputted from the birefrigent material 331 into the second path $P_2$, into the polarization component of the first orientation. In the wavelength selection filter 351 thereafter, the signal of the first channel group passes while remaining as the polarization component of the first orientation, and the signal of the second channel group is converted into the polarization component of the second orientation to be outputted toward the birefrigent material 332.

This birefrigent material 332 separates each of the signal groups having propagated through the first path $P_1$ and through the second path $P_2$, respectively, having passed through the wavelength selection filter 351, and having arrived at the birefrigent material 332, into the polarization component of the first orientation and the polarization component of the second orientation. Then the birefrigent material 332 outputs the signal of the first channel group (the polarization component of the first orientation) having propagated through the first path $P_1$, into the third path $P_3$ and outputs the signal of the second channel group (the polarization component of the second orientation) having propagated through the first path $P_1$, into the fourth path $P_4$. On the other hand, the signal of the first channel group (the polarization component of the first orientation) having propagated through the second path $P_2$ is outputted into the fifth path $P_5$, and the signal of the second channel group (the polarization component of the second orientation) having propagated through the second path $P_2$ is outputted into the sixth path $P_6$.

All the signals of the channels outputted each from the birefrigent material 332 into the third path $P_3$, the fourth path $P_4$, the fifth path $P_5$, and the sixth path $P_6$ are made incident into the etalon filter 361 and are given respective losses according to the loss characteristics of the etalon filter 361. The wave plate 342A converts the signal of the first channel group (the polarization component of the first orientation) outputted from the etalon filter 361 into the third path $P_3$, into the polarization component of the second orientation. The signal of the second channel group (the polarization component of the second orientation) outputted from the etalon filter 361 into the fourth path $P_4$ is outputted (while remaining as the polarization component of the second orientation) without passing through the wave plates 342A, 342B. The signal of the first channel group (the polarization component of the first orientation) outputted from the etalon filter 361 into the fifth path $P_5$ is outputted (while remaining as the polarization component of the first orientation) without passing through the wave plates 342A, 342B. The signal of the second channel group (the polarization component of the second orientation) outputted from the etalon filter 361 into the sixth path $P_6$ is converted into the polarization component of the first orientation in the wave plate 342B.

Then the birefrigent material 333 multiplexes polarized waves of the signal of the first channel group (the polarization component of the second orientation)

having propagated through the third path $P_3$ and the signal of the first channel group (the polarization component of the first orientation) having propagated through the fifth path $P_5$, and outputs the multiplexed signals of the first channel group to the first output port 21. The birefrigent material 333 also multiplexes polarized waves of the signal of the second channel group (the polarization component of the second orientation) having propagated through the fourth path $P_4$ and the signal of the second channel group (the polarization component of the first orientation) having propagated through the sixth path $P_6$, and outputs the multiplexed signals of the second channel group to the second output port 22.

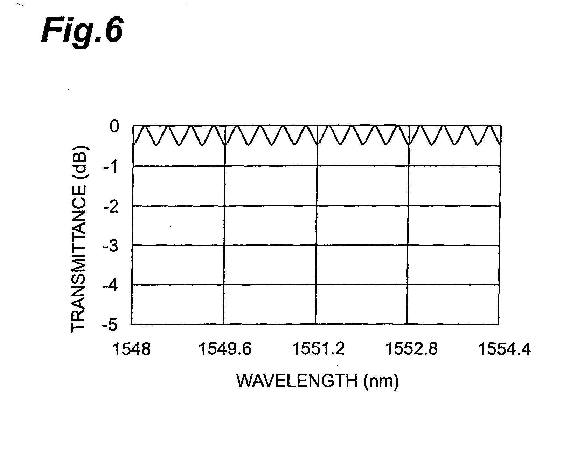

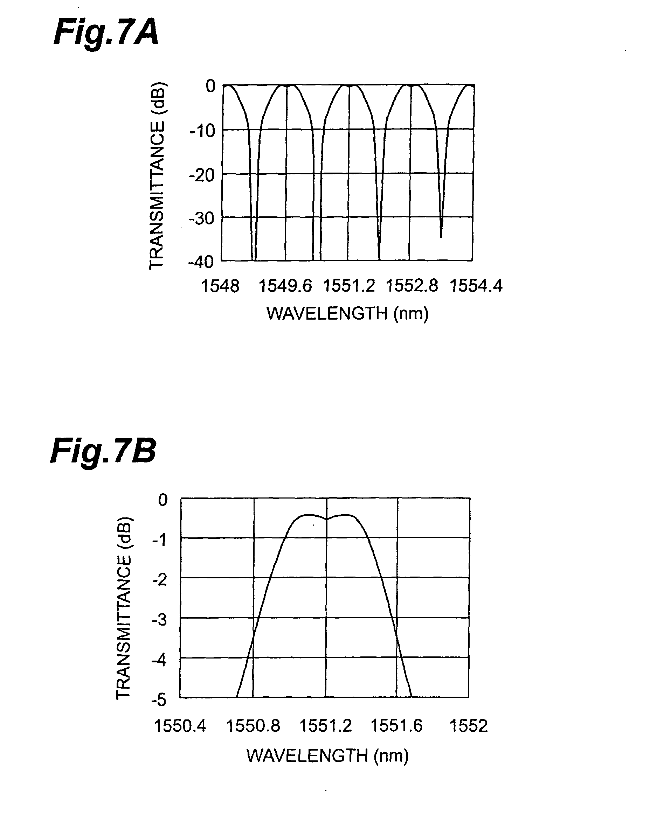

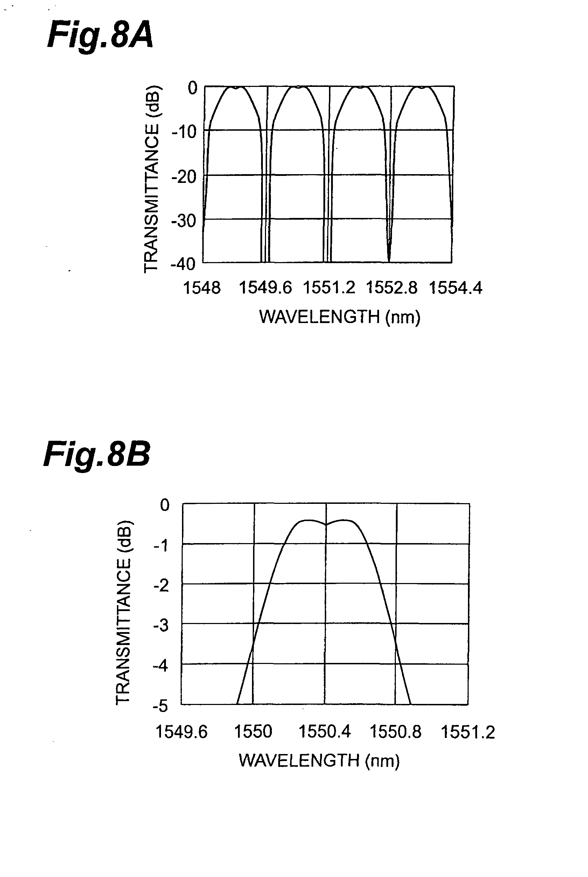

Fig. 6 shows the transmission spectrum of the etalon filter 361 in the interleaver 300A according to the first application example shown in Fig. 5. Fig. 7A and Fig. 7B are the transmission spectra of the light outputted from the first output port 21 out of the light received through the input port 11, in the interleaver 300A according to the first application example shown in Fig. 5. Fig. 8A and Fig. 8B are the transmission spectra of the light outputted from the second output port 22 out of the light received through the input port 11, in the interleaver 300A according to the first application example shown in Fig. 5. Here the channel wavelengths included in the first channel group to be outputted from the first output port 21 are 1548.0 nm, 1549.6 nm, 1551.2 nm, 1552.8 nm, and 1554.4 nm, and the channel wavelengths included in the second channel group to be outputted from the second output port 22 are 1548.8 nm, 1550.4 nm, 1552.0 nm, and 1553.6 nm. Fig. 7B is an enlargement near the wavelength of 1551.2 nm of the transmission spectrum shown in Fig. 7A. Fig. 8B is an enlargement near the wavelength of 1550.4 nm of the transmission spectrum shown in Fig. 8A.

As shown in Fig. 6, the etalon filter 361 has such transmission characteristics (transmission spectrum) that the loss is maximum (about 0.5 dB) at each of the channel wavelengths included in the first channel group (1548.0 nm, 1549.6 nm, 1551.2 nm, 1552.8 nm, and 1554.4 nm) and the channel wavelengths included in the second channel group (1548.8 nm, 1550.4 nm, 1552.0 nm, and 1553.6 nm). The transmission characteristics of the etalon filter 361 are also such that the loss is maximum (about 0.5 dB) at each of intermediate wavelengths between adjacent channel wavelengths among these channel wavelengths. As a result, as shown in Fig. 7A and Fig. 7B, the transmission spectrum of the signal (the channel spacing: 200 GHz (= 1.6 nm)) arriving at the first output port 21 from the input port 11 becomes so flat that the difference between the maximum transmittance and the minimum transmittance in the predetermined wavelength range centered about each of the channel wavelengths included in the first channel group (1548.0 nm, 1549.6 nm, 1551.2 nm, 1552.8 nm, and 1554.4 nm) falls within the range of not more than 0.4 dB, preferably, in the range of not more than 0.2 dB. Likewise, as shown in Fig. 8A and Fig. 8B, the transmission spectrum of the signal (the channel spacing: 200 GHz (= 1.6 nm)) arriving at the second output port 22 from the input port 11 becomes so flat that the difference between the maximum transmittance and the minimum transmittance in the predetermined wavelength range centered about each of the channel wavelengths included in the second channel group (1548.8 nm, 1550.4 nm, 1552.0 nm, and 1553.6 nm) falls within the range of not more than 0.4 dB, preferably, in the range of not more than 0.2 dB. When consideration is given to cases of the output channel spacing being narrowed to 100 GHz (= 0.8 nm) or to 50 GHz (= 0.4 nm), it is preferable that the flatness be ensured at least in the wavelength range of ±0.06 nm centered about each channel wavelength, for each of the first and second channel groups separated from each other. As shown in Fig. 7A and Fig. 8B, the crosstalk between adjacent channels is not more than-30 dB in either of the signals and it is thus also seen that the present interleaver is excellent in the isolation between signal channels.

(Second Application Example of First Embodiment)

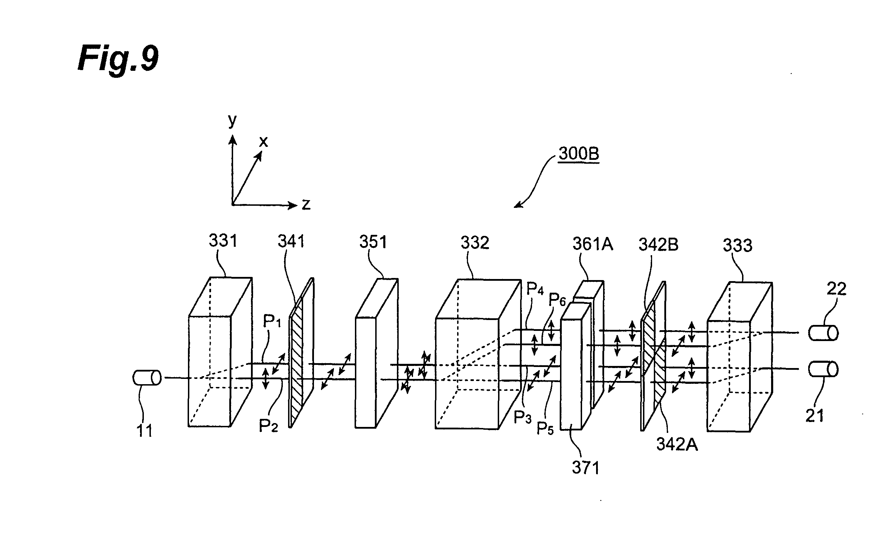

The second application example of the interleaver according to the first embodiment will be described below. Fig. 9 is an illustration showing a configuration of the second application example of the interleaver according to the first embodiment. The interleaver 300B according to the second application example is different from the interleaver 300A according to the aforementioned first application example in that the etalon filter 361A is placed only on the third path $P_3$ and on the fourth path $P_4$ and in that an optical path length adjusting element 71 is placed on the fifth path $P_5$ and on the sixth path $P_6$.

In the interleaver 300B according to the second application example, the etalon filter 361A provides losses only to the signal groups propagating in the two paths of the third path $P_3$ and the fourth path $P_4$. The optical path length adjusting element (optical path length adjusting means) 371 is placed on the fifth path $P_5$ and on the sixth path $P_6$. The optical path length adjusting element 371 adjusts the path length difference between the path lengths of the third path $P_3$ and the fifth path $P_5$ caused by the placement of the etalon filter 361A on the third path $P_3$. The optical path length adjusting element 371 also adjusts the path length difference between the path lengths of the fourth path $P_4$ and the sixth path $P_6$ caused by the placement of the etalon filter 361A on the fourth path $P_4$.

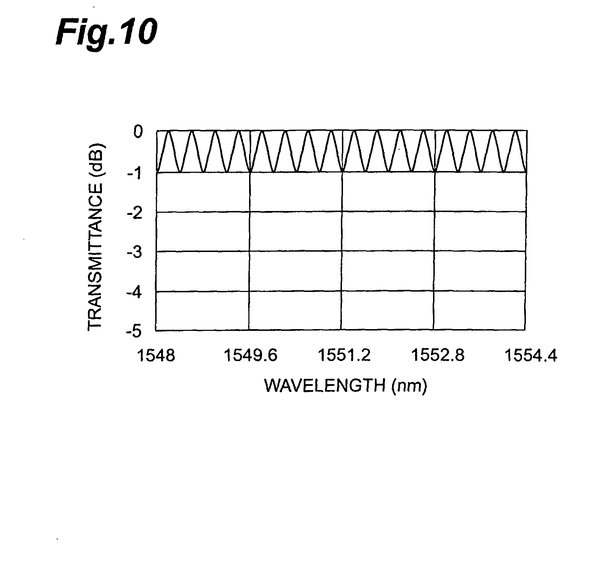

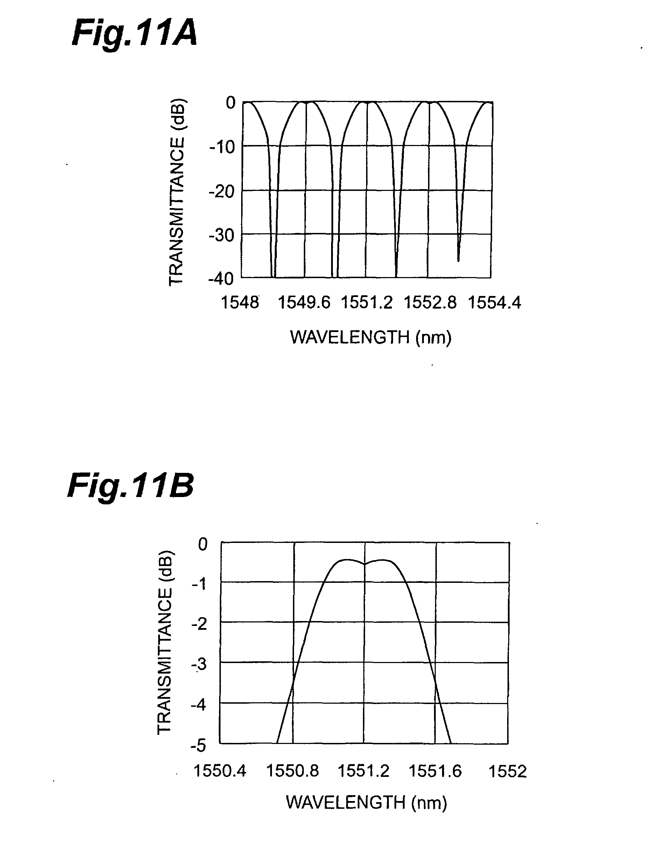

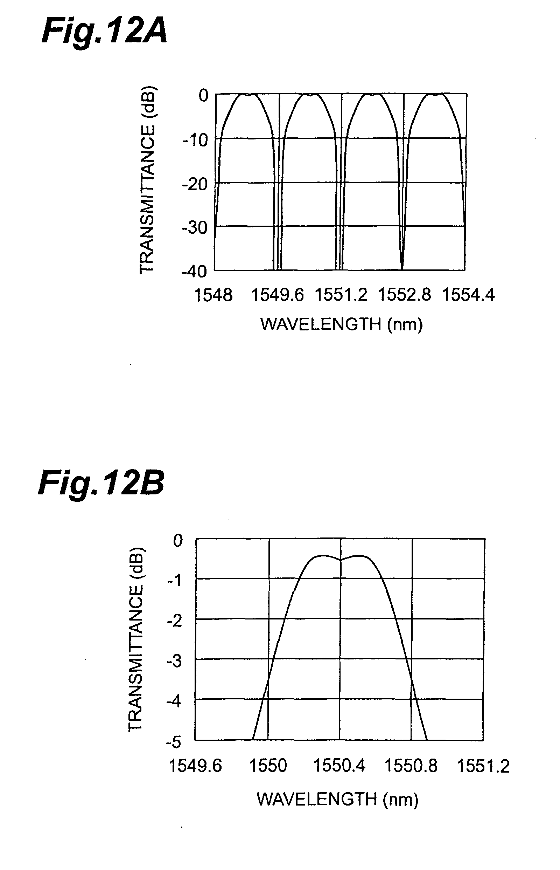

Fig. 10 is the transmission spectrum of the etalon filter 361A in the interleaver 300B according to the second application example shown in Fig. 9. Fig. 11A and Fig. 11B are the transmission spectra of the light outputted from the first output port 21 out of the light received through the input port 11, in the interleaver 300B according to the second application example shown in Fig. 9. Fig. 12A and Fig. 12B are the transmission spectra of the light outputted from the second output port 22 out of the light received through the input port 11, in the interleaver 300B according to the second application example shown in Fig. 9. Here the channel wavelengths included in the first channel group to be outputted from the first output port 21 are 1548.0 nm, 1549.6 nm, 1551.2 nm, 1552.8 nm, and 1554.4 nm, and the channel wavelengths included in the second channel group to be outputted from the second output port 22 are 1548.8 nm, 1550.4 nm, 1552.0 nm, and 1553.6 nm. Fig. 11B is an enlargement near the wavelength of 1551.2 nm of the transmission spectrum shown in Fig. 11A. Fig. 12B is an enlargement near the wavelength of 1550.4 nm of the transmission spectrum shown in Fig. 12A.

As shown in Fig. 10, the etalon filter 361A has such transmission characteristics (transmission spectrum) that the loss is maximum (about 1.0 dB) at each of the channel wavelengths included in the first channel group (1548.0 nm, 1549.6 nm, 1551.2 nm, 1552.8 nm, and 1554.4 nm) and the channel wavelengths included in the second channel group (1548.8 nm, 1550.4 nm, 1552.0 nm, and 1553.6 nm). The transmission characteristics of the etalon filter 361A are also such that the loss is maximum (about 1.0 dB) at each of intermediate wavelengths between adjacent channel wavelengths among these channel wavelengths. As a result, as shown in Fig. 11A and Fig. 11B, the transmission spectrum of the signal (the channel spacing: 200 GHz (= 1.6 nm)) arriving at the first output port 21 from the input port 11 becomes so flat that the difference between the maximum transmittance and the minimum transmittance in the predetermined wavelength range centered about each channel wavelength included in the first channel group (1548.0 nm, 1549.6 nm, 1551.2 nm, 1552.8. nm, and 1554.4 nm) falls within the range of not more than 0.4 dB, preferably, in the range of not more than 0.2 dB. Likewise, as shown in Fig. 8A and Fig. 8B, the transmission spectrum of the signal (the channel spacing: 200 GHz (= 1.6 nm)) arriving at the second output port 22 from the input port 11 becomes so flat that the difference between the maximum transmittance and the minimum transmittance in the predetermined wavelength range centered about each channel wavelength included in the second channel group (1548.8 nm, 1550.4 nm, 1552.0 nm, and 1553.6 nm) falls within the range of not more than 0.4 dB, preferably, in the range of not more than 0.2 dB. When consideration is given to the cases of the output channel spacing being narrowed to 100 GHz (= 0.8 nm) or to 50 GHz (= 0.4 nm), it is preferable that the flatness be ensured at least in the wavelength range of ±0.06 nm centered about each channel wavelength, for each of the first and second channel groups separated from each other. The transmittance is flatter near each channel wavelength in the second application example, than in the foregoing first application example. As shown in Fig. 7A and Fig. 8B, the crosstalk between adjacent channels is not more than 30 dB in either of the signals and it is also seen that the present interleaver is excellent in the isolation between signal channels.

When the etalon filter 361A is placed on the third path $P_3$ and on the fourth path $P_4$, it makes the path length difference between the path lengths of the third path $P_3$ and the fifth path $P_5$, resulting in dispersion of the signal of the first channel group outputted from the first output port 21. Likewise, the path length difference is also made between the path lengths of the fourth path $P_4$ and the sixth path $P_6$, resulting in dispersion of the signal of the second channel group outputted from the second output port 22. In the second application example, however, the optical path length adjusting element 371 is placed on the fifth path $P_5$ and on the sixth path $P_6$, so as to reduce the path length differences between each pair of the paths, thus suppressing the dispersion of each of the signals.

(Third Application Example of First Embodiment)

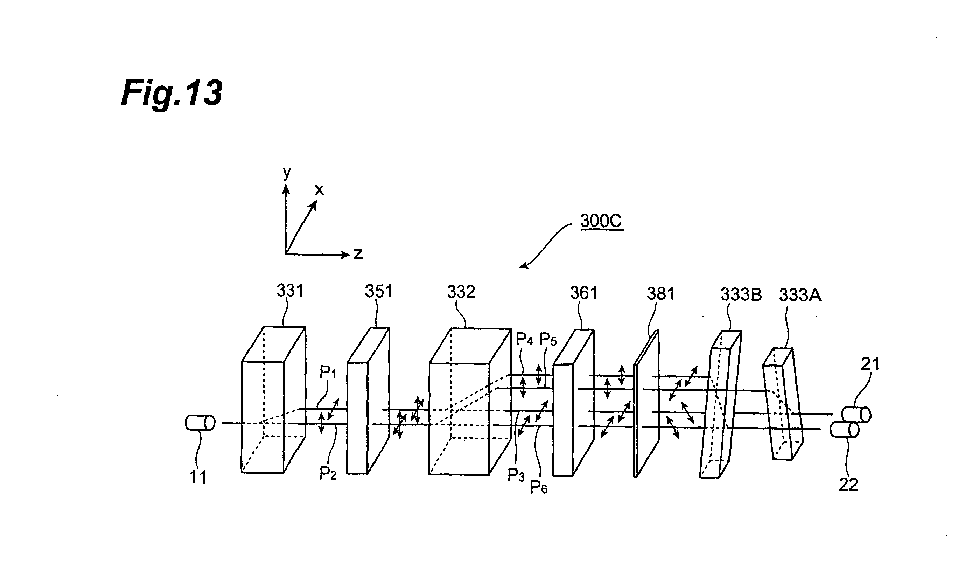

The third application example of the interleaver according to the first embodiment will be described below. Fig. 13 is an illustration showing a configuration of the interleaver 300C according to the third application example. In this Fig. 13, the illustration is based on the orthogonal coordinate system the z-axis of which is taken along the traveling direction of light. This interleaver 300C has a birefrigent material 331, a wavelength selection filter 351, a birefrigent material 332, an etalon filter 361, a Faraday rotator 381, and birefrigent materials 333A, 333B arranged in the order named from the input port 11 toward the output ports 21, 22.

The birefrigent material (first polarization separating means) 331 is an optical element similar to that in the first application example. Namely, the birefrigent material (first polarization separating means) 331 has the C-axis on the xz plane, separates the signal of multiple channels (channel wavelengths: $\lambda_1$, $\lambda_2$, $\lambda_3$, $\lambda_4$, $\lambda_5$, $\lambda_6$, ...) received through the input port 11, into a polarization component of the first orientation (the direction of the x-axis in the drawing) and a polarization component of the second orientation (the direction of the y-axis in the drawing) orthogonal from each other, outputs the polarization component of the first orientation separated, into a first path $P_1$, and outputs the polarization component of the second orientation separated, into a second path $P_2$.

The wavelength selection filter (wavelength selection means) 351 is also an optical element similar to that in the first application example. However, no wave plate is placed between the birefrigent material (first polarization separating means) 331 and the wavelength selection filter 351. In the third application example, therefore, the wavelength selection filter 351 outputs the signal of the first channel group (channel wavelengths: $\lambda_1$, $\lambda_3$, $\lambda_5$, ..., $\lambda_{2n-1}$) (the polarization component of the first orientation) having propagated through the

first path $P_1$, out of the signal groups outputted from the birefrigent material 331 into the first path $P_1$ and into the second path $P_2$, respectively, while maintaining it as a polarization component of the first orientation, and converts the signal of the second channel group (channel wavelengths: $\lambda_2$, $\lambda_4$, $\lambda_6$, ..., $\lambda_{2n}$) (the polarization component of the first orientation) having propagated through the first path $P_1$, into a polarization component of the second orientation. On the other hand, this wavelength selection filter 351 outputs the signal of the first channel group (the polarization component of the second orientation) having propagated through the second path $P_2$, while maintaining it as a polarization component of the second orientation, and converts the signal of the second channel group (the polarization component the second orientation) having propagated through the second path $P_2$, into the polarization component of the first orientation.

The birefrigent material 332 (second polarization separating means) is also an optical element similar to that in the first application example. The birefrigent material 332 separates each of the signal groups outputted into the first path $P_1$ and into the second path $P_2$, respectively, into a polarization component of the first orientation and a polarization component of the second orientation, thereafter outputs the signal of the first channel group (the polarization component of the first orientation) having propagated through the first path $P_1$, into a third path $P_3$, outputs the signal of the second channel group (the polarization component of the second orientation) having propagated through the first path $P_1$, into a fourth path $P_4$, outputs the signal of the first channel group (the polarization component of the second orientation) having propagated through the second path $P_2$, into a fifth path $P_5$, and outputs the signal of the second channel group (the polarization component of the first orientation) having propagated through the second path $P_2$, into a sixth path $P_6$.

The etalon filter 361 is also an optical element similar to that in the first application example. The etalon filter 361 is placed between the birefrigent material 332 and the Faraday rotator 381 and provides losses to all the signals of the channels propagating in the third path $P_3$, in the fourth path $P_4$, in the fifth path $P_5$, and in the sixth path $P_6$.

The Faraday rotator 381 rotates the plane of polarization of each of the signal groups outputted from the etalon filter 361 into the third path $P_3$, into the fourth path $P_4$, into the fifth path $P_5$, and into the sixth path $P_6$, respectively, by 45°. The birefrigent material 333A multiplexes polarized waves of the signals of the first channel group respectively outputted from the Faraday rotator 381 into the third path $P_3$ and into the fifth path $P_5$ and outputs the multiplexed signals of the first channel group to the first output port 21. The birefrigent material 333B multiplexes polarized waves of the signals of the second channel group respectively outputted from the Faraday rotator 381 into the fourth path $P_4$ and into the

sixth path $P_6$ and outputs the multiplexed signals of the second channel group to the second output port 22. Namely, the Faraday rotator 381 and the birefrigent materials 333A, 333B act as polarized wave multiplexing means for multiplexing the polarized waves of the signals of the first channel group respectively outputted from the birefrigent material 332 into the third path $P_3$ and into the fifth path $P_5$ and outputting the multiplexed signals of the first channel group to the first output port 21 and for multiplexing the polarized waves of the signals of the second channel group respectively outputted from the birefrigent material 332 into the fourth path $P_4$ and into the sixth path $P_6$ and outputting the multiplexed signals of the second channel group to the second output port 22.

In the interleaver 300C of the third application example, a signal of multiple channels (channel wavelengths: $\lambda_1$, $\lambda_2$, $\lambda_3$, $\lambda_4$, $\lambda_5$, $\lambda_6$,...) received through the input port 11 is separated into the polarization component of the first orientation and the polarization component of the second orientation in the birefrigent material 331, the polarization component of the first orientation separated is outputted into the first path $P_1$, and the polarization component of the second orientation separated is outputted into the second path $P_2$. The polarization component of the first orientation outputted from the birefrigent material 331 into the first path $P_1$ is made incident into the wavelength selection filter 351. In this wavelength selection filter 351, the signal of the first channel group in the first polarization component thus arriving is outputted to the birefrigent material 332 while remaining as a polarization component of the first orientation, and the signal of the second channel group is converted into a polarization component of the second orientation. The polarization component of the second orientation outputted from the birefrigent material 331 into the second path $P_2$ is made incident into the wavelength selection filter 351. In this wavelength selection filter 351, the signal of the first channel group in the second polarization component thus arriving is outputted to the birefrigent material while remaining as a polarization component of the second orientation, and the signal of the second channel group is converted into a polarization component of the first orientation.

Each of the signal groups having propagated through the first path $P_1$ and through the second path $P_2$, respectively, and having arrived at the birefrigent material 332 from the wavelength selection filter 351 is separated into the polarization component of the first orientation and the polarization component of the second orientation in the birefrigent material 332. Namely, the birefrigent material 332 outputs the signal of the first channel group (the polarization component of the first orientation) having propagated through the first path $P_1$, into the third path $P_3$, outputs the signal of the second channel group (the polarization component of the second orientation) having propagated through the first path $P_1$, into the fourth path $P_4$, outputs the signal of the

first channel group (the polarization component of the second orientation) having propagated through the second path $P_2$, into the fifth path $P_5$, and outputs the signal of the second channel group (the polarization component of the first orientation) having propagated through the second path $P_2$, into the sixth path $P_6$.

Each of all the signals of the channels outputted from the birefrigent material 332 into the third path $P_3$, into the fourth path $P_4$, into the fifth path $P_5$, and into the sixth path $P_6$ is given a loss according to the loss characteristics of the etalon filter 361, and the plane of polarization thereof is further rotated by 45° in the Faraday rotator 381. Then the birefrigent material 333A multiplexes the polarized waves of the signal of the first channel group having propagated through the third path $P_3$ and the signal of the first channel group having propagated through the fifth path $P_5$, and outputs the multiplexed signals of the first channel group to the first output port 21. The birefrigent material 333B multiplexes the polarized waves of the signal of the second channel group having propagated through the fourth path $P_4$ and the signal of the second channel group having propagated through the sixth path $P_6$, and outputs the multiplexed signals of the second channel group to the second output port 22.

The interleaver 300C according to the third application example also presents the effect similar to that in the first application example, whereby the transmission spectrum of the signal arriving at the first output port 21 from the input port 11 becomes such that the transmittance is flat near each channel wavelength included in the first channel group and whereby the transmission spectrum of the signal arriving at the second output port 22 from the input port 11 also becomes such that the transmittance is flat near each channel wavelength included in the second channel group. It is also excellent in the isolation between adjacent signal channels (the crosstalk between adjacent signal channels is at least not more than -20 dB).

(Fourth Application Example of First Embodiment)

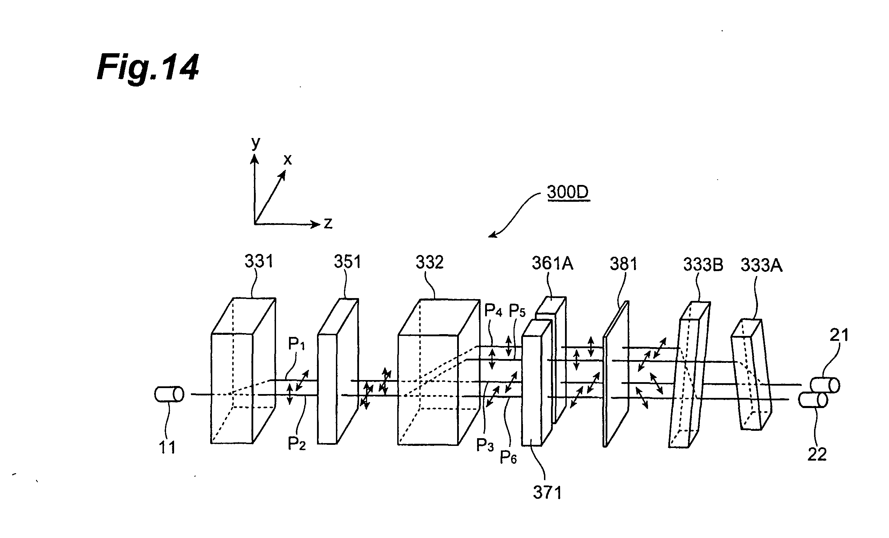

The fourth application example of the interleaver according to the first embodiment will be described below. Fig. 14 is an illustration showing a configuration of the interleaver 300D according to the fourth application example. The interleaver 300D according to the fourth application example is different from the interleaver 300C according to the third application example in that the etalon filter 361A is provided only on the third path $P_3$ and on the fourth path $P_4$ and in that an optical path length adjusting element 71 is placed on the fifth path $P_5$ and on the sixth path $P_6$.

In the fourth application example, the etalon filter 361A provides losses to only the signal groups propagating in the two paths of the third path $P_3$ and the fourth path $P_4$. The optical path length adjusting element (optical path length adjusting means) 371 adjusts the path length difference between the path lengths of the third path $P_3$ and the fifth path $P_5$ caused by the placement of the etalon filter 361A on the third path $P_3$. The optical path length adjusting element 371 also adjusts the path length difference between the path lengths of the fourth path $P_4$ and the sixth path $P_6$ caused by the placement of the etalon filter 361A on the fourth path $P_4$.

The interleaver 300D according to the fourth application example also presents the effect similar to that in the first application example, whereby the transmission spectrum of the signal arriving at the first output port 21 from the input port 11 becomes such that the transmittance is flat near each channel wavelength included in the first channel group and whereby the transmission spectrum of the signal arriving at the second output port 22 from the input port 11 becomes such that the transmittance is flat near each channel wavelength included in the second channel group. It is also excellent in the isolation between adjacent signal channels.

In the interleaver 300D according to the fourth application example, as in the second application example, the placement of the optical path length adjusting element 371 on the fifth path $P_5$ and on the sixth path $P_6$ reduces the path length difference between the third path $P_3$ and the fifth path $P_5$ and also reduces the path length difference between the fourth path P4 and the sixth path $P_6$, thereby suppressing the dispersion of each of the signals propagating in the fourth path $P_4$ and in the sixth path $P_6$.

(Modification Examples)

The first embodiment of the present invention is not limited to the configurations presented in the above-stated first to fourth application examples, but a variety of modifications can be applied thereto. For example, the position of insertion of the etalon filter 361, 361A does not have to be limited to those described in the foregoing first to fourth application examples. For example, in each of the first and third application examples, the etalon filter 361 may be interposed anywhere between the input port 11 and the output ports 21, 22, and in this case, the etalon filter may be configured to provide the loss to the signal groups respectively propagating in the third path $P_3$ and in the fourth path $P_4$ or to the signal group propagating in the first path $P_1$ and to provide the loss to the signal groups respectively propagating in the fifth path $P_5$ and in the sixth path $P_6$ or to the signal group propagating in the second path $P_2$. In each of the second and fourth application examples, the etalon filter 361A may be interposed anywhere between the birefrigent material 331 and the output ports 21, 22, and in this case, the etalon filter may be configured to provide the loss to either one of the signal group propagating in the first path $P_1$ and the signal group propagating in the second path $P_2$ or to provide the loss to either one of the signal group propagating in the third path $P_3$ and the signal group propagating in the

fifth path $P_5$ and to either one of the signal group propagating in the fourth path $P_4$ and the signal propagating in the sixth path $P_6$. The etalon filter 361 or 361A may be divided into plural elements and each of the individual etalon filter elements may be designed to provide a loss to a signal group propagating in either one of the paths.

(Second Embodiment)

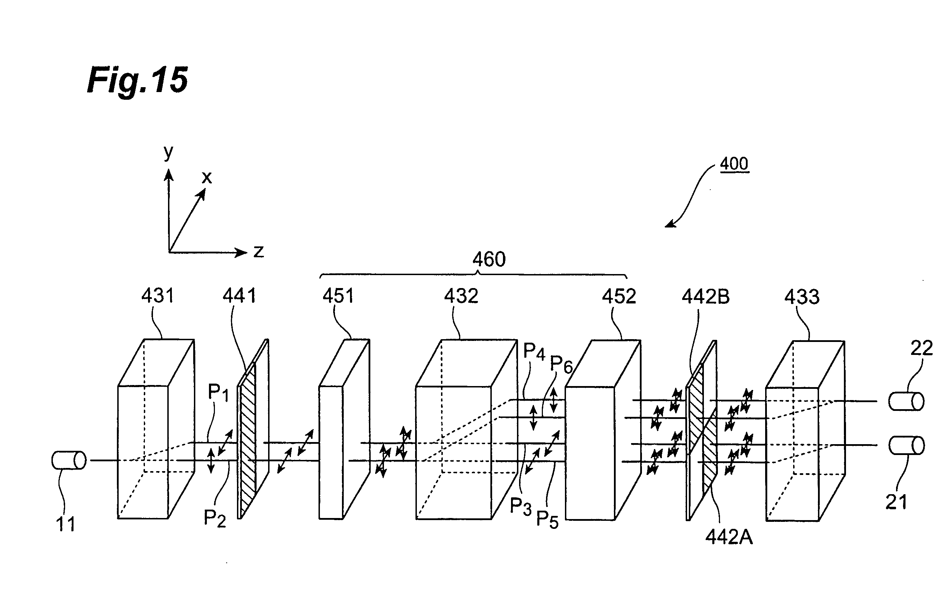

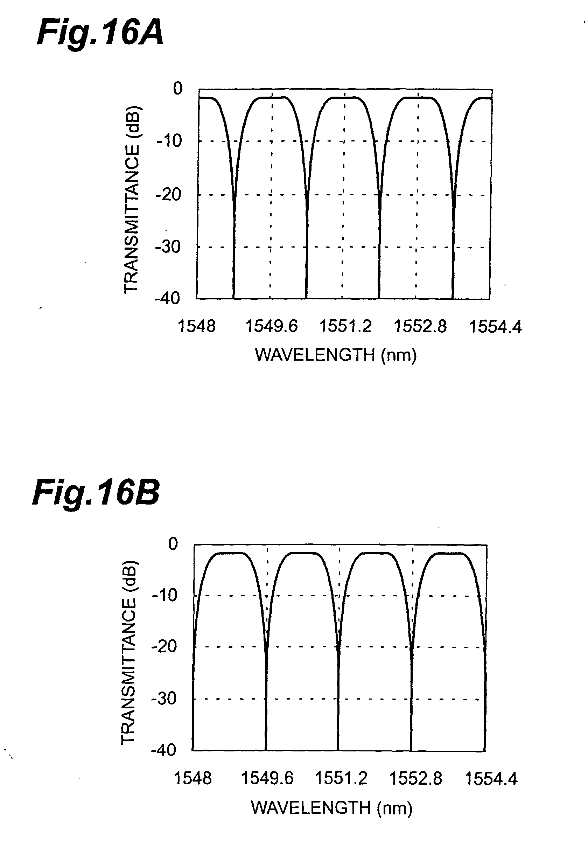

The second embodiment of the interleaver according to the present invention will be described below in detail with reference to Figs. 15, 16A, and 16B. In the description of the drawings the same reference symbols will denote the same elements and redundant description will be omitted.

Fig. 15 is an illustration showing a configuration of the interleaver 400 and filter 460 according to the second embodiment. In this Fig. 15, the illustration is based on the orthogonal coordinate system the z-axis of which is taken along the traveling direction of light. This interleaver 400 has a birefrigent material 431, a wave plate 441, a wavelength selection filter 451, a birefrigent material 432, a wavelength selection filter 452, wave plates 442A, 442B, and a birefrigent material 433 arranged in the order named from the input port 11 to the output ports 21, 22. The filter 460 in the second embodiment is comprised of the wavelength selection filter 451, the birefrigent material 432, and the wavelength selection filter 452.

The birefrigent material (first polarization separating means) 431 has the C-axis on the xz plane, separates a signal of multiple channels received through the input port 11, into a polarization component of the first orientation (the direction of the x-axis in the drawing) and a polarization component of the second orientation (the direction of the y-axis in the drawing) orthogonal to each other, outputs the polarization component of the first orientation separated, into a first path $P_1$, and outputs the polarization component of the second orientation separated, into a second path $P_2$.

The wave plate 441 rotates the plane of polarization of the polarization component of the second orientation outputted from the birefrigent material 431 into the second path $P_2$, by 90° to covert it into a polarization component of the first orientation. On the other hand, the polarization component of the first orientation outputted from the birefrigent material 431 into the first path $P_1$ travels without passing through the wave plate 441 and arrives at the wavelength selection filter 451 while remaining as a polarization component of the first orientation. Namely, the wave plate 441 acts as polarization plane parallelizing means for parallelizing the planes of polarization of the signal groups outputted from the birefrigent material 431 into the first path $P_1$ and into the second path $P_2$, respectively, with each other.

The wavelength selection filter (first wavelength selection means) 451 outputs the signal of the first channel group out of the signal groups having propagated from the wave plate 441 through the first path $P_1$ and through the second path $P_2$, respectively, while maintaining it as a polarization component of the first orientation, and converts the signal of the second channel group into a polarization component of the second orientation. This wavelength selection filter 451 is made of a birefrigent material having the C-axis on the xy plane. In the birefrigent material, let $n_o$ be the refractive index for the ordinary ray, $n_e$ be the refractive index for the extraordinary ray, and L be the thickness in the z-axis direction. When light of the wavelength $\lambda$ travels in the z-axis direction in the birefrigent material, there occurs the phase difference $\delta$ represented by the following equation, between the ordinary ray and the extraordinary ray.

$$\delta = 2\Pi L(n_e - n_o)/\lambda$$

This phase difference $\delta$ is dependent upon the wavelength $\lambda$. The wavelength selection filter 451 is an optical element making use of the dependence of the phase difference $\delta$ on the wavelength $\lambda$. For example, supposing the wavelength selection filter 451 is made of the birefrigent material of $LiNbO_2$ ($n_o = 2.2113$, $n_e = 2.1381$) and the frequency spacing of the 1.55µm-band signal is 100 GHz, the thickness L in the z-axis direction is 2.051 cm.

The birefrigent material (second polarization separating means) 432 has the C-axis on the yz plane, and separates each of the signal groups respectively outputted from the wavelength selection filter 451 into the first path $P_1$ and into the second path $P_2$, into a polarization component of the first orientation and a polarization component of the second orientation. Then the birefrigent material 432 outputs the signal of the first channel group (the polarization component of the first orientation) having propagated through the first path $P_1$, into a third path $P_3$, outputs the signal of the second channel group (the polarization component of the second orientation) having propagated through the first path $P_1$, into a fourth path $P_4$, outputs the signal of the first channel group (the polarization component of the first orientation) having propagated through the second path $P_2$, into a fifth path $P_5$, and outputs the signal of the second channel group (the polarization component of the second orientation) having propagated through the second path $P_2$, into a sixth path $P_6$.

Among the signal groups outputted from the birefrigent material 432, the wavelength selection filter (second wavelength selection means) 452 converts the signal of the first channel group (the polarization component of the first orientation) having propagated through the third path $P_3$, into a polarization state the principal component of which is the polarization component of the first orientation, converts the signal of the second channel group (the polarization component of the second orientation) having propagated through the

fourth path $P_4$, into a polarization state the principal component of which is the polarization component of the second orientation, converts the signal of the first channel group (the polarization component of the first orientation) having propagated through the fifth path $P_5$, into a polarization state the principal component of which 'is the polarization component of the first orientation, and converts the signal of the second channel group (the polarization component of the second orientation) having propagated through the sixth path $P_6$, into a polarization state the principal component of which is the polarization component of the second orientation.

The wavelength selection filter 452 as described can be obtained as an optical element made of the same birefrigent material and having the same C-axis orientation as the wavelength selection filter 451, and having the thickness of $2L+\Delta$ in the z-axis direction. Namely, when the polarization component of the first orientation is made incident into the wavelength selection filter 452 having the above thickness, it reverses the planes of polarization of the polarization components of the first orientation and the second orientation (contribution of the thickness of 2L) at the wavelength interval equal to half of the wavelength interval in the wavelength selection filter 451 (contribution of the thickness of $\Delta$), and outputs each of the signals of the channel groups. The wavelength selection filter 452 is designed by adjusting the C-axis orientation so that for each of the signals of the first channel group and the second channel group, the polarization split ratio between the polarization component of the first orientation and the polarization component of the second orientation becomes an appropriate value which is neither 1:0 nor 0:1.

The wave plate 442A rotates the plane of polarization of the signal of the first. channel group (the principal component of which is the polarization component of the first orientation) outputted from the wavelength selection filter 452 into the third path $P_3$, by 90° to convert it into a signal group the principal component of which is the polarization component of the second orientation. The wave plate 442B rotates the plane of polarization of the signal of the second channel group (the principal component of which is the polarization component of the second orientation) outputted from the wavelength selection filter 452 into the sixth path $P_6$, by 90° to convert it into a signal group the principal component of which is the polarization component of the first orientation. On the other hand, the signal of the second channel group (the principal component of which is the polarization component of the second orientation) outputted from the wavelength selection filter 452 into the fourth path $P_4$ travels without passing through the wave plates 442A, 442B, and remains as a signal group the principal component of which is the polarization component of the second orientation. The signal of the first channel group (the principal component of which is the polarization component of the first orientation) outputted from the wavelength selection filter 452 into the fifth path $P_5$ travels without passing through the wave plates 442A, 442B, and remains as a signal group the principal component of which is the polarization component of the first orientation. Namely, the wave plates 442A, 442B act as polarization plane orthogonalizing means for orthogonalizing the planes of polarization of the principal polarization components of the signals of the first channel group respectively propagating in the third path $P_3$ and in the fifth path $P_5$, with each other and for orthogonalizing the planes of polarization of the principal polarization components of the signals of the second channel group respectively propagating in the fourth path $P_4$ and in the sixth path $P_6$, with each other.

The birefrigent material (polarized wave multiplexing means) 433 has the C-axis on the xz plane, multiplexes polarized waves of the principal polarization components of the signals of the first channel group respectively having propagated through the third path $P_3$ and through the fifth path $P_5$, outputs the multiplexed signals of the first channel group to the first output port 21, multiplexes polarized waves, of the principal polarization components of the signals of the second channel group respectively having propagated through the fourth path $P_4$ and through the sixth path $P_6$, and outputs the multiplexed signals of the second channel group to the second output port 22.

In the interleaver 400 according to the second embodiment, the signal of multiple channels (channel wavelengths: $\lambda_1$, $\lambda_2$, $\lambda_3$, $\lambda_4$, $\lambda_5$, $\lambda_6$, ..) received through the input port 11 is separated into the polarization component of the first orientation and the polarization component of the second orientation by the birefrigent material 431, the polarization component of the first orientation separated is outputted into the first path $P_1$, and the polarization component of the second orientation separated is outputted into the second path $P_2$. The polarization component of the first orientation outputted from the birefrigent material 431 into the first path $P_1$ travels without passing through the wave plate 441, to arrive at the wavelength selection filter 451. In this wavelength selection filter 451, the signal of the first channel group is outputted to the birefrigent material 432 while remaining as a polarization component of the first orientation, and the signal of the second channel group is converted into the polarization component of the second orientation. On the other hand, the polarization component of the second orientation outputted from the birefrigent material 431 into the second path $P_2$ is converted into the polarization component of the first orientation by the wave plate 441. In the wavelength selection filter 51 thereafter, the signal of the first channel group is outputted to the birefrigent material 432 while remaining as a polarization component of the first orientation, and the signal of the second channel group is converted into the polarization component of the second orientation.

Each of the signal groups having propagated through the first path $P_1$ and through the second path $P_2$, respectively, and having arrived at the birefrigent material 432 from the wavelength selection filter 451 is separated into the polarization component of the first orientation and the polarization component of the second orientation in the birefrigent material 432. Namely, this birefrigent material 432 outputs the signal of the first channel group (the polarization component of the first orientation) having propagated through the first path $P_1$, into the third path $P_3$, outputs the signal of the second channel group (the polarization component of the second orientation) having propagated through the first path $P_1$, into the fourth path $P_4$, outputs the signal of the first channel group (the polarization component of the first orientation) having propagated through the second path $P_2$, into the fifth path $P_5$, and outputs the signal of the second channel group (the polarization component of the second orientation) having propagated through the second path $P_2$, into the sixth path $P_6$.

All the signals of the channels outputted from the birefrigent material 432 into the third path $P_3$, into the fourth path $P_4$, into the fifth path $P_5$, and into the sixth path $P_6$ arrive at the wavelength selection filter 452. Then this wavelength selection filter 452 converts the signal of the first channel group (the polarization component of the first orientation) having propagated through the third path $P_3$, into the polarization state the principal component of which is the polarization component of the first orientation. The signal of the second channel group (the polarization component of the second orientation) having propagated through the fourth path $P_4$ is converted into the polarization state the principal component of which is the polarization component of the second orientation, the signal of the first channel group (the polarization component of the first orientation) having propagated through the fifth path $P_5$ is converted into the polarization state the principal component of which is the polarization component of the first orientation, to be outputted, and the signal of the second channel group (the polarization component of the second orientation) having propagated through the sixth path $P_6$ is converted into the polarization state the principal component of which is the polarization component of the second orientation.

The signal of the first channel group (the principal component of which is the polarization component or the first orientation) outputted from the wavelength selection filter 452 into the third path $P_3$ is converted into the signal group the principal component of which is the polarization component of the second orientation, in the wave plate 442A. The signal of the second channel group (the principal component of which is the polarization component of the second orientation) outputted from the wavelength selection filter 452 into the fourth path $P_4$ travels without passing through the wave plates 442A, 442B, and remains as a signal the principal component of which is the polarization component of the second orientation. The signal of the first channel group (the principal component of which is the polarization component of the first orientation) outputted from the wavelength selection filter 452 into the fifth path $P_5$ travels without passing through the wave plates 442A, 442B, and remains as a signal group the principal component of which is the polarization component of the first orientation. The signal of the second channel group (the principal component of which is the polarization component of the second orientation) outputted from the wavelength selection filter 452 into the sixth path $P_6$ is converted into the signal group the principal component of which is the polarization component of the first orientation, in the wave plate 442B.

Then the birefrigent material 433 multiplexes the polarized waves of the principal polarization components of the signal of the first channel group (the principal component of which is the polarization component of the second orientation) having propagated through the third path $P_3$ and the signal of the first channel group (the principal component of which is the polarization component of the first orientation) having propagated through the fifth path $P_5$, and outputs the multiplexed principal polarization components of the signals of the first channel group to the first output port 21. The birefrigent material 433 also multiplexes the polarized waves of the principal polarization components of the signal of the second channel group (the principal component of which is the polarization component of the second orientation) having propagated through the fourth path $P_4$ and the signal of the second channel group (the principal component of which is the polarization component of the first orientation) having propagated through the sixth path $P_6$, and outputs the multiplexed principal polarization components of the signals of the second channel group to the second output port 22. At this time, the polarization components having the planes of polarization orthogonal to the principal polarization components of the respective signals of the channel groups are not multiplexed, so that they are not outputted to either of the first output port 21 and the second output port 22 to result in loss.

Fig. 16A shows the transmission spectrum of the light outputted from the first output port 22 out of the light received through the input port 21, and Fig. 16B the transmission spectrum of the light outputted from the second output port 22 out of the light received through the input port 21, in the interleaver 400 according to the second embodiment shown in Fig. 15. Here the channel wavelengths included in the first channel group to be outputted from the first output port 21 are 1548.0 nm, 1549.6 nm, 1551.2 nm, 1552.8 nm, and 1554.4 nm and the channel wavelengths included in the second channel group to be outputted from the second output port 22 are 1548.8 nm, 1550.4 nm, 1552.0 nm, and 1553.6 nm.

In the second embodiment each of the signals of the channel groups outputted from the filter 460 is a signal group the principal component of which is the polarization component of the predetermined orientation, and the birefrigent material 433 multiplexes polarized waves of only the polarization components of the predetermined orientation in the signals of each channel group to output the multiplexed components to either of the first and second output ports 21, 22, and does not output the polarization components having the planes of polarization orthogonal to the principal polarization components from either of the first and second output ports 21, 22 to cause loss thereof. As a result, as shown in Fig. 16A, the transmission spectrum of the signal (the channel spacing: 200 GHz (= 1.6 nm)) having arrived at the first output port 21 from the input port 11 is so flat that the difference between the maximum transmittance and the minimum transmittance in the predetermined wavelength range centered about each channel wavelength included in the first channel group (1548.0 nm, 1549.6 nm, 1551.2 nm, 1552.8 nm, and 1554.4 nm) falls within the range of not more than 0.4 dB, preferably, in the range of not more than 0.2 dB. Likewise, as shown in Fig. 16B, the transmission spectrum of the signal (the channel spacing: 200 GHz (= 1.6 nm)) having arrived at the second output port 22 from the input port 11 is also so flat that the difference between the maximum transmittance and the minimum transmittance in the predetermined wavelength range centered about each channel wavelength included in the second channel group (1548.8 nm, 1550.4 nm, 1552.0 nm, and 1553.6 nm) falls within the range of not more than 0.4 dB, preferably, in the range of not more than 0.2 dB. When consideration is given to the cases of the output channel spacing being narrowed to 100 GHz (= 0.8 nm) or to 50 GHz (= 0.4 nm), it is preferable that the flatness be ensured at least in the wavelength range of $\pm 0.06$ nm centered around each channel wavelength, for each of the first and second channel groups separated from each other. As seen from these Figs. 16A and 16B, the crosstalk between adjacent signal channels is controlled to -40 dB or less, and the interleaver is excellent in the isolation.

(Third Embodiment)

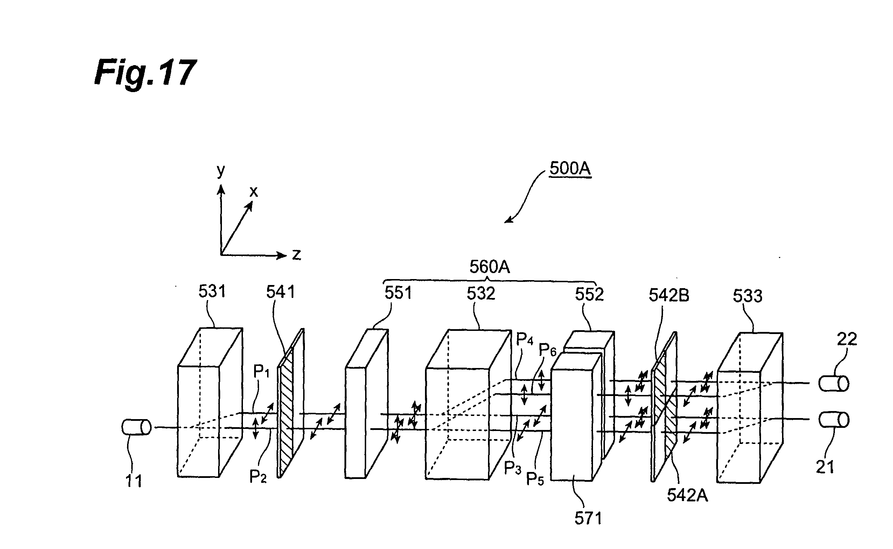

The third embodiment of the interleaver and others according to the present invention will be described below in detail with reference to Figs. 17, 18A-19B, 20, 21, 22A-25B, and 25. In the description of the drawings the same reference symbols will denote the same elements and redundant description will be omitted.

(First Application Example of Third Embodiment)

First, the first application example of the interleaver and filter according to the third embodiment will be described. Fig. 17 is an illustration showing a configuration of the interleaver 500A and filter 560A according to the first application example. In this Fig. 17, the illustration is based on the orthogonal coordinate system the z-axis of which is taken along the traveling direction of light. The interleaver 500A according to the first application example has a birefrigent material 531, a wave plate 541, a wavelength selection filter 551, a birefrigent material 532, a wavelength selection filter 552, an optical path length adjusting element 571, wave plates 542A, 542B, and a birefrigent material 533 arranged in the order named from the input port 11 to the output ports 21, 22. The filter 560A in the first application example is comprised of the wavelength selection filter 551, the birefrigent material 532, the wavelength selection filter 552, and the optical path length adjusting element 571.

The birefrigent material (first polarization separating means) 531 has the C-axis on the xz plane, separates a signal of multiple channels received through the input port 11, into a polarization component of the first orientation (the direction of the x-axis in the drawing) and a polarization component of the second orientation (the direction of the y-axis in the drawing), outputs the polarization component of the first orientation separated, into a first path $P_1$, and outputs the polarization component of the second orientation separated, into a second path $P_2$.

The wave plate 541 rotates the plane of polarization of the polarization component of the second orientation outputted from the birefrigent material 531 into the second path $P_2$, by 90° to convert it into a polarization component of the first orientation. On the other hand, the polarization component of the first orientation outputted from the birefrigent material 531 into the first path $P_1$ travels without passing through the wave plate 541, and remains as a polarization component of the first orientation. Namely, the wave plate 541 acts as polarization plane parallelizing means for parallelizing the planes of polarization of the signals of the channel groups outputted from the birefrigent material 531 into the first path $P_1$ and into the second path $P_2$, respectively, with each other.

The wavelength selection filter (first wavelength selection means) 551 outputs the signal of the first channel group out of each of the signal groups being the polarization components of the first orientation respectively having propagated from the wave plate 541 through the first path $P_1$ and through the second path $P_2$, while maintaining it as a polarization component of the first orientation, and converts the signal of the second channel group into a polarization component of the second orientation to output it. This wavelength selection filter 551 is made of a birefrigent material having the C-axis on the xy plane. In this birefrigent material, let $n_o$ be the refractive index for the ordinary ray, $n_e$ be the refractive index for the extraordinary ray, and L be the thickness in the z-axis direction. When light of the wavelength $\lambda$ travels in the z-axis direction in the birefrigent material, the phase difference $\delta$ represented by the following equation is made between the ordinary ray and the extraordinary ray.

$$\delta = 2\Pi L(n_e - n_o)/\lambda$$

This phase difference $\delta$ is dependent upon the wavelength $\lambda$. The wavelength selection filter 551 makes use of the dependence of the phase difference $\delta$ on the wavelength $\lambda$. For example, supposing the wavelength selection filter 551 is an optical material made of the birefrigent material of $LiNbO_2$ ($n_o = 2.2113$, $n_e = 2.1381$) and the frequency spacing of each 1.55µm-band signal is 100 GHz, the thickness L in the z-axis direction is 2.051 cm.

The birefrigent material (second polarization separating means) 532 has the C-axis on the yz plane, and separates each of the signal groups respectively outputted from the wavelength selection filter 551 into the first path $P_1$ and into the second path $P_2$, into a polarization component of the first orientation and a polarization component of the second orientation. Namely, the birefrigent material 532 outputs the signal of the first channel group (the polarization component of the first orientation) having propagated through the first path $P_1$, into a third path $P_3$, outputs the signal of the second channel group (the polarization component of the second orientation) having propagated through the first path $P_1$, into a fourth path $P_4$, outputs the signal of the first channel group (the polarization component of the first orientation) having propagated through the second path $P_2$, into a fifth path $P_5$, and outputs the signal of the second channel group (the polarization component of the second orientation) having propagated through the second path $P_2$, into a sixth path $P_6$.

Among the signal groups outputted from the birefrigent material 532, the wavelength selection filter (second wavelength selection means) 552 converts the signal of the first channel group (the polarization component of the first orientation) having propagated through the third path $P_3$, into a polarization state the principal component of which is the polarization component of the first orientation, and converts the signal of the second channel group (the polarization component of the second orientation) having propagated through the fourth path $P_4$, into a polarization state the principal component of which is the polarization component of the second orientation. The wavelength selection filter 552 as described above can be obtained as an optical element made of the same birefrigent material and having the same C-axis orientation as the wavelength selection filter 551 and having the thickness of $2L+\Delta$ in the z-axis direction. Namely, when the polarization component of the first orientation is made incident into the wavelength selection filter 552 having the thickness as described, it reverses the planes of polarization of the polarization component of the first orientation and the polarization component of the second orientation (contribution of the thickness of 2L) at the wavelength interval equal to half of the wavelength interval in the wavelength selection filter 551 (contribution of the thickness of $\Delta$), and outputs

each of the signals of the channel groups. The wavelength selection filter 552 is designed by adjusting the C-axis orientation so that for each of the signals of the first channel group and the second channel group, the polarization split ratio between the polarization component of the first orientation and the polarization component of the second orientation is an appropriate value which is neither 1:0 nor 0:1.

The optical path length adjusting element (optical path length adjusting means) 571 is placed on the fifth path $P_5$ and the sixth path $P_6$. The optical path length adjusting element 571 adjusts the path length difference between the path lengths of the third path $P_3$ and the fifth path $P_5$ caused by the placement of the wavelength selection filter 552 on the third path $P_3$. The optical path length adjusting element 571 also adjusts the path length difference between the path lengths of the fourth path $P_4$ and the sixth path $P_6$ caused by the placement of the wavelength selection filter 552 on the fourth path $P_4$.

The wave plate 542A rotates the plane of polarization of the signal of the first channel group (the principal component of which is the polarization component of the first orientation) outputted from the wavelength selection filter 552 into the third path $P_3$, by 90° to convert it into a signal group the principal component of which is the polarization component of the second orientation. The wave plate 542B rotates the plane of polarization of the signal of the second channel group (the polarization component of the second orientation) outputted from the optical path length adjusting element 571 into the sixth path $P_6$, by 90° to convert it into a polarization component of the first orientation. On the other hand, the signal of the second channel group (the principal component of which is the polarization component of the second orientation) outputted from the wavelength selection filter 552 into the fourth path $P_4$ travels without passing through the wave plates 542A, 542B, and remains as a signal group the principal component of which is the polarization component of the second orientation. The signal of the first channel group (the polarization component of the first orientation) outputted from the optical path length adjusting element 571 into the fifth path $P_5$ travels without passing through the wave plates 542A, 542B, and remains as a polarization component of the first orientation. Namely, the wave plates 542A, 542B act as polarization plane orthogonalizing means for orthogonalizing the planes of polarization of the principal polarization components of the signals of the first channel group respectively having propagated through the third path $P_3$ and through the fifth path $P_5$, with each other and for orthogonalizing the planes of polarization of the principal polarization components of the signals of the second channel group respectively having propagated through the fourth path $P_4$ and through the sixth path $P_6$, with each other.

The birefrigent material (polarized wave multiplexing means) 533 has the C-axis on the xz plane, multiplexes polarized waves of the principal polarization components of the signals of the first channel group respectively having propagated through the third path $P_3$ and through the fifth path $P_5$, outputs the multiplexed principal polarization components of the signals of the first channel group to the first output port 21, multiplexes polarized waves of the principal polarization components of the signals of the second channel group respectively having propagated through the fourth path $P_4$ and through the sixth path $P_6$, and outputs the multiplexed principal polarization components of the signals of the second channel group to the second output port 22.

In the interleaver 500A according to the first application example, the signal of multiple channels ($\lambda_1$, $\lambda_2$, $\lambda_3$, $\lambda_4$, $\lambda_5$, $\lambda_6$,...) received through the input port 11 is separated into the polarization component of the first orientation and the polarization component of the second orientation in the birefrigent material 531, the polarization component of the first orientation separated is outputted into the first path $P_1$, and the polarization component of the second orientation separated is outputted into the second path $P_2$. The polarization component of the first orientation outputted from the birefrigent material 531 into the first path $P_1$ travels without passing through the wave plate 541 to reach the wavelength selection filter 551. In this wavelength selection filter 551, the signal of the first channel group is outputted to the birefrigent material 532 white remaining as a polarization component of the first orientation, and the signal of the second channel group is converted into the polarization component of the second orientation. The polarization component of the second orientation outputted from the birefrigent material 531 into the second path $P_2$ is converted into the polarization component of the first orientation in the wave plate 541. In the wavelength selection filter 551 thereafter, the signal of the first channel group is outputted to the birefrigent material 532 while remaining as a polarization component of the first orientation, and the signal of the second channel group is converted into the polarization component of the second orientation.

Each of the signal groups having propagated through the first path $P_1$ and through the second path $P_2$, respectively, and having arrived at the birefrigent material 532 from the wavelength selection filter 551 is separated into the polarization component of the first orientation and the polarization component of the second orientation in the birefrigent material 32. Then the birefrigent material 532 outputs the signal of the first channel group (the polarization component of the first orientation) having propagated through the first path $P_1$, into the third path $P_3$, outputs the signal of the second channel group (polarization component of the second orientation) having propagated through the first path $P_1$, into the fourth path $P_4$, outputs the signal of the first channel group (the polarization component of the first orientation) having propagated through the second path $P_2$, into the fifth path $P_5$, and outputs the signal of the second channel group (the polarization component of the second orientation) having propagated through the second path $P_2$, into the sixth path $P_6$.

Each of the signal groups respectively outputted from the birefrigent material 532 into the third path $P_3$ and into the fourth path $P_4$ arrives at the wavelength selection filter 552. Namely, this wavelength selection filter 552 converts the signal of the first channel group (the polarization component of the first orientation) having propagated through the third path $P_3$, into the polarization state the principal component of which is the polarization component of the first orientation, and converts the signal of the second channel group (the polarization component of the second orientation) having propagated through the fourth path $P_4$, into the polarization state the principal component of which is the polarization component of the second orientation. On the other hand, each of the signal groups outputted from the birefrigent material 532 into the fifth path $P_5$ and into the sixth path $P_6$ arrives at the optical path length adjusting element 571. This optical path length adjusting element 571 reduces the path length difference between the path lengths of the third path $P_3$ and the fifth path $P_5$ and reduces the path length difference between the path lengths of the fourth path $P_4$ and the sixth path $P_6$.

The signal of the first channel group (the principal component of which is the polarization component of the first orientation) outputted from the wavelength selection filter 552 into the third path $P_3$ is converted into the signal the principal component of which is the polarization component of the second orientation, in the wave plate 542A. The signal of the second channel group (the principal component of which is the polarization component of the second orientation) outputted from the wavelength selection filter 552 into the fourth path $P_4$ travels without passing through the wave plates 542A, 542B, and remains as a signal the principal component of which is the polarization component of the second orientation. The signal of the first channel group (the polarization component of the first orientation) outputted from the optical path length adjusting element 571 into the fifth path $P_5$ travels without passing through the wave plates 542A, 542B, and remains as a polarization component of the first orientation. The signal of the second channel group (the polarization component of the second orientation) outputted from the optical path length adjusting element 571 into the sixth path $P_6$ is converted into the polarization. component of the first orientation in the wave plate 542B.

Then the birefrigent material 533 multiplexes the polarized waves of the principal polarization components of the signal of the first channel group (the principal component of which is the polarization component of the second orientation) having propagated through the third path $P_3$ and the signal of the first channel group (the polarization component of the first orientation) having propagated through the fifth path $P_5$, and outputs the multiplexed principal polarization components of the signals of the first channel group to the first output port 21. The birefrigent material 33 also multiplexes, the polarized waves of the principal polarization components of the signal of the second channel group (the principal component of which is the polarization component of the second orientation) having propagated through the fourth path $P_4$ and the signal of the second channel group (the polarization component of the first orientation) having propagated through the sixth path $P_6$, and outputs the multiplexed principal polarization components of the signals of the second channel group to the second output port 22. At this time, the polarized waves of the polarization components orthogonal to the principal polarization components in the respective signal groups respectively propagating through the third path $P_3$ and through the fourth path $P_4$ are not multiplexed, and they are not outputted to either of the first output port 21 and the second output port 22 to result in loss.

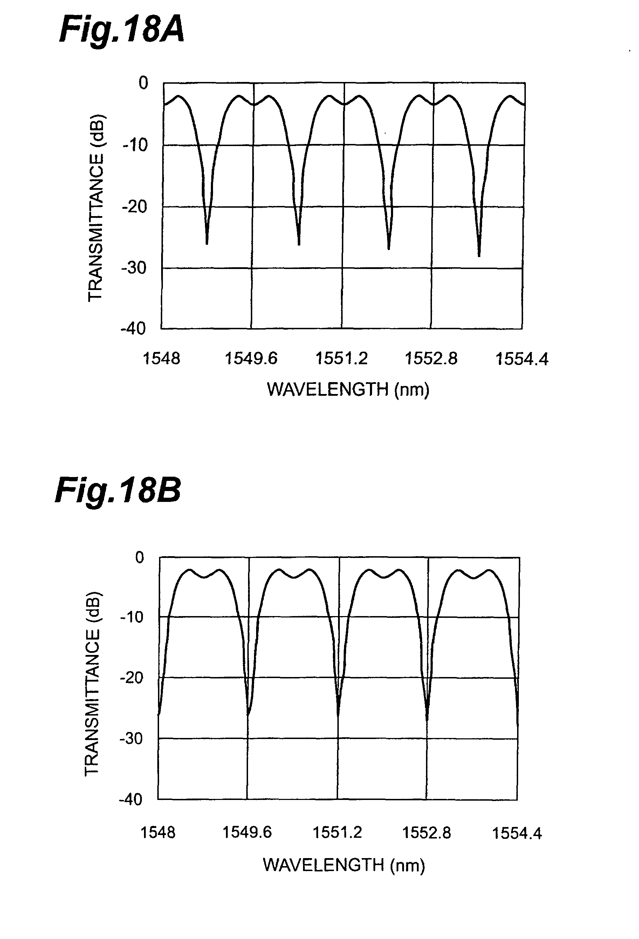

Fig. 18A shows a transmission spectrum of the light outputted from the first output port 21 out of the light received through the input port 11 and Fig. 18B a transmission spectrum of the light outputted from the second output port 22 out of the light received through the input port 11, in the interleaver. 500A according to the first application example shown in Fig. 17. In the measurement of the transmission spectra of these Figs. 18A and 18B, the wavelength selection filter 552 was an optical element made of the same birefrigent material and having the same C-axis orientation as the wavelength selection filter 551 and having the thickness of $2L+\Delta$ in the z-axis direction. The optical element reverses the planes of polarization of the polarization component of the first orientation and the polarization component of the second orientation at the wavelength interval equal to half of the wavelength interval in the wavelength selection filter 551 to output the signals of the respective channel groups.

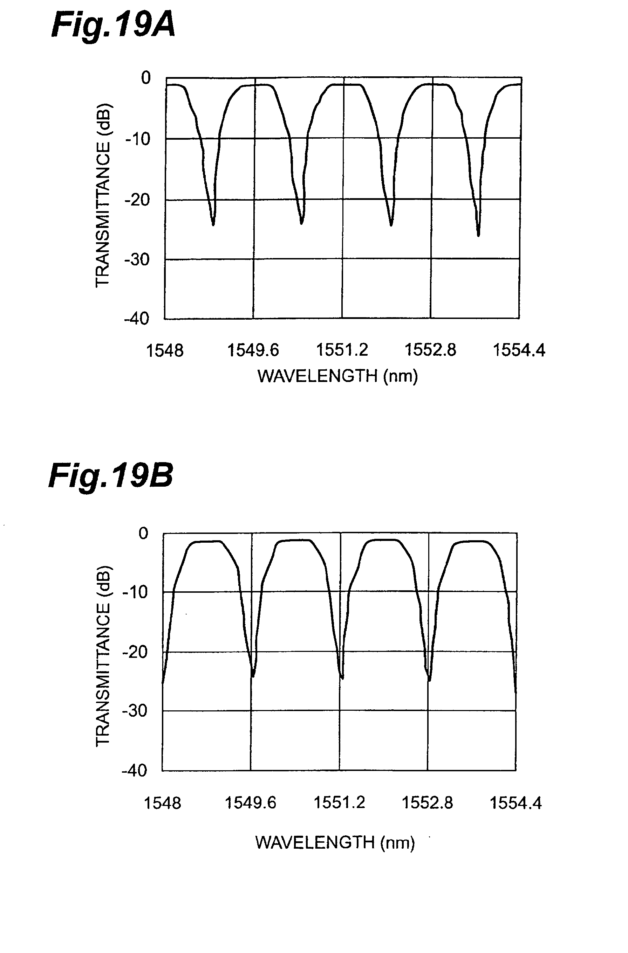

Fig. 19A shows a transmission spectrum of the light outputted from the first output port 21 out of the light received through the input port 11 and Fig. 19B a transmission spectrum of the light outputted from the second output port 22 out of the light received through the input port 11, in the interleaver 500A according to the first application example shown in Fig. 17. In the measurement of the transmission spectra of these Figs. 19A and 19B, the wavelength selection filter 552 is designed by adjusting the C-axis orientation so that for each of the signals of the first channel group and the second channel group, the polarization split ratio between the polarization component of the first orientation and the polarization component of the second orientation is an appropriate value which is neither 1:0 nor 0:1. Here the C-axis orientation of the wavelength selection filter 552 is on the xy plane and makes the angle of 67.5° relative to the x-axis.

In these Figs. 18A to 19B, the channel wavelengths included in the first channel group to be outputted from the first output port 21 are 1548.0 nm, 1549.6 nm, 1551.2 nm, 1552.8 nm, and 1554.4 nm and the channel wavelengths included in the second channel group to be outputted from the second output port 22 are 1548.8 nm, 1550.4 nm, 1552.0 nm, and 1553.6 nm.

In the first application example, each of the signals of the channel groups respectively outputted from the wavelength selection filter 552 into the third path $P_3$ and into the fourth path $P_4$ is a signal group the principal component of which is the polarization component of the predetermined orientation, and the birefrigent material 533 multiplexes, the polarized waves of only the polarization components of the predetermined orientation to output the signal of each channel group to either of the output ports 21, 22. On the other hand, the polarization components orthogonal to the principal polarization components in the signal groups respectively propagating in the third path $P_3$ and in the fourth path $P_4$ are not outputted to either of the first output port 21 and the second output port 22 to result in loss. As a result, as shown in Figs. 18A and 19A, the transmission spectrum of the signal (the channel spacing: 200 GHz (= 1.6 nm)) arriving at the first output port 21 from the input port 11 becomes so flat that the difference between the maximum transmittance and the minimum transmittance in the predetermined wavelength range centered about each channel wavelength included in the first channel group (1548.0 nm, 1549.6 nm, 1551.2 nm, 1552.8 nm, and 1554.4 nm) falls within the range of not more than 0.4 dB, preferably, in the range of not more than 0.2 dB. Likewise, as shown in Figs. 18B and 19B, the transmission spectrum of the signal (the channel spacing: 200 GHz (= 1.6 nm)) arriving at the second output port 22 from the input port 11 also becomes so flat that the difference between the maximum transmittance and the minimum transmittance in the predetermined wavelength range centered about each channel wavelength included in the second channel group (1548.8 nm, 1550.4 nm, 1552.0 nm, and 1553.6 nm) falls within the range of not more than 0.4 dB, preferably, in the range of not more than 0.2 dB. When consideration is given to the cases of the output channel spacing being narrowed to 100 GHz (= 0.8 nm) or to 50 GHz (= 0.4 nm), it is preferable that the flatness be ensured at least in the wavelength range of ±0.06 nm centered about each channel wavelength, for each of the first and second channel groups separated from each other. The flatness of the transmission spectrum is superior in the case of Figs. 19A and 19B to that in the case of Figs. 18A and 18B. Further, as seen from Figs. 18A to 19B, the isolation is excellent between adjacent signal channels (the crosstalk between adjacent signal channels is not more than 20 dB).

When the wavelength selection filter 552 is placed on the third path $P_3$ and on the fourth path $P_4$, it makes the path length difference between the path lengths of the third path $P_3$ and the fifth path $P_5$ to give rise to dispersion in the signal of the first channel group outputted from the first output port 21. The path length difference is also made between the fourth path $P_4$ and the sixth path $P_6$, so as to give rise to the dispersion in the signal of the second channel group outputted from the second output port 22. In the interleaver 500A according to the first application example, however, since the optical path length adjusting element 571 is placed on the fifth path $P_5$ and on the sixth path $P_6$, the path length differences are reduced, thereby effectively suppressing the dispersion of the signals of the respective channel groups.

(Second Application Example of Third Embodiment)

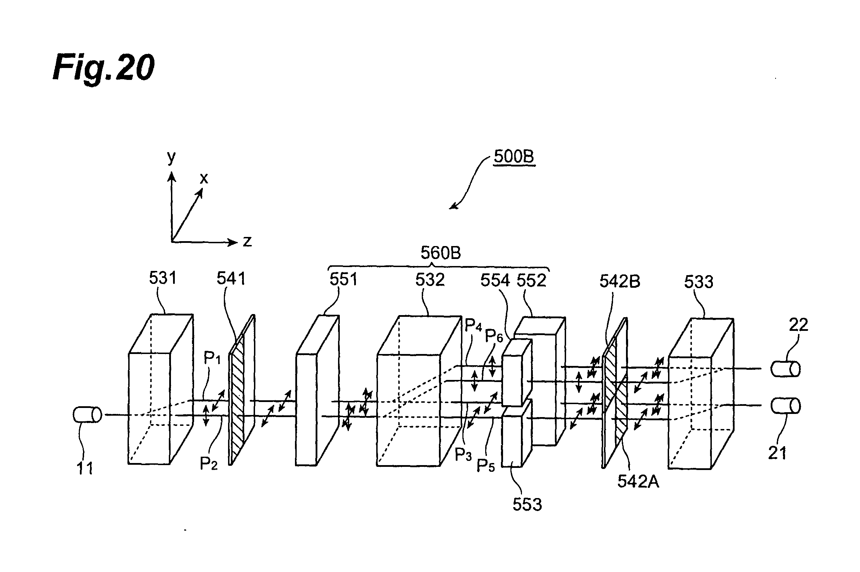

The second application example of interleaver 500B and filter 560B according to the third embodiment will be described below. Fig. 20 is an illustration showing a configuration of the interleaver 500B and filter 560B according to the second application example. The interleaver 500B according to the second application example is different from the interleaver 500A according to the first application example in that the optical path length adjusting element 571 is replaced by a wavelength selection filter (third wavelength selection means) 553 and a wavelength selection filter (fourth wavelength selection means) 554. The filter 560B in the second application example is comprised of the wavelength selection filter 551, the birefrigent material 532, and the wavelength selection filters 552 to 554.

The wavelength selection filter 553 is placed on the fifth path $P_5$ on the output side of the birefrigent material 532 and is configured to output the signal of the first channel group having propagated through this path, as a polarization component of the first orientation and to output the signal of the other channel group having propagated through this path, as a signal containing both the polarization component of the first orientation and the polarization component of the second orientation. The wavelength selection filter 553 has the same transmission characteristics as the wavelength selection filter 551. The wavelength selection filter 553 of this type can be obtained as an optical element made of the same birefrigent material and having the same C-axis orientation as the wavelength selection filter 551 and having the thickness of L in the z-axis direction.

The wavelength selection filter 554 is placed on the sixth path $P_6$ on the output side of the birefrigent material 532 and is configured to output the signal of the second channel group having propagated through this path, as a polarization component of the second orientation and to output the signal of the other channel group having propagated through this path, as a signal containing both the polarization components of the second orientation and the first orientation. The wavelength selection filter 554 is an optical element having the transmission characteristics for the polarization component of the first orientation and the polarization component of the second orientation, reverse to those of the wavelength selection filter 551. The wavelength selection filter 554 of this type can be obtained as an optical element made of the same birefrigent material and having the same C-axis orientation as the wavelength selection filter 551, and having the thickness of L+$\Delta$ in the z-axis direction.

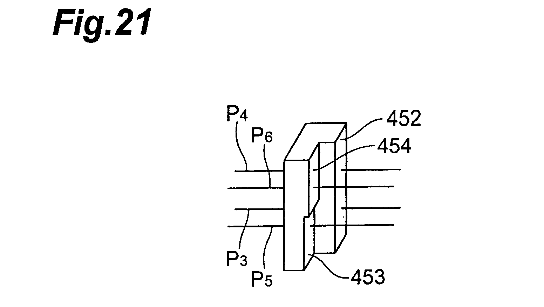

The wavelength selection filters 552 to 554 can be formed as an integral element made of a birefrigent material and consisting of three areas having respective thicknesses of 2L+$\Delta$, L, and L+$\Delta$ in the z-axis direction, as shown in Fig. 21. This integral form facilitates the assembly of the interleaver 500B and enables compactification of the interleaver 500B. It is also possible to form two of them, the wavelength selection filter 552 and the wavelength selection filter 553, the wavelength selection filter 552 and the wavelength selection filter 554, or the wavelength selection filter 553 and the wavelength selection filter 554, in an integral body.

The interleaver 500B according to the second application example operates in much the same manner as in the first application example (Fig. 17). In the second application example, however, there is the following difference, because of the configuration wherein the wavelength selection filter 553 is placed on the fifth path $P_5$ on the output side of the birefrigent material 532 and the wavelength selection filter 554 is placed on the sixth path $P_6$.

Namely, the wavelength selection filter 553 outputs the signal of the first channel group out of the signal group outputted from the birefrigent material 532 into the fifth path $P_5$, as the polarization component of the first orientation, and outputs the signal of the other channel group as the signal group containing both the polarization components of the first orientation and the second orientation. The wavelength selection filter 554 outputs the signal of the second channel group out of the signal group outputted from the birefrigent material 532 into the sixth path $P_3$, as the polarization component of the second orientation, and outputs the signal of the other channel group as the signal group containing both the polarization components of the second orientation and the first orientation.

The signal of the first channel group (the principal component of which is the polarization component of the first orientation) outputted from the wavelength selection filter 552 into the third path $P_3$ is converted into a signal the principal component of which is the polarization component of the second orientation, in the wave plate 542A. The signal of the second channel group (the principal component of which is the polarization component of the second orientation) outputted from the wavelength selection filter 552 into the fourth path $P_4$ travels without passing through the wave plates, 542A, 542B, and remains as a signal the principal component of which is the polarization component of the second orientation. The signal of the first channel group (the polarization component of the first orientation) outputted from the wavelength selection filter 553 into the fifth path $P_5$ travels without passing the wave plates 542A, 542B, and remains as a polarization component of the first orientation. The signal of the second channel group (the polarization component of the second orientation) outputted from the wavelength selection filter 554 into the sixth path $P_6$ is converted into a polarization component of the first orientation in the wave plate 542B.

Then the birefrigent material 533 multiplexes polarized waves of the principal polarization components of the signal of the first channel group (the principal component of which is the polarization component of the second orientation) having propagated through the third path $P_3$ and the signal of the first. channel group (the polarization component of the first orientation) having propagated through the fifth path-$P_5$, and outputs the multiplexed principal polarization components of the signals of the first channel group to the first output port 21. The birefrigent, material 533 also multiplexes polarized waves of the principal polarization components of the signal of the second channel group (the principal component of which is the polarization component of the second orientation) having propagated through the fourth path $P_4$ and the signal of the second channel group (the polarization component of the first orientation) having propagated through the sixth path $P_6$, and outputs the principal polarization components of the signals of the second channel group to the second output port 22.

At this time, the polarized waves of the polarization components orthogonal to the principal polarization components in the signal groups respectively having propagated through the third path $P_3$ and through the fourth path $P_4$ are not multiplexed, and thus they are not outputted to either of the first output port 21 and the second output port 22 to result in loss. Since the light of wavelengths except for the channel wavelengths among the signal groups respectively having propagated through the fifth path $P_5$ and through the sixth path $P_6$ also contains the polarization components not to be subjected to polarized wave multiplexing and be outputted to either of the first output port 21 and the second output port 22, it results in optical loss as described above, thus enhancing the isolation between adjacent signal channels.

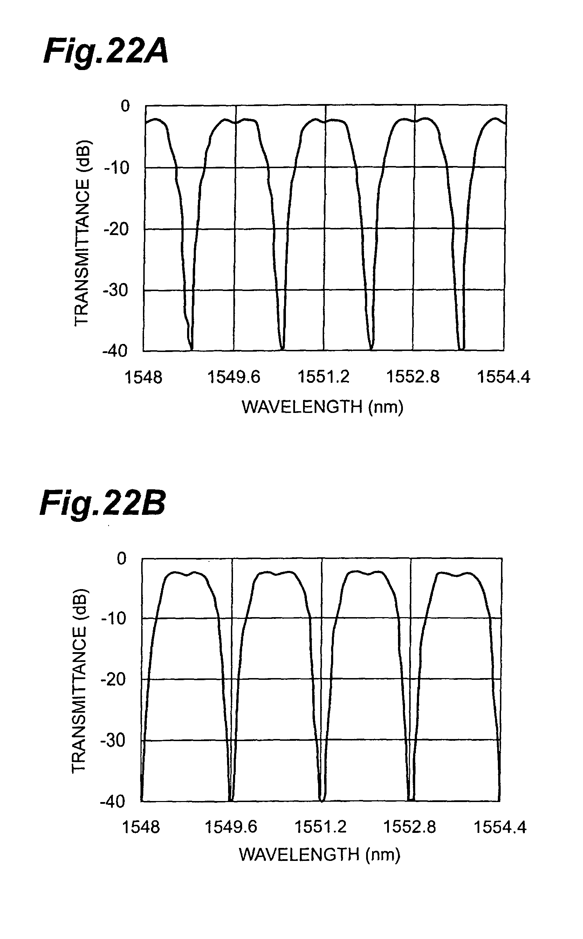

Fig. 22A shows a transmission spectrum of the light outputted from the first output port 21 out of the light received through the input port 11, and Fig. 22B a transmission spectrum of the light outputted from the second output port 22 out of the light received from the input port 11, in the interleaver 500B according to the second application example shown in Fig. 20. In the measurement of the transmission spectra of these Figs. 22A and 22B, the wavelength selection filter 552 is an optical element made of the same birefrigent material and having the same C-axis orientation as the wavelength selection filter 551, and having the thickness of 2L+Δ in the z-axis direction, whereby the signals of the channel groups are outputted while reversing the polarization component of the first orientation and the polarization component of the second orientation at the wavelength interval equal to half of that in the wavelength selection filter 551.

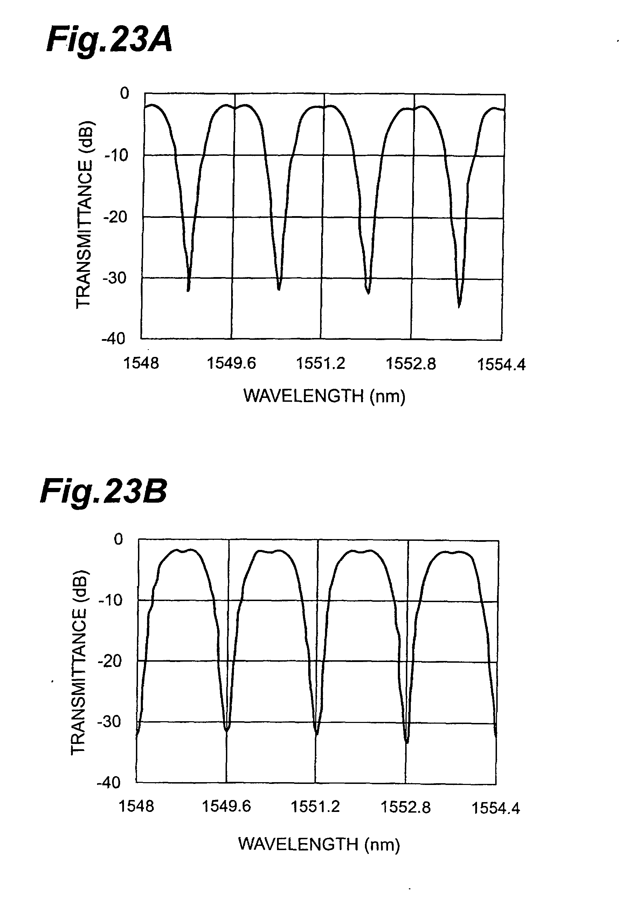

Fig. 23A shows a transmission spectrum of the light outputted from the first output port 21 out of the light received through the input port 11, and Fig. 23B a transmission spectrum of the light outputted from the second output port 22 out of the light received through the input port 11, in the interleaver 500B according to the second application example shown in Fig. 20. In the measurement of the transmission spectra of these Figs. 23A and 23B, the wavelength selection filter 552 is designed by adjusting the C-axis orientation so that for each of the signals of the first channel group and the second channel group, the polarization split ratio between the polarization component of the first orientation and the polarization component of the second orientation becomes an appropriate value which is neither 1:0 nor 0:1. Here the C-axis orientation of the wavelength selection filter 552 is on the xy plane and makes the angle of 67.5° relative to the x-axis.

In these Figs. 22A to 23B, the channel wavelengths included in the first channel group to be outputted from the first output port 21 are 1548.0 nm, 1549.6 nm, 1551.2 nm, 1552.8 nm, and 1554.4 nm, and the channel wavelengths included in the second channel group to be outputted from the second output port 22 are 1548.8 nm, 1550.4 nm, 1552.0 nm, and 1553.6 nm.

In the interleaver 500B according to the second application example, each of the signals of the channel groups outputted from the wavelength selection filter 552 into the third path $P_3$ and into the fourth path $P_4$, respectively, is a signal the principal component of which is the polarization component of the predetermined orientation, and the birefrigent material 533 multiplexes the polarized waves of only the polarization components of the predetermined orientation in the signals of each channel group and outputs the multiplexed components to either of the first and second output ports 21, 22. On the other hand, the polarization components orthogonal to the principal polarization components in the signal groups respectively having propagated through the third path $P_3$ and through the fourth path $P_4$ are not outputted to either of the first output port 21 and the second output port 22 to result in loss. As a result, as shown in Figs. 22A and 23A, the transmission spectrum of the signal (the channel spacing: 200 GHz (= 1.6 nm)) arriving at the first output port 21 from the input port 11 becomes so flat that the difference between the maximum transmittance and the minimum transmittance in the predetermined wavelength range centered about each channel wavelength included in the first channel group (1548.0 nm, 1549.6 nm, 1551.2 nm, 1552.8 nm, and 1554.4 nm) falls within the range of not more than 0.4 dB, preferably, in the range of not more than 0.2 dB. Likewise, as shown in Figs. 22B and 23B, the transmission spectrum of the signal (the channel spacing: 200 GHz (= 1.6 nm)) arriving at the second output port 22 from the input port 11 also becomes so flat that the difference between the maximum transmittance and the minimum transmittance in the predetermined wavelength range centered about each channel wavelength included in the second channel group (1548.8 nm, 1550.4 nm, 1552.0 nm, and 1553.6 nm) falls within the range of not more than 0.4 dB, preferably, in the range of not more than 0.2 dB. When consideration is given to the cases of the output channel spacing being narrowed to 100 GHz (= 0.8 nm) or to 50 GHz (= 0.4 nm), it is preferable that the flatness be ensured at least in the wavelength range of ±0.06 nm centered about each channel wavelength, for each of the first and second channel groups separated from each other. The flatness at each channel wavelength of the transmission spectrum is better in the case of Figs. 22B and 23B that in the case of Figs. 22A and 23A. Further, as seen from Figs. 22A to 23B, the interleaver in the present example is excellent in the isolation between adjacent signal channels and the crosstalk between adjacent signal channels is also controlled to not more than -30 to-40 dB, as compared with the case of the first application example.

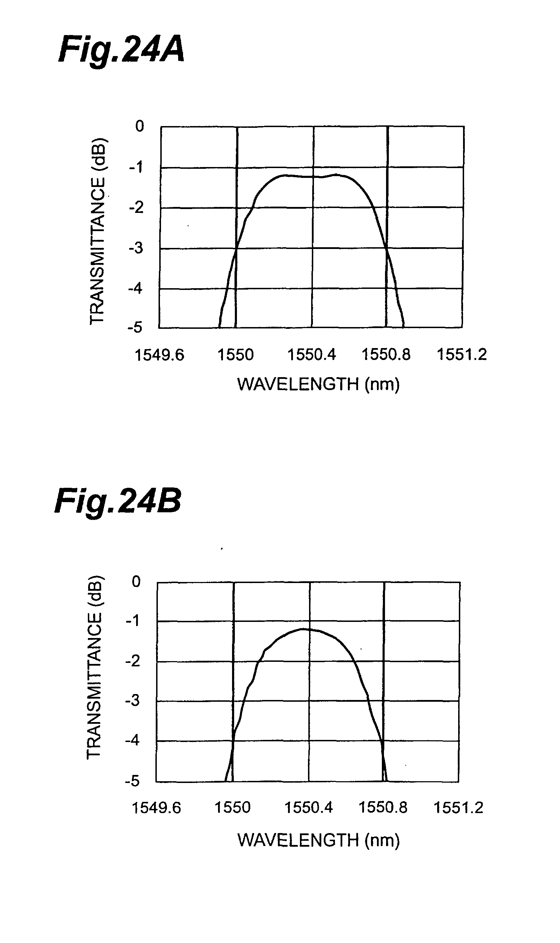

Fig. 24A and Fig. 24B show transmission spectra of the light outputted from the second output port 21 out of the light received through the input port 11 in the interleaver 500B. Specifically, Fig. 24A shows the transmission spectrum obtained where the wavelength selection filter 552 is placed on all the paths of the third path $P_3$ to the sixth path $P_6$, and Fig. 24B the transmission spectrum obtained where the wavelength selection filter 552 is placed on the two paths of the third path $P_3$ and the fourth path $P_4$ as in the present second application example. The transmittance at intermediate wavelengths (1550.0 nm, 1550.8 nm) between adjacent channel wavelengths is approximately -3 dB in the case where the wavelength selection filter 552 is placed on all the paths of the third path $P_3$ and the sixth path $P_6$ (Fig. 24A), whereas it is approximately -4 dB in the case where the wavelength selection filter 552 is placed on the two paths of the third path $P_3$ and the fourth path $P_4$ as in the second application example (Fig. 24B). When the wavelength selection filter 552 is placed on the two paths of the third path $P_3$ and the fourth path $P_4$ in this way, the flatness of the transmission spectrum is improved and the isolation is also improved between adjacent signal channels.

Although the above second application example is not provided with the optical path length adjusting element, the second application example may also be provided with the optical path length adjusting element. Namely, in the configuration wherein the wavelength selection filter 552 is placed on the third path $P_3$ and the wavelength selection filter 553 on the fifth path $P_5$, they make the path length difference between the path lengths of the third path $P_3$ and the fifth path $P_5$ to give rise to the dispersion in the signal of the first channel group outputted from the first output port 21. In the configuration wherein the wavelength selection filter 552 is placed on the fourth path $P_4$ and the wavelength selection filter 554 on the sixth path $P_6$, they also make the path length difference between the path lengths of the fourth path $P_4$ and the sixth path $P_6$ to give rise to the dispersion in the signal of the second channel group outputted from the second output port 22. However, when the optical path length adjusting element is placed on either of the paths, the foregoing path length differences are reduced, thus effectively suppressing the dispersion in the signal of each channel group.

(Third Application Example of Third Embodiment)

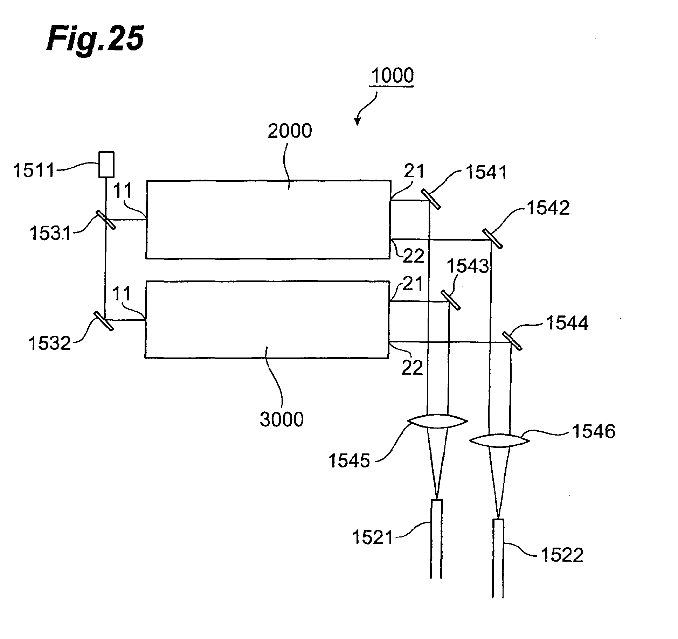

An interleaver system will be described below as a third application example of the third embodiment. Fig. 25 is an illustration showing a configuration of the interleaver system 1000 according to the third application example. As shown in Fig. 25, the interleaver system 1000 according to the third application example includes two interleavers 2000, 3000 (having the structure similar to either of the interleavers 500A, 500B according to the first and second application examples) each having the input port 11 and the first and second output ports 21, 22. In addition to the two interleavers 500A (500B), this interleaver system 1000 is provided with a half mirror 1531, a mirror 1532, mirrors 1541 to 1544, and condenser lenses 1545, 1546.

The half mirror 1531 transmits or reflects a signal of multiple channels received through an input port 1531 to split it into two, and guides the reflected signal to the input port 11 of the interleaver 2000. The mirror 1532 reflects the transmitted component from the half mirror 1531 and guides the reflected component to the input port 11 of the interleaver 3000. Namely, the half mirror 1531 and the mirror 1532 act as splitting means for splitting the input signal of multiple channels into two.

The mirror 1541 reflects the signal of the first channel group outputted from the first output sport 21 of the interleaver 2000, toward the condenser lens 1545, and the mirror 1543 reflects the signal of the first channel group outputted from the first output port 21 of the interleaver 3000, toward the condenser lens 545. The condenser lens 1545 condenses the signals of the first channel group having arrived from the respective mirrors 1541, 1543 and injects the condensed signal into a core region in an end face of optical fiber 1521. The mirror 1542 reflects the signal of the second channel group outputted from the second output port 22 of the interleaver 2000, toward the condenser lens 1545, and the mirror 1544 reflects the signal of the second channel group outputted from the second output sport 22 of the interleaver 3000, toward the condenser lens 1545. The condenser lens 1546 condenses the signals of the second channel group having arrived from the respective mirrors 1542, 1544, and injects the condensed signal into a core region in an end face of optical fiber 1522. Namely, the mirrors 1541 to 1544 and the condenser lenses 1545, 1546 act as multiplexing means for multiplexing the signals of the first channel group respectively outputted from the interleaver 2000 and from the interleaver 3000 and for multiplexing the signals of the second channel group respectively outputted from the interleaver 2000 and from the interleaver 3000.

Each of the interleavers 2000, 3000 has the structure similar to either of the interleavers 500A, 500B according to the first and second application examples, and is configured to receive part of the signal of multiple channels through the input port 11, demultiplex the signal into the signal of the first channel group and the signal of the second channel group, output the signal of the first channel group from the first output port 21, and output the signal of the second channel group from the second output port 22. It is noted that the path where the wavelength selection filter 552 is placed (either of the third path, the fourth path, the fifth path, and the sixth path) in the interleaver 2000 is different from the path where the wavelength selection filter 552 is placed (either of the third path, the fourth path, the fifth path, and the sixth path) in the interleaver 3000. For example, the wavelength selection filter 552 is placed on the third path and on the fourth path in the interleaver 2000, while the wavelength selection filter 552 is placed on the fifth path and on the sixth path in the interleaver 3000.

In the interleaver system 1000 (third application example) shown in Fig. 25, the signal of multiple channels received through the input port 531 is split into two by the splitting means consisting of the half mirror 1531 and the mirror 1532. One of the two split signal groups is guided through the input port 11 into the interleaver 2000. In the interleaver 200, the incoming signal group is demultiplexed into the signal of the first channel group and the signal of the second channel group, thereafter the signal of the first channel group is outputted from the first output port 21 of the interleaver 2000, and the signal of the second channel group is outputted from the second output port 22 of the interleaver 2000. The other of the two split signal groups is guided through the input port 11 into the interleaver 3000. In the interleaver 3000, the incoming signal group is demultiplexed into the signal of the first channel group and the signal of the second channel group, thereafter the signal of the first channel group is outputted from the first output port 21 of the interleaver 3000, and the signal of the second channel group is outputted from the second output port 22 of the interleaver 3000. Then the signals of the first channel group outputted from the first output ports 21 of the respective interleavers 2000 and 3000 are multiplexed by the mirrors 1541, 1543 and the condenser lens 1545 to be injected into the optical fiber 1521. The signals of the second channel group outputted from the second output ports 22 of the respective interleavers 2000 and 3000 are multiplexed by the mirrors 1542, 1544 and the condenser lens 1546 to be injected into the optical fiber 1522.

Particularly, in the third application example shown in Fig. 25, the two interleavers 2000, 3000 are different in the path equipped with the wavelength selection filter 552, out of the third path, the fourth path, the fifth path, and the sixth path. Accordingly, even if the intensities of the respective polarization components of the first orientation and the second orientation are different from each other in the signal of the multiple channels received through the input port 531 and even if the signals of the respective channel groups outputted from the interleavers 2000, 3000 have polarization dependence, the polarization dependence will be canceled in the multiplexed signals of the respective channel groups injected into the optical fibers 1521, 1522.

(Modification Examples)

The third embodiment is not limited to the above-stated first to third application examples, but a variety of modifications can be applicable thereto. The wavelength selection filter 552 was placed on the third path $P_3$ and on the fourth path $P_4$ in the above application examples, but the wavelength selection filter 552 can be placed on either of the third path $P_3$ and the fifth path $P_5$ and on either of the fourth path $P_4$ and the sixth path $P_6$. The wavelength selection filter 553 can be placed on a path different from that equipped with the wavelength selection filter 552, out of the third path $P_3$ and the fifth path $P_5$. The wavelength selection filter 554 can be placed on a path different from the path equipped with the wavelength selection filter 552, out of the fourth path $P_4$ and the sixth path $P_6$.

(Fourth Embodiment)

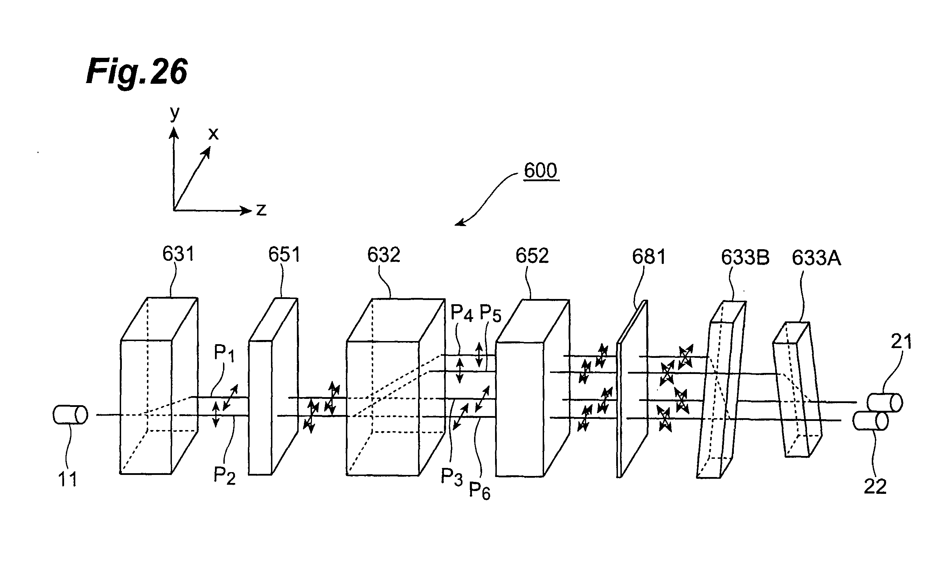

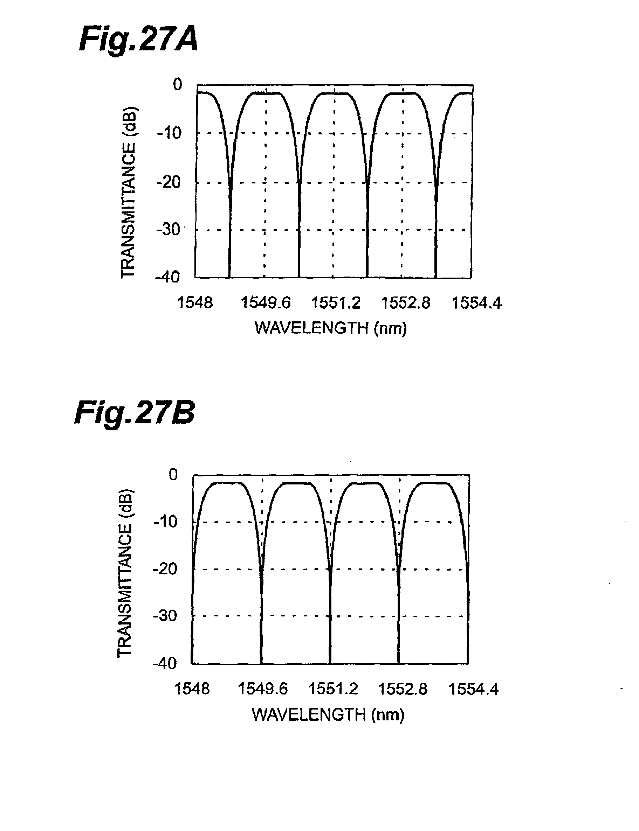

The fourth embodiment of the interleaver according to the present invention will be described below in detail with reference to Figs. 26, 27A, and 27B. In the description of the drawings the same reference symbols will denote the same elements and redundant description will be omitted.

Fig. 26 is an illustration showing a configuration of the fourth embodiment of the interleaver according to the present invention. In this Fig. 26, the illustration is based on the orthogonal coordinate system the z-axis of which is taken along the traveling direction of light. The interleaver 600 according to the fourth embodiment has a birefrigent material 631, a wavelength selection filter 651, a birefrigent material 632, a wavelength selection filter 652, a Faraday rotator 681, and birefrigent materials 633A, 633B arranged in the order named from the input port 11 to the output ports 21, 22.

The birefrigent material (first polarization separating means) 631 has the C-axis on the xz plane, separates a signal of multiple channels received through the input port 11, into a polarization component of the first orientation (the direction of the x-axis in the drawing) and a polarization component of the second orientation (the direction of the y-axis in the drawing) orthogonal to each other, outputs the polarization component of the first orientation separated, into a first path $P_1$, and outputs the polarization component of the second orientation separated, into a second path $P_2$.

Among the signal groups outputted from the birefrigent material 631 into the first path $P_1$ and into the second path $P_2$, respectively, the wavelength selection filter (first wavelength selection means) 651 outputs the signal of the first channel (the polarization component of the first orientation) having propagated through the first path $P_1$, while maintaining it as a polarization component of the first orientation, and converts the signal of the second channel group (the polarization component of the first orientation) having propagated through the first path $P_1$, into a polarization component of the second orientation. The wavelength selection filter 651 also outputs the signal of the. first channel group (the polarization component of the second orientation) having propagated through the second path $P_2$, while maintaining it as a polarization component of the second orientation, and converts the signal of the second channel group (the polarization component of the second orientation) having propagated through the second path $P_2$, into a polarization component of the first orientation. The wavelength selection filter 651 is made of a birefrigent material having the C-axis on the xy plane. In this birefrigent material, let $n_o$ be the refractive index for the ordinary ray, $n_e$ be the refractive index for the extraordinary ray, and L be the thickness in the z-axis direction. When light of the wavelength $\lambda$ travels in the z-axis direction in the birefrigent material, the phase difference $\delta$ represented by the following equation is made between the ordinary ray and the extraordinary ray.

$$\delta = 2\Pi L (n_e - n_o) / \lambda$$

This phase difference $\delta$ is dependent upon the wavelength $\lambda$. The wavelength selection filter 651 makes use of the dependence of the phase difference $\delta$ on the wavelength $\lambda$. For example, supposing the wavelength selection filter 651 is made of the birefrigent material of $LiNbO_2$ ($n_o = 2.2113$, $n_e = 2.1381$) and the frequency spacing of each 1.55µm-band signal is 100 GHz, the thickness L is 2.051 cm in the z-axis direction.

The birefrigent material 632 (second polarization separating means) has the C-axis on the yz plane and separates each of the signal groups outputted from the wavelength selection filter 651 into the first path $P_1$ and into the second path $P_2$, respectively, into a polarization component of the first orientation and a polarization component of the second orientation. Then the birefrigent material 632 outputs the signal of the first channel group (the polarization, component of the first orientation) having propagated through the first path $P_1$, into a third path $P_3$, outputs the signal of the second channel group (the polarization component of the second orientation) having propagated through the first path $P_1$, into a fourth path $P_4$, outputs the signal of the first channel group (the polarization component of the second orientation) having propagated through the second path $P_2$, into a fifth path $P_5$, and outputs the signal of the second channel group (the polarization component of the first orientation) having propagated through the second path $P_2$, into a sixth path $P_6$.

Among the signal groups outputted from the birefrigent material 632, the wavelength selection filter (second wavelength selection means) 652 converts the signal of the first channel group (the polarization component of the first orientation) having propagated through the third path $P_3$, into a polarization state the principal component of which is the polarization component of the first orientation, and converts the signal of the second channel group (the polarization component of the second orientation) having propagated through the fourth path $P_4$, into a polarization state the principal component of which is the polarization component of the second orientation. The wavelength selection filter 652 also converts the signal of the first channel group (the polarization component of the second orientation) having propagated through the fifth path $P_5$, into a polarization state the principal component of which is the polarization component of the second orientation, and converts the signal of the second channel group (the polarization component of the first orientation) having propagated through the sixth path $P_6$, into a polarization state the principal component of which is the polarization component of the first orientation.

The wavelength selection filter 652 of this type can be realized as an optical element made of the same birefrigent material and having the same C-axis orientation as the wavelength selection filter 651, and having the thickness of $2L+\Delta$ in the z-axis direction. Namely, when a polarization component of a predetermined orientation is made incident into the wavelength selection filter 652 having the foregoing thickness, a signal of each channel group is outputted while the planes of polarization of the polarization component of the first orientation and the polarization component of the second orientation (contribution of the thickness of 2L) are reversed (contribution of the thickness of $\Delta$) at the wavelength interval equal to half of that in the wavelength selection filter 651. The wavelength selection filter 652 is designed by adjusting the C-axis orientation so that for each of the signals of the first channel group and the second channel group, the polarization split ratio between the polarization component of the first orientation and the polarization component of the second orientation becomes an appropriate value which is neither 1:0 nor 0:1.

The Faraday rotator 681 rotates the plane of polarization of each of the signal groups outputted from the wavelength selection filter 652 into the third path $P_3$, into the fourth path $P_4$, into the fifth path $P_5$, and into the sixth path $P_6$, respectively, by 45°. The birefrigent material 633A multiplexes polarized waves of the principal polarization components of the signals of the first channel group respectively outputted from the Faraday rotator 681 into the third path $P_3$ and into the fifth path $P_5$, and outputs the multiplexed principal polarization components of the signals of the first channel group to the first output port 21. The birefrigent material 633B multiplexes polarized waves of the principal polarization components of the signals of the second channel group respectively outputted from the Faraday rotator 681 into the fourth path $P_4$ and into the sixth path $P_6$, and outputs the multiplexed principal polarization components of the signals of the second channel group to the second output port 22. Namely, the Faraday rotator 681 and the birefrigent materials 633A, 633B act as polarized wave multiplexing means for multiplexing the polarized waves of the principal polarization components of the signals of the first channel group respectively outputted from the birefrigent material 632 into the third path $P_3$ and into the fifth path $P_5$ and outputting the multiplexed principal polarization components of the signals of the first channel group to the first output port 21 and for multiplexing the polarized waves of the principal polarization components of the signals of the second channel group respectively outputted from the birefrigent material 632 into the fourth path $P_4$ and into the sixth path $P_6$ and outputting the multiplexed principal polarization components of the signals of the second channel group to the second output port 22.

In the interleaver 600 according to the fourth embodiment, the signal of multiple channels (channel wavelengths: $\lambda_1$, $\lambda_2$, $\lambda_3$, $\lambda_4$, $\lambda_5$, $\lambda_6$,...) received through the input port 11 is separated into the polarization component of the first orientation and the polarization component of the second orientation in the birefrigent material 631, the polarization component of the first orientation separated is outputted into the first path $P_1$, and the polarization component of the second orientation separated is outputted into the second path $P_2$. The polarization component of the first orientation outputted from the birefrigent material 631 into the first path $P_1$ arrives at the wavelength selection filter 651, and this wavelength selection filter 651 outputs the signal of the first channel group to the birefrigent material 632 while maintaining it as a polarization component of the first orientation, and converts the signal of the second channel group into the polarization component of the second orientation. The polarization component of the second orientation outputted from the birefrigent material 631 into the second path $P_2$ arrives at the wavelength selection filter 651, and this wavelength selection filter 51 outputs the signal of the first channel group to the birefrigent material 632 while maintaining it as a polarization component of the second orientation, and converts the signal of the second channel group into the polarization component of the first orientation.

Each of the signal groups having propagated through the first path $P_1$ and through the second path $P_2$, respectively, and having arrived at the birefrigent material 632 from the wavelength selection filter 651 is separated into the polarization component of the first orientation and the polarization component of the second orientation in the birefrigent material 632. Then this birefrigent material 632 outputs the signal of the first channel group (the polarization component of the first orientation) having propagated through the first path $P_1$, into the third path $P_3$, outputs the signal of the second channel group (the polarization component of the second orientation) having propagated through the first path $P_1$, into the fourth path $P_4$, outputs the signal of the first channel group (the polarization component of the second orientation) having propagated through the second path $P_2$, into the fifth path $P_5$, and outputs the signal of the second channel group (the polarization component of the first orientation) having propagated through the second path $P_2$, into the sixth path $P_6$.

All the signals of the channels outputted from the birefrigent material 632 into the third path $P_3$, into the fourth path $P_4$, into the fifth path $P_5$, and into the sixth path $P_6$ are made incident into the wavelength selection filter 652. Then this wavelength selection filter 652 converts the signal of the first channel group (the polarization component of the first orientation) having propagated through the third path $P_3$, into the polarization state the principal component of which is the polarization component of the first orientation, converts the signal of the second channel group (the polarization component of the second orientation) having propagated through the fourth path P4, into the polarization state the principal component of which is the polarization component of the second orientation, converts the signal of the first channel group (the polarization component of the second orientation) having propagated through the fifth path $P_5$, into the polarization state the principal component of which is the polarization component of the second orientation, and converts the signal of the second channel group (the polarization component of the first orientation) having propagated through the sixth path $P_6$, into the polarization state the principal component of which is the polarization component of the first orientation.

Further, the plane of polarization of each signal group arriving at the Faraday rotator 681 is rotated by 45° by the Faraday rotator 681. Then the birefrigent material 633A multiplexes the polarized waves of the principal polarization components of the signal of the first channel group having propagated through the third path $P_3$ and the signal of the first channel group having propagated through the fifth path $P_5$, and outputs the multiplexed principal polarization components of the signals of the first channel group to the first output port 21. The birefrigent material 633B multiplexes the polarized waves of the principal polarization components of the signal of the second channel group having propagated through the fourth path $P_4$ and the signal of the second channel group having propagated through the sixth path $P_6$, and outputs the multiplexed principal polarization components of the signals of the second channel group to the second output port 22. At this time, the polarized waves of the polarization components orthogonal to the principal polarization components of the signals of each channel group are not multiplexed and thus are not outputted to either of the first output port 21 and the second output port 22 to result in loss.

Fig. 27A shows the transmission spectrum of the light outputted from the first output port 21 out of the light received through the input port 11, and Fig. 27B the transmission spectrum of the light outputted from the second output port 22 out of the light received through the input port 11, in the interleaver 600 according to the fourth embodiment shown in Fig. 26. Here the channel wavelengths included in the first channel group to be outputted from the first output port 21 are 1548.0 nm, 1549.6 nm, 1551.2 nm, 1552.8 nm, and 1554.4 nm, and the channel wavelengths included in the second channel group to be outputted from the second output port 22 are 1548.8 nm, 1550.4 nm, 1552.0 nm, and 1553.6 nm.

In the interleaver 600 according to the fourth embodiment, each of the signal groups outputted from the wavelength selection filter 652 is a signal the principal polarization component of which is the polarization component of the predetermined orientation, and the birefrigent material 633A, 633B multiplexes the polarized waves of the polarization components of the predetermined orientation of the respective signals and outputs the multiplexed components to either of the first and second output ports 21, 22. On the other hand, the polarization components orthogonal to the principal polarization components of the respective signals are not outputted to either of the first output port 21 and the second output port 22 to result in loss. As a result, as shown in Fig. 27A, the transmission spectrum of the signal (the channel spacing: 200 GHz (= 1.6 nm)) arriving at the first output port 21 from the input port 11 becomes so flat that the difference between the maximum transmittance and the minimum transmittance in the predetermined wavelength range centered around each channel wavelength included in the first channel group (1548.0 nm, 1549.6 nm, 1551.2 nm, 1552.8 nm, and 1554.4 nm) falls within the range of not more than 0.4 dB, preferably, in the range of not more than 0.2 dB. Likewise, as shown in Fig. 27B, the transmission spectrum of the signal (the channel spacing: 200 GHz (= 1.6 nm)) arriving at the second output port 22 from the input port 11 becomes so flat that the difference between the maximum transmittance and the minimum transmittance in the predetermined wavelength range centered about each channel wavelength included in the second channel group (1548.8 nm, 1550.4 nm, 1552.0 nm, and 1553.6 nm) falls within the range of not more than 0.4 dB, preferably, in the range of not more than 0.2 dB. When consideration is given to the cases of the output channel spacing being narrowed to 100 GHz (= 0.8 nm) or to 50 GHz (= 0.4 nm), it is preferable that the flatness be ensured at least in the wavelength range of ±0.06 nm centered about each channel wavelength, for each of the first and second channel groups separated from each other. As seen from Figs. 27A and 27B, the crosstalk between adjacent signal channels is not more than -20 dB and the interleaver is excellent in the isolation between adjacent signal channels.

(Fifth Embodiment)

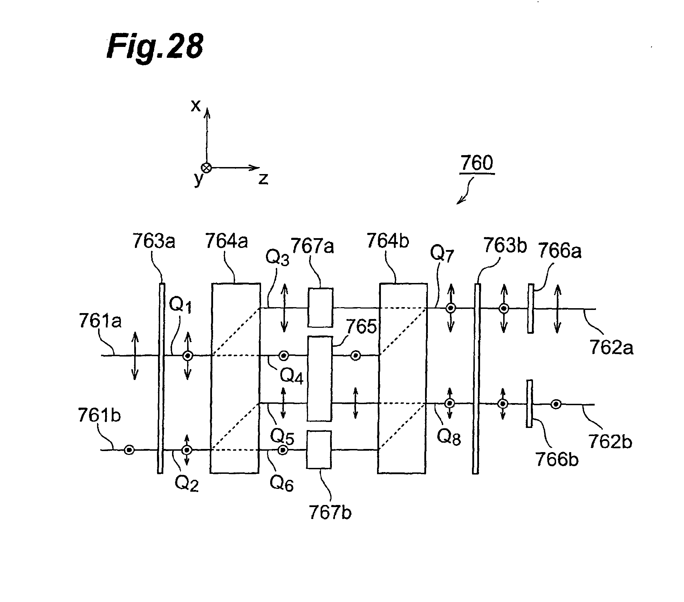

The fifth embodiment of the interleaver and others according to the present invention will be described below in detail with reference to Figs. 28 to 30, 31A to 32B, and 33. In the description of the drawings the same reference symbols will denote the same elements and redundant description will be omitted.

A filter applied to the interleaver according to the fifth embodiment will be described. Fig. 28 is an illustration showing a configuration of an embodiment of the filter 760 applied to the interleaver according to the fifth embodiment. In this Fig. 28, the illustration is based on the orthogonal coordinate system the z-axis of which is taken along the traveling direction of light. This filter 760 has an optical rotator 763a, a birefrigent material 764a, a wavelength selection filter 765, optical path length adjusting elements 767a, 767b, a birefrigent material 764b, an optical rotator 763b, and polarizers 766a, 766b arranged in the order named from input ends 761a, 761b to output ends 762a, 762b. A polarization component of the first orientation (the direction of the x-axis in the drawing) is received through the first input end 761a of the filter 760, and a polarization component of the second orientation (the direction of the y-axis in the drawing) is received through the second input end 761b.

The optical rotator (first optical rotation means) 763a rotates the plane of polarization of the polarization component of the first orientation received through the first input end 61a, by an angle $\theta$ to change it into light containing both the polarization component of the first orientation and the polarization component of the second orientation, and outputs it into a first path $Q_1$. The optical rotator 763a also rotates the plane of polarization of the polarization component of the second orientation received through the second input end 61b, by the angle $\theta$ to change it into light containing both the polarization component of the second orientation and the polarization component of the first orientation, and outputs it into a second path $Q_2$.

The birefrigent material (polarization separating means) 764a separates the light outputted from the optical rotator 763a into the first path $Q_1$ and into the second path $Q_2$, respectively, into a polarization component of the first orientation and a polarization component of the second orientation, thereafter outputs the polarization component of the first orientation having propagated through the first path $Q_1$, into a third path $Q_3$, outputs the polarization component of the second orientation having propagated through the first path $Q_1$, into a fourth path $Q_4$, outputs the polarization component of the first orientation having propagated through the second path $Q_2$, into a fifth path $Q_5$, and outputs the polarization component of the second orientation having propagated through the second path $Q_2$, into a sixth path $Q_6$.

The wavelength selection filter (wavelength selection means) 765 is placed on the fourth path $Q_4$ and on the fifth path $Q_5$, and is designed to convert the polarization component of the second orientation outputted from the birefrigent material 764a into the fourth path $Q_4$, into a polarization state the principal component of which is the polarization component of the second orientation, and to convert the polarization component of the first orientation outputted from the birefrigent material 764a into the fifth path $Q_5$, into a polarization state the principal component of which is the polarization component of the first orientation. This wavelength selection filter 765 is made of a birefrigent material having the C-axis on the xy plane (e.g., $LiNbO_2$). In this birefrigent material, let $n_o$ be the refractive index for the ordinary ray, $n_e$ be the refractive index for the extraordinary ray, and L be the thickness in the z-axis direction. When light of the wavelength. $\lambda$ travels in the z-axis direction in the birefrigent material, there occurs the phase difference $\delta$ represented by the following equation, between the ordinary ray and the extraordinary ray.

$$\delta = 2\Pi L(n_e - n_o)/\lambda$$

This phase difference $\delta$ is dependent upon the wavelength $\lambda$. The wavelength selection filter 765 makes use of the dependence of the phase difference $\delta$ on the wavelength $\lambda$. The wavelength selection filter 765 can possess the desired transmission characteristics when the thickness L is properly designed in the z-axis direction.

The optical path length adjusting element (optical path length adjusting means) 767a is placed on the third path $Q_3$ and adjusts the path length difference between the path lengths of the third path $Q_3$ and the fourth path $Q_4$ caused by the placement of the wavelength selection filter 765 on the fourth path $Q_4$. The optical path length adjusting element (optical path length adjusting means) 767b is placed on the sixth path $Q_6$ and adjusts the path length difference between the path lengths of the fifth path $Q_5$ and the sixth path $Q_6$ caused by the placement of the wavelength selection filter 765 on the fifth path $Q_5$. This configuration reduces the path length difference between the third path $Q_3$ and the fourth path $Q_4$ caused by the placement of the wavelength selection filter 765 on the fourth path $Q_4$ and also reduces the path length difference between the fifth path $Q_5$ and the sixth path $Q_6$ caused by the placement of the wavelength selection filter 765 on the fifth path $Q_5$, thus suppressing the dispersion of the light outputted from the output ends 762a, 762b.

The birefrigent material (polarized wave multiplexing means) 764b multiplexes polarized waves of the light (the polarization component of the first orientation) outputted from the optical path length adjusting element 767a into the third path $Q_3$ and the principal component (the polarization component of the second orientation) of the light outputted from the wavelength selection filter 765 into the fourth path $Q_4$, and outputs the multiplexed light into a seventh path $Q_7$. The birefrigent material 764b also multiplexes polarized waves of the principal component (the polarization component of the first orientation) of the light outputted from the wavelength selection filter 765 into the fifth path $Q_5$ and the light (the polarization component of the second orientation) outputted from the optical path length adjusting element 67b into the sixth path $Q_6$, and outputs the multiplexed light into an eighth path $Q_8$.

The optical rotator (second optical rotation means) 763b rotates the plane of polarization of the light outputted from the birefrigent material 764b into the seventh path $Q_7$ and into the eighth path $Q_8$, respectively, by an angle $-\theta$. The rotation angle $-\theta$ of the plane of polarization of the light in the optical rotator 763b and the rotation angle $+\theta$ of the plane of polarization of the light in the optical rotator 763a have different signs but an equal absolute value. The polarizer (first polarizing means) 766a transmits the polarization component of the first orientation out of the light outputted from the optical rotator 763b into the seventh path $Q_7$ and outputs it to the first output end 762a. The polarizer (second polarizing means) 766b transmits the polarization component of the second orientation out of the light outputted from the optical rotator 763b into the eighth path $Q_8$ and outputs it to the second output end 62b.

In this filter 760, the plane of polarization of the polarization component of the first orientation received through the first input end 761a is rotated by the angle $\theta$ in the optical rotator 763a, whereby the polarization component of the first orientation is changed into the light containing both the polarization component of the first orientation and the polarization component of the second orientation, which is outputted into the first path $Q_1$. Further, the light having propagated through the first path $Q_1$ is subjected to polarization separation in the birefrigent material 764a, the polarization component of the first orientation separated is outputted into the third path $Q_3$, and the polarization component of the second orientation separated is outputted into the fourth path $Q_4$. On the other hand, the plane of polarization of the polarization component of the second orientation received through the second input. end 761b is rotated by the angle $\theta$ in the optical rotator 763a, whereby the polarization component of the second orientation is changed into the light containing both the polarization component of the second orientation and the polarization component of the first orientation, which is outputted into the second path $Q_2$. Further, the light having propagated through the second path $Q_2$ is subjected to polarization separation in the birefrigent material 764a, the polarization component of the first orientation separated is outputted into the fifth path $Q_5$, and the polarization component of the second orientation separated is outputted into the sixth path $Q_6$.

Then the wavelength selection filter 765 converts the polarization component of the second orientation outputted from the birefrigent material 764a into the fourth path $Q_4$, into the polarization state the principal component of which is the polarization component of the second orientation, and converts the polarization component of first orientation outputted from the birefrigent material 764a into the fifth path $Q_5$, into the polarization state the principal component of which is the polarization component of the first orientation. Since the polarization component of the first orientation outputted from the birefrigent material 764a into the third path $Q_3$ travels through the optical path length adjusting element 767a, the path length difference is reduced between the third path $Q_3$ and the fourth path $Q_4$. On the other hand, since the polarization component of the second orientation outputted from the birefrigent material 764a into the sixth path $Q_6$ travels through the optical path length adjusting element 767b, the path length difference is reduced between the fifth path $Q_5$ and the sixth path $Q_6$.

The birefrigent material 764b multiplexes the polarized waves of the light (the polarization component of the first orientation) outputted from the optical path length adjusting element 767a into the third path $Q_3$ and the principal component (the polarization component of the second orientation) of the light outputted from the wavelength selection filter 765 into the fourth path $Q_4$, and outputs the multiplexed light into the seventh path $Q_7$. The birefrigent material 64b also multiplexes the polarized waves of the principal component (the polarization component of the first orientation) of the light outputted from the wavelength selection filter 765 into the fifth path $Q_5$ and the light (the polarization component of the second orientation) outputted from the optical path length adjusting element 767b into the sixth path $Q_6$, and outputs the multiplexed light into the eighth path $Q_8$. Then the optical rotator 763b rotates the plane of polarization of the light outputted from the birefrigent material 764b into the seventh path $Q_7$, by the angle $-\theta$, and the polarizer 766a transmits only the polarization component of the first orientation and outputs it to the first output end 62a. The optical rotator 763b rotates the plane of polarization of the light outputted from the birefrigent material 764b into the eighth path $Q_8$, by the angle $-\theta$, and the polarizer 766b transmits only the polarization component of the second orientation and outputs it to the second output end 62b.

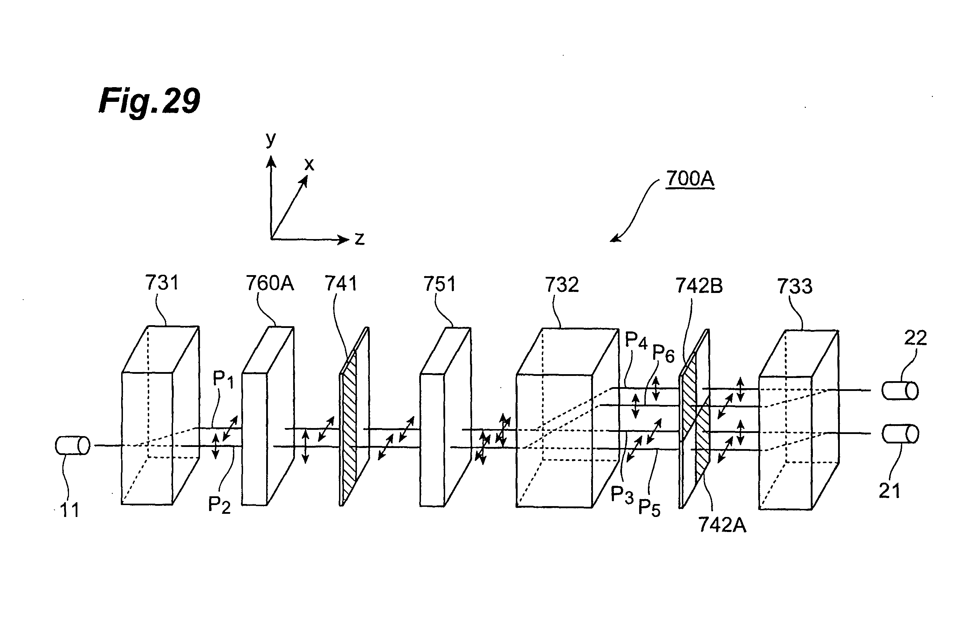

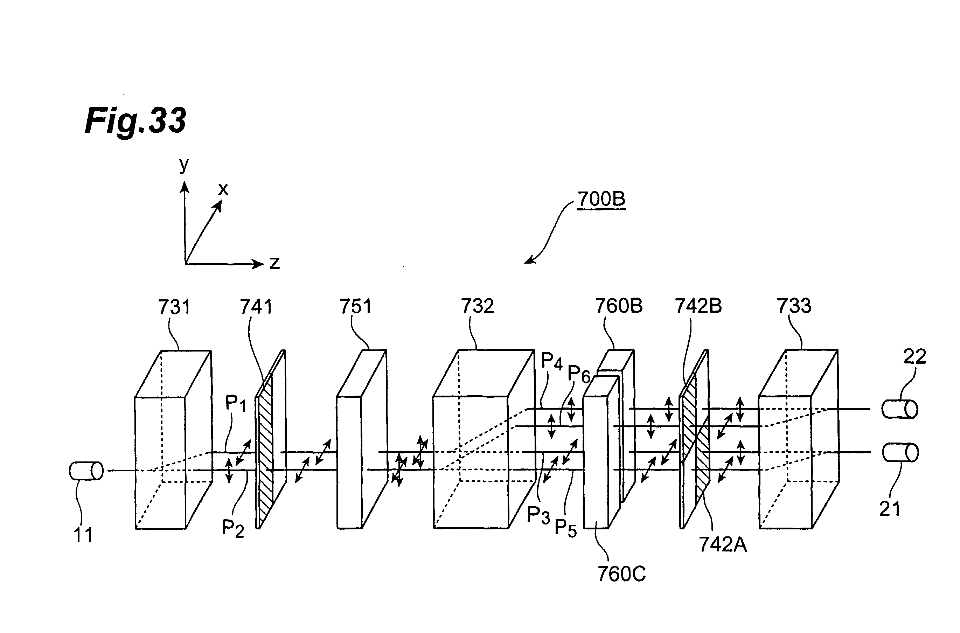

In this filter 760, the polarization component of the first orientation received through the first input end 761a is outputted to the first output end 762a while remaining as a polarization component of the first orientation. On the other hand, the polarization component of the second orientation received through the second input end 761b is outputted to the second output end 762a while remaining as a polarization component of the second orientation. Each of the transmittance of the polarization component of the first orientation traveling from the first input end 761a to the first output end 762a and the transmittance of the polarization component of the second orientation traveling from the second input end 761b to the second output end 762b is dependent upon the wavelength. As described below, this filter 760 is designed to possess such loss characteristics that the losses become maximum at the respective channel wavelengths in the signal of multiple channels received through the input port 11 in the interleaver 700A, 700B (Fig. 29 or Fig. 33) according to the fifth embodiment to which the filter is applied. Specifically, each of the following factors is properly designed: the thickness L in the z-axis direction of the wavelength selection filter 765; the rotation angle $+\theta$ of the plane of polarization of light in the optical rotator 763a; and the rotation angle $-\theta$ of the plane of polarization of light in the optical rotator 763b. Particularly, it is preferable to employ such a configuration that the rotation angle $+\theta$ of the plane of polarization of light in the optical rotator 763a is variable, the rotation angle $-\theta$ of the plane of polarization of light in the optical rotator 763b is also variable, and each of them is adjustable, thereby permitting adjustment of the maximum value of loss in the filter 760.

(First Application Example of Fifth Embodiment)

The fifth embodiment of the interleaver according to the present invention will be described below, using its specific application examples. Fig. 29 is an illustration showing a configuration of the first application example of the interleaver according to the fifth embodiment. In this Fig. 29, the illustration is based on the orthogonal coordinate system the z-axis of which is taken along the traveling direction of light. The interleaver 700A according to the first application example has a birefrigent material 731, a filter 760A, a wave plate 741, a wavelength selection filter 751, a birefrigent material 732, wave plates 742A, 742B, and a birefrigent material 733 arranged in the order named from the input port 11 to the output ports 21, 22.

The birefrigent material (first polarization separating means) 731 has the C-axis on the xz plane, separates a signal of multiple channels (channel wavelengths: $\lambda_1$, $\lambda_2$, $\lambda_3$, $\lambda_4$, $\lambda_5$, $\lambda_6$,...) received through the input port 11, into a polarization component of the first orientation (the direction of the x-axis in the drawing) and a polarization component of the second orientation (the direction of the y-axis in the drawing) orthogonal to each other, outputs the polarization component of the first orientation separated, into a first path $P_1$, and outputs the polarization component of the second orientation separated, into a second path $P_2$.

The filter 760A has a configuration similar to the configuration shown in Fig. 28 and is configured to output the polarization component of the first orientation

outputted from the birefrigent material 731 into the first path P$_1$, while maintaining it as a polarization component of the first orientation, and to output the polarization component of the second orientation outputted from the birefrigent material 731 into the second path P$_2$, while maintaining it as a polarization component of the second orientation. The transmittance of light in this filter 760A is dependent upon the wavelength, and the losses are maximum at the respective channel wavelengths in the signal of multiple channels received through the input port 11.

The wave plate 741 rotates the plane of polarization of the polarization component of the second orientation outputted from the filter 760A into the second path P$_2$, by 90° to convert it into a polarization component of the first orientation. On the other hand, the polarization component of the first orientation outputted from the filter 70A into the path P$_1$ travels without passing through the wave plate 71, and thus remains as a polarization component of the first orientation. Namely, the wave plate 71 acts as polarization plane parallelizing means for parallelizing the planes of polarization of the respective signal groups outputted from the birefrigent material 71 into the path P$_1$ and into the path P$_2$, respectively, with each other.

In each of the signal groups (the polarization components of the first orientation) having propagated from the wave plate 741 through the first path P$_1$ and through the second path P$_2$, respectively, the wavelength selection filter (wavelength selection means) 751 outputs the signal of the first channel group while maintaining it as a polarization component of the first orientation, and converts the signal of the second channel group into a polarization component of the second orientation. This wavelength selection filter 751 is made of a birefrigent material having the C-axis on the xy plane. In this birefrigent material, let n$_o$ be the refractive index for the ordinary ray, n$_e$ be the refractive index for the extraordinary ray, and L be the thickness in the z-axis direction. When light of the wavelength λ travels in the z-axis direction in the birefrigent material, there occurs the phase difference δ represented by the following equation, between the ordinary ray and the extraordinary ray.

$$\delta = 2\Pi L(n_e - n_o)/\lambda$$

This phase difference δ is dependent upon the wavelength λ. The wavelength selection filter 751 makes use of the dependence of the phase difference δ on the wavelength λ. For example, supposing the wavelength selection filter 751 is made of the birefrigent material of LiNbO$_2$ (n$_o$ = 2.2113, n$_e$ = 2.1381) and the frequency spacing of each 1.55μm-band signal is 100 GHz, the thickness L is 2.051 cm in the z-axis direction.

The birefrigent material (second polarization separating means) 732 has the C-axis on the yz plane and separates each of the signal groups respectively outputted from the wavelength selection filter 751 into the first path P$_1$ and into the second path P$_2$, into a polarization component of the first orientation and a polarization component of the second orientation. Then the birefrigent material 732 outputs the signal of the first channel group (the polarization component of the first orientation) having propagated through the first path P$_1$, into a third path P$_3$, outputs the signal of the second channel group (the polarization component of the second orientation) having propagated through the first path P$_1$, into a fourth path P$_4$, outputs the signal of the first channel group (the polarization component of the first orientation) having propagated through the second path P$_2$, into a fifth path P$_5$, and outputs the signal of the second channel group (the polarization component of the second orientation) having propagated through the second path P$_2$, into a sixth path P$_6$.

The wave plate 742A rotates the plane of polarization of the signal of the first channel group (the polarization component of the first orientation) outputted from the birefrigent material 732 into the third path P$_3$, by 90° to convert it into a polarization component of the second orientation. The wave plate 742B rotates the plane of polarization of the signal of the second channel group (the polarization component of the second orientation) outputted from the birefrigent material 732 into the sixth path P$_6$, by 90° to convert it into a polarization component of the first orientation. On the other hand, the signal of the second channel group (the polarization component of the second orientation) outputted from the birefrigent material 732 into the fourth path P$_4$ travels without passing through the wave plates 742A, 742B, and remains as a polarization component of the second orientation. The signal of the first channel group (the polarization component of the first orientation) outputted from the birefrigent material 732 into the fifth path P$_5$ travels without passing through the wave plates 742A, 742B, and remains as a polarization component of the first orientation. Namely, the wave plates 742A, 742B act as polarization plane orthogonalizing means for orthogonalizing the planes of polarization of the signals of the first channel group having propagated through the third path P$_3$ and through the fifth path P$_5$, respectively, with each other and for orthogonalizing the planes of polarization of the signals of the second channel group having propagated through the fourth path P$_4$ and through the sixth path P$_6$, respectively, with each other.

The birefrigent material (polarized wave multiplexing means) 733 has the C-axis on the xz plane, multiplexes polarized waves of the signals of the first channel group respectively having propagated through the third path P$_3$ and through the fifth path P$_5$, outputs the multiplexed signals of the first channel group to the first output port 21, multiplexes polarized waves of the signals of the second channel group respectively having propagated through the fourth path P$_4$ and through the sixth path P$_6$, and outputs the multiplexed signals of the second channel group to the second output port 22.

In the interleaver 700A according to the first application example, the signal of multiple channels ($\lambda_1$, $\lambda_2$, $\lambda_3$, $\lambda_4$, $\lambda_5$, $\lambda_6$,...) received through the input port 11 is separated into the polarization component of the first orientation and the polarization component of the second orientation in the birefrigent material 731, the polarization component of the first orientation separated is outputted into the first path $P_1$, and the polarization component of the second orientation separated is outputted into the second path $P_2$. The polarization component of the first orientation outputted from the birefrigent material 731 into the first path $P_1$ is given the loss dependent upon the wavelength in the filter 760A, and thereafter travels without passing through the wave plate 741, to reach the wavelength selection filter 751. This wavelength selection filter 751 outputs the signal of the first channel group in the arriving signal group to the birefrigent material 732 while maintaining it as a polarization component of the first orientation, and converts the signal of the second channel group into the polarization component of the second orientation. The polarization component of the second orientation outputted from the birefrigent material 731 into the second path $P_2$ is given the loss dependent upon the wavelength in the filter 760A, and thereafter it is converted into the polarization component of the first orientation in the wave plate 741. Thereafter, the wavelength selection filter 751 converts the signal of the first channel group into the polarization component of the first orientation, and outputs the signal of the second channel group to the birefrigent material 732 while maintaining it as a polarization component of the second orientation.

Each of the signal groups having propagated through the first path $P_1$ and through the second path $P_2$, respectively, and having arrived at the birefrigent material 732 from the wavelength selection filter 751 is separated into the polarization component of the first orientation and the polarization component of the second orientation in the birefrigent material 732. Then the birefrigent material 732 outputs the signal of the first channel group (the polarization component of the first orientation) having propagated through the first path $P_1$, into the third path $P_3$, outputs the signal of the second channel group (the polarization component of the second orientation) having propagated through the first path $P_1$, into the fourth path $P_4$, outputs the signal of the first channel group (the polarization component of the first orientation) having propagated through the second path $P_2$, into the fifth path $P_5$, and outputs the signal of the second channel group (the polarization component of the second orientation) having propagated through the second path $P_2$, into the sixth path $P_6$.

The signal of the first channel group (the polarization component of the first orientation) outputted from the birefrigent material 732 into the third path $P_3$ is converted into the polarization component of the second orientation in the wave plate 742A. The signal of the second channel group (the polarization component of the second orientation) outputted from the birefrigent material 732 into the fourth path $P_4$ travels without passing through the wave plates 742A, 742B, and remains as a polarization component of the second orientation. The signal of the first channel group (the polarization component of the first orientation) outputted from the birefrigent material 732 into the fifth path $P_5$ travels without passing through the wave plates 742A, 742B, and remains as a polarization component of the first orientation. The signal of the second channel group (the polarization component of the second orientation) outputted from the birefrigent material 732 into the sixth path $P_6$ is converted into the polarization component of the first orientation in the wave plate 742B.

Then the birefrigent material 733 multiplexes the polarized waves of the signal of the first channel group (the polarization component of the second orientation) having propagated through the third path $P_3$ and the signal of the first channel group (the polarization component of the first orientation) having propagated through the fifth path $P_5$, and outputs the multiplexed signals to the first output port 21. The birefrigent material 733 also multiplexes the polarized waves of the signal of the second channel group (the polarization component of the second orientation) having propagated through the fourth path $P_4$ and the signal of the second channel group (the polarization component of the first orientation) having propagated through the sixth path $P_6$, and outputs the multiplexed signals to the second output port 22.

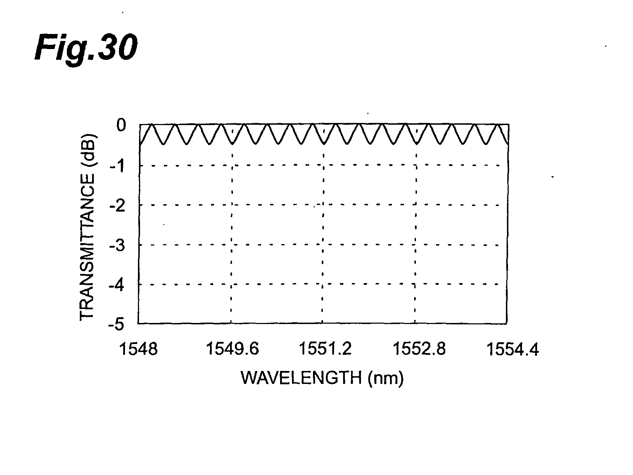

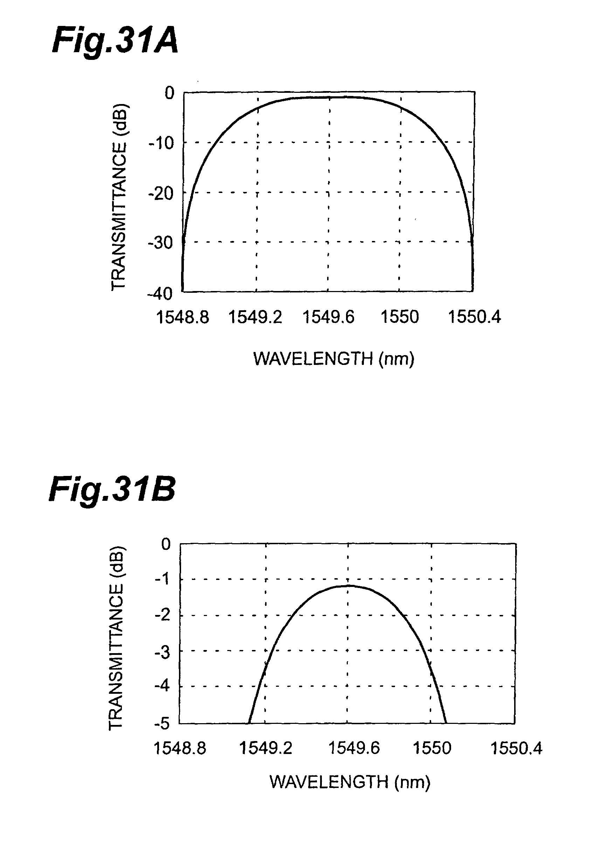

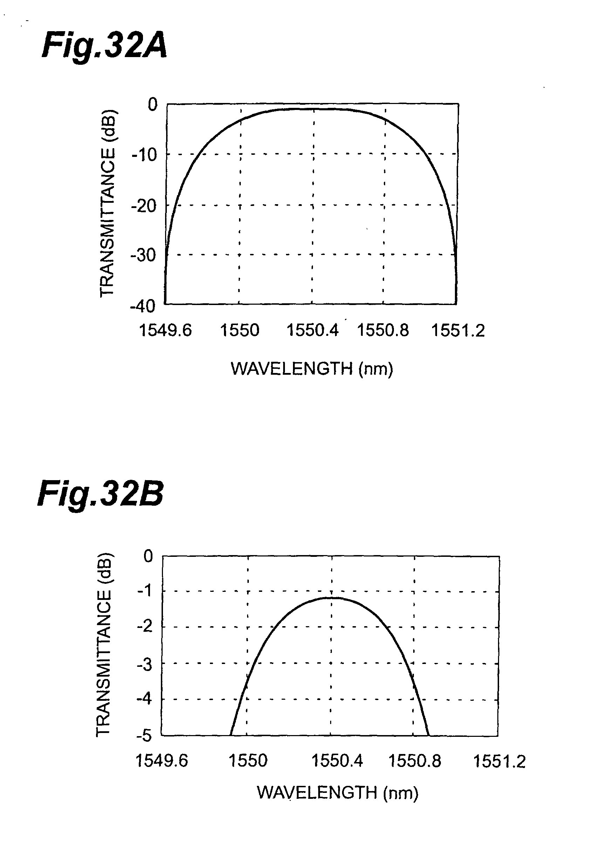

Fig. 30 is the transmission spectrum of the filter 760A applied to the interleaver 700A (Fig. 29) according to the above-stated first application example. Fig. 31A shows the transmission spectrum of the light outputted from the first output port 21 out of the light received through the input port 11, in the interleaver 700A according to the first application example shown in Fig. 29, and Fig. 31B an enlargement of the transmission spectrum shown in Fig. 31A. Fig. 32A shows the transmission spectrum of the light outputted from the second output port 22 out of the light received through the input port 11, in the interleaver 700A according to the first application example shown in Fig. 29, and Fig. 32B an enlargement of the transmission spectrum shown in Fig. 32A. Here the channel wavelengths included in the first channel group to be outputted from the first output port 21 are 1548.0 nm, 1549.6 nm, 1551.2 nm, 1552.8 nm, and 1554.4 nm, and the channel wavelengths included in the second channel group to be outputted from the second output port 22 are 1548.8 nm, 1550.4 nm, 1552.0 nm, and 1553.6 nm. The rotation angle $\theta$ of the plane of polarization of the light in the optical rotator 763a in the filter 760A is 15°, and the rotation angle $-\theta$ of the plane of polarization of the light in the optical rotator 763b is -15°.

As shown in Fig. 30, the transmission spectrum of the filter 760A has the maximum loss (about 0.5 dB) at each of the channel wavelengths included in the first channel group (1548.0 nm, 1549.6 nm, 1551.2 nm, 1552.8 nm, and 1554.4 nm) and the channel wavelengths included in the second channel group (1548.8 nm, 1550.4 nm, 1552.0 nm, and 1553.6 nm). The transmission spectrum of the filter 760A also has the maximum loss (about 0.5 dB) at each of intermediate wavelengths between adjacent channel wavelengths among these channel wavelengths. As a result, as shown in Figs. 31A and 31B, the transmission spectrum of the signal (the channel spacing: 200 GHz (= 1.6 nm)) arriving at the first output port 21 from the input port 11 becomes flat near the channel wavelength of 1549.6 nm included in the first channel group. Likewise, as shown in Figs. 32A and 32B, the transmission spectrum of the signal (the channel spacing: 200 GHz) arriving at the second output port 22 from the input port 11 has flat transmittance near the channel wavelength of 1550.4 nm included in the second channel group. When consideration is given to the cases of the output channel spacing being narrowed to 100 GHz (= 0.8 nm) or to 50 GHz (= 0.4 nm), it is preferable that the flatness be ensured at least in the wavelength range of ±0.06 nm centered about each channel wavelength, for each of the first and second channel groups separated from each other. As seen from Figs. 31A to 32B, the isolation between adjacent signal channels is excellent (the crosstalk between adjacent signal channels is not more than -40 dB).

(Second Application Example of Fifth Embodiment)

The second application example of the interleaver according to the fifth embodiment will be described below. Fig. 33 is an illustration showing a configuration of the interleaver 700B according to the second application example. This interleaver 700B is different from the interleaver 700A (Fig. 29) according to the first application example in that the filter 760A is replaced by a filter 760B and a filter 760C.

Each of the filter 760B and the filter 760C has a configuration similar to that shown in Fig. 28 and is placed between the birefrigent material 732 and the wave plates 742A, 742B. The filter 760B outputs the signal of the first channel group (the polarization component of the first orientation) propagating in the third path $P_3$, while maintaining it as a polarization component of the first orientation, and outputs the signal of the second channel group (the polarization component of the second orientation) propagating in the fourth path $P_4$, while maintaining it as a polarization component of the second orientation. The filter 760C outputs the signal of the first channel group (the polarization component of the first orientation) propagating in the fifth path $P_5$, while maintaining it as a polarization component of- the first orientation, and outputs the signal of the second channel group (the polarization component of the second orientation) propagating in the sixth path $P_6$, while maintaining it as a polarization component of the second orientation. The transmittance of light in these filters 760B, 760C is dependent upon the wavelength, and the losses become maximum at the respective wavelengths (channel wavelengths) in the signal of multiple channels received through the input port 11.

The interleaver 700B according to the second application example also operates in much the same manner as the interleaver 700B according to the first application example, and is different only in the position where the light is given the loss in the filters 760B, 760C. It is also similar to the first application example in each of the transmission spectrum of the signal arriving at the first output port 21 from the first input port 11 and the transmission spectrum of the signal arriving at the second output port 22 from the input port 11.

(Modification Examples)

The fifth embodiment is not limited to the above configurations, but a variety of modifications can be applied thereto. For example, the two filters 760B, 760C were placed between the birefrigent material 732 and the wave plates 742A, 742B in the second application example, but only either one of them may be placed there.

The position of the filters having the structure shown in Fig. 28 in the interleaver is not limited to those in the foregoing first and second application examples, but the filters may be placed between the wave plates 742A, 742B and the birefrigent material 733. In this case, the filter placed on the third path $P_3$ and on the fifth path $P_5$ outputs the signal of the first channel group (the polarization component of the second orientation) propagating in the third path $P_3$, while maintaining it as a polarization component of the second orientation, and outputs the signal of the first channel group (the polarization component of the first orientation) propagating in the fifth path $P_5$, while maintaining it as a polarization component of the first orientation. The filter placed on the fourth path $P_4$ and on the sixth path $P_6$ outputs the signal of the second channel group (the polarization component of the second orientation) propagating in the fourth path $P_4$, while maintaining it as a polarization component of the second orientation, and outputs the signal of the second channel group (the polarization component of the first orientation) propagating in the sixth path $P_6$, while maintaining it as a polarization component of the first orientation.

It is apparent from the above description of the present invention that the present invention can be modified in various ways. It is to be understood that such modifications can be made without departing from the spirit and scope of the present invention and all improvements obvious to those skilled in the art are embraced in the scope of claims which follow.

**Industrial Applicability**

According to the present invention as described above, the transmission spectrum of the signal traveling from the input port to each output port has the flat transmittance near each channel wavelength and demonstrates the excellent isolation between adjacent signal channels, so that the interleaver is obtained with superior wavelength separation characteristics.

**Claims**

1. An interleaver for separating a signal of multiple-channels into a signal of a first channel group and a signal of a second channel group, comprising:

   an input port for receiving said signal of multiple channels;
   a first output port for outputting said signal of the first channel group; and
   a second output port for outputting said signal of the second channel group,

   wherein each of transmission spectra of output light from the first output port and output light from the second output port has such flatness that a difference between a maximum transmittance and a minimum transmittance in a wavelength range of ±0.06 nm centered about each signal channel wavelength falls within 0.4 dB and in each of said transmission spectra, crosstalk between adjacent channels is controlled to -20 dB or less.

2. An interleaver according to claim 1, wherein each of the transmission spectra of the output light from said first output port and the output light from the second output port has such flatness that the difference between the maximum transmittance and the minimum transmittance in the wavelength range of ±0.06 nm centered around each signal channel wavelength falls within 0.2 dB.

3. An interleaver according to claim 1, wherein in each of the transmission spectra of the output light from said first output port and the output light from the second output port, the crosstalk between adjacent channels is controlled to -30 dB or less.

4. An interleaver according to Claim 1, further comprising:

   first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;
   polarization plane parallelizing means for parallelizing a plane of polarization of the signal group outputted from said first polarization separating means into said first path, with a plane of polarization of the signal group outputted from said first polarization separating means into said second path;
   wavelength selection means for outputting the signal of the first channel group out of the signal group outputted from said polarization plane parallelizing means into said first, path, as the polarization component of the first orientation into the first path and outputting the signal of the second channel group out of said signal group outputted from said polarization plane parallelizing means into said first path, as the polarization component of the second orientation into the first path, and for outputting the signal of the first channel group out of the signal group outputted from said polarization plane parallelizing means into said second path, as the polarization component of the first orientation into the second path and outputting the signal of the second channel group out of the signal group outputted from said polarization plane parallelizing means into said second path, as the polarization component of the second orientation into the second path;
   second polarization separating means for separating the signal group outputted from said wavelength selection means into said first path, into the polarization components of said first orientation and second orientation, thereafter outputting the signal of the first channel group corresponding to said polarization component of the first orientation into a third path, and outputting the signal of the second channel group corresponding to said polarization component of the second orientation into a fourth path, and for separating the signal group outputted from said wavelength selection means into said second path, into the polarization components of said first orientation and said second orientation, thereafter outputting the signal of the first channel group corresponding to said polarization component of the first orientation into a fifth path, and outputting the signal of the second channel group corresponding to said polarization component of the second orientation into a sixth path;
   polarization plane orthogonalizing means for orthogonalizing a plane of polarization of said signal of the first channel group outputted from said second polarization separating means into said third path, with a plane of polarization of said signal of the first channel group outputted from said second polarization separating means into said fifth path, and for orthogonalizing a plane of polarization of said signal of the second channel group outputted from said second polarization separating means into said fourth path, with a plane of polarization of said signal of the second channel group outputted from said second polarization separating means into said sixth path;

polarized wave multiplexing means for multiplexing polarized waves of said signal of the first channel group outputted from said polarization plane orthogonalizing means into said third path and said signal of the first channel group outputted from said polarization plane orthogonalizing means into said fifth path and outputting the multiplexed signals of the first channel group to said first output port, and for multiplexing polarized waves of said signal of the second channel group outputted from said polarization plane orthogonalizing means into said fourth path and said signal of the second channel group outputted from said polarization plane orthogonalizing means into said sixth path and outputting the multiplexed signals of the second channel group to said second output port; and

an etalon filter having such loss characteristics that a loss becomes maximum at each channel wavelength in said signal of the multiple channels, for providing the loss to one of the signal groups respectively propagating in the third path and in the fourth path and the signal group propagating in said first path and for providing the loss to one of the signal groups respectively propagating in said fifth path and in said sixth path and the signal group propagating in said second path.

5. An interleaver according to claim 1, further comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;

polarization plane parallelizing means for parallelizing a plane of polarization of the signal group outputted from said first polarization separating means into said first path, with a plane of polarization of the signal group outputted from said first polarization separating means in-

to said second path;

wavelength selection means for outputting the signal of the first channel group out of the signal group outputted from said polarization plane parallelizing means into said first path, as the polarization component of the first orientation into the first path and outputting the signal of the second channel group out of said signal group outputted from said polarization plane parallelizing means into said first path, as the polarization component of the second orientation into the first path, and for outputting the signal of the first channel group out of the signal group outputted from said polarization plane parallelizing means into said second path, as the polarization component of the first orientation into the second path and outputting the signal of the second channel group out of the signal group outputted from said polarization plane parallelizing means into said second path, as the polarization component of the second orientation into the second path;

second polarization separating means for separating the signal group outputted from said wavelength selection means into said first path, into the polarization components of said first orientation and second orientation, thereafter outputting the signal of the first channel group corresponding to said polarization component of the first orientation into a third path, and outputting the signal of the second channel group corresponding to said polarization component of the second orientation into a fourth path, and for separating the signal group outputted from said wavelength selection means into said second path, into the polarization components of said first orientation and said second orientation, thereafter outputting the signal of the first channel group corresponding to said polarization component of the first orientation, into a fifth path, and outputting the signal of the second channel group corresponding to said polarization component of the second orientation into a sixth path;

polarization plane orthogonalizing means for orthogonalizing a plane of polarization of said signal of the first channel group outputted from said second polarization separating means into said third path, with a plane of polarization of said signal of the first channel group outputted from said second polarization separating means into said fifth path, and for orthogonalizing a plane of polarization of said signal of the second channel group outputted from said second polarization separating means into said fourth path, with a plane of polarization of said signal of the second channel group outputted from said second polarization separating means into said sixth path;

polarized wave multiplexing means for multiplexing polarized waves of said signal of the first channel group outputted from said polarization plane orthogonalizing means into said third path and said signal of the first channel group outputted from said polarization plane orthogonalizing means into said fifth path and outputting the multiplexed signals of the first channel group to said first output port, and for multiplexing polarized waves of said signal of the second channel group outputted from said polarization plane orthogonalizing means into said fourth path and said signal of the second channel group outputted from said polarization plane orthogonalizing means into said sixth path and outputting the multiplexed signals of the second channel group to said second output port; and

an etalon filter having such loss characteristics that a loss becomes maximum at each channel wavelength in said signal of the multiple channels, for providing the loss to either one of the signal group propagating in said first path and the signal group propagating in said second path or for providing the loss to either one of the signal group propagating in said third path and the signal group propagating in said fifth path and to either one of the signal group propagating in said fourth path and the signal group propagating in said sixth path.

6. An interleaver according to claim 5, further comprising:

optical path length adjusting means for adjusting a path length difference between path lengths of said third path and said fifth path caused by said etalon filter and for adjusting a path length difference between path lengths of said fourth path and said sixth path caused by said etalon filter.

7. An interleaver according to claim 1, further comprising:

first polarization separating means for separating, said signal of the multiple channels received through said input port, into polarization components of a first orientation and a second orientation orthogonal to each other, for outputting the polarization component of the first orientation separated, into a first path, and for outputting the polarization component of the second orientation separated, into a second path;

wavelength selection means for outputting the signal of the first channel group out of the signal group outputted from said polarization separating means into said first path, while maintaining the signal of the first channel group as the polarization component of the first orientation, and converting the signal of the second channel group out of the signal group outputted from said polarization separating means into said first path, into a polarization component of the second orientation to output said signal of the second channel group, and for outputting the signal of the first channel group out of the signal group outputted from said polarization separating means into said second path, while maintaining the signal of the first channel group as the polarization component of the second orientation, and converting the signal of the second channel group out of the signal group outputted from said polarization separating means into said second path, into a polarization component of the first orientation to output said signal of the second channel group;

second polarization separating means for separating the signal group outputted from said wavelength selection means into said first path, into the polarization components of said first orientation and second orientation, thereafter outputting the signal of the first channel group corresponding to said polarization component of the first orientation into a third path, and outputting the signal of the second channel group corresponding to said polarization component of the second orientation into a fourth path, and for separating the signal group outputted from said wavelength selection means into said second path, into the polarization components of said first orientation and said second orientation, thereafter outputting the signal of the first channel group corresponding to said polarization component of the first orientation into a fifth path, and outputting the signal of the second channel group corresponding to said polarization component of the second orientation into a sixth path;

polarized wave multiplexing means for multiplexing polarized waves of said signal of the first channel group outputted from said second polarization separating means into said third path and said signal of the first channel group outputted from said second polarization separating means into said fifth path and outputting the multiplexed signals of the first channel group to said first output port, and for multiplexing polarized waves of said signal of the second channel group outputted from said second polarization separating means into said fourth path and said signal of the second channel group outputted from said second polarization separating means into said sixth path and outputting the multiplexed signals of the second channel group to said second output port; and an etalon filter having such loss characteristics that a loss becomes maximum at each channel wavelength in said signal of the multiple channels, for providing the loss to one of the signal groups respectively propagating in said third path and in said fourth path and the signal group propagating in said first path and for providing the loss to one of the signal groups respectively propagating in said fifth path and in said sixth path and the signal group propagating in said second path.

8. An interleaver according to claim 1, further comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path; wavelength selection means for outputting the signal of the first channel group out of the signal group outputted from said polarization separating means into said first path, while maintaining the signal of the first channel group as the polarization component of the first orientation, and converting the signal of the second channel group out of the signal group outputted from said polarization separating means into said first path, into a polarization component of the second orientation to output said signal of the second channel group, and for outputting the signal of the first channel group out of the signal group outputted from said polarization separating means into said second path, while maintaining the signal of the first channel group as the polarization component of the second orientation, and converting the signal of the second channel group out of the signal group outputted from said polarization separating means into said second path, into a polarization component of the first orientation to output said signal of the second channel group; second polarization separating means for separating the signal group outputted from said wavelength selection means into said first path, into the polarization components of said first orientation and second orientation, thereafter outputting the signal of the first channel group corresponding to said polarization component of the first orientation into a third path, and outputting the signal of the second channel group corresponding to said polarization component of the second orientation into a fourth path, and for separating the signal group outputted from said wavelength selection means into said second path, into the polarization components of said first orientation and said second orientation, thereafter outputting the signal of the first channel group corresponding to said polarization component of the first orientation into a fifth path, and outputting the signal of the second channel group corresponding to said polarization component of the second orientation into a sixth path; polarized wave multiplexing means for multiplexing polarized waves of said signal of the first channel group outputted from said second polarization separating means into said third path and said signal of the first channel group outputted from said second polarization separating means into said fifth path and outputting the multiplexed signals of the first channel group to said first output port, and for multiplexing polarized waves of said signal of the second channel group outputted from said second polarization separating means into said fourth path and said signal of the second channel group outputted from said second polarization separating means into said sixth path and outputting the multiplexed signals of the second channel group to said second output port; and an etalon filter having such loss characteristics that a loss becomes maximum at each channel wavelength in said signal of the multiple channels, for providing the loss to either one of the signal group propagating in said first path and the signal group propagating in said second path or for providing the loss to either one of the signal group propagating in said third path and the signal group propagating in said fifth path and to either one of the signal group propagating in said fourth path and the signal group propagating in said sixth path.

9. An interleaver according to claim 8, further comprising:

optical path length adjusting means for adjusting a path length difference between path lengths of said third path and said fifth path caused by said etalon filter and for adjusting a path length difference between path lengths of said fourth path and said sixth path caused by said etalon filter.

10. An interleaver according to claim 1, further comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;

polarization plane parallelizing means for parallelizing a plane of polarization of the signal group outputted from said first polarization separating means into said first path, with a plane of polarization of the signal group outputted from said first polarization separating means into said second path;

a filter for converting the signal of the first channel group out of the signal group outputted from said polarization plane parallelizing means into said first path, into a polarization state a principal component of which is the polarization component of the first orientation, to output said signal of the first channel group into a third path, and converting said signal of the second channel group out of the signal group outputted from said polarization plane parallelizing means into said first path, into a polarization state a principal component of which is the polarization component of the second orientation, to output said signal of the second channel group into a fourth path, and for converting said signal of the first channel group out of the signal group outputted from said polarization plane parallelizing means into said second path, into a polarization state a principal component of which is the polarization component of the first orientation, to output said signal of the first channel group into a fifth path, and converting the signal of the second channel group out of the signal group outputted from said polarization plane parallelizing means into said second path, into a polarization state a principal component of which is the polarization component of the second orientation, to output said signal of the second channel group into a sixth path;

polarization plane orthogonalizing means for orthogonalizing a plane of polarization of the principal polarization component of said signal of the first channel group outputted from said filter into said third path, with a plane of polarization of the principal polarization component of said signal of the first channel group outputted from said filter into said fifth path, and for orthogonalizing a plane of polarization of the principal polarization component of said signal of the second channel group outputted from said filter into said fourth path, with a plane of polarization of the principal polarization component of said signal of the second channel group outputted from said filter into said sixth path;

and

polarized wave multiplexing means for multiplexing polarized waves of the principal polarization component of said signal of the first channel group outputted from said polarization plane orthogonalizing means into said third path and the principal polarization component of said signal of the first channel group outputted from said polarization plane orthogonalizing means into said fifth path and outputting a group of said multiplexed signals to said first output port, and for multiplexing polarized waves of the principal polarization component of said signal of the second channel group outputted from said polarization plane orthogonalizing means into said fourth path and the principal polarization component of said signal of the second channel group outputted from said polarization plane orthogonalizing means into said sixth path and outputting a group of said multiplexed signals to said second output port.

11. A filter applied to an interleaver according to claim 10, comprising:

first wavelength selection means for outputting one of said signals of the first channel group and second channel group arriving as the polarization component of the first orientation, while maintaining said signal as the polarization component of the first orientation, and for converting the other signal into a polarization component of the second orientation to output said other signal as the polarization component of the second orientation;

second polarization separating means for separating the signal group outputted from said first wavelength selection means, into the signal of the first channel group and the signal of the second channel group and outputting said signal of the first channel group and said signal of the second channel group into their respective paths different from each other; and

second wavelength selection means for converting a signal of one channel group outputted as the polarization component of the first orientation from said second polarization separating means, into a polarization state a principal component of which is the polarization component of the first orientation, and outputting said signal, and for converting a signal of the other channel group outputted as the polarization component of the second orientation from said second polarization separating means, into a polarization state a principal component of which is the polarization component of the second orientation, and outputting said signal.

**12.** A filter according to claim 11,

wherein said first wavelength selection means outputs each of said polarization component of the first orientation and said polarization component of the second orientation at a predetermined wavelength interval; and

wherein said second wavelength selection means reverses each of said polarization component of the first orientation and said polarization component of the second orientation into a reverse orientation at a wavelength interval equal to half of said predetermined wavelength interval.

**13.** A filter according to claim 11, wherein a polarization split ratio between said polarization component of the first orientation and said polarization component of the second orientation in said second wavelength selection means is neither 1:0 nor 0:1.

**14.** An interleaver. according to claim 1, further comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;

polarization plane parallelizing means for parallelizing a plane of polarization of the signal group outputted from said first polarization separating means into said first path, with a plane of polarization of the signal group outputted from said first polarization separating means into said second path so as to match said planes of polarization with said first orientation;

a filter for converting one of said signal of the first channel group outputted from said polarization plane parallelizing means into said first path and said signal of the first channel group outputted from said polarization plane parallelizing means into said second path, into a polarization state a principal component of which is the polarization component of the first orientation, to output said converted signal into a third path, and outputting the other signal into a fifth path while maintaining said other signal as the polarization component of the first orientation, and for converting one of said signal of the second channel group outputted from said polarization plane parallelizing means into said first path and said signal of the second channel group outputted from said polarization plane parallelizing means into said second path, into a polarization state a principal component of which is the polarization component of the second orientation, to output said converted signal into a fourth path, and converting the other signal into a polarization component of the second orientation to output said other signal into a sixth path;

polarization plane orthogonalizing means for orthogonalizing a plane of polarization of the principal polarization component of said signal of the first channel group outputted from said filter into said third path, with a plane of polarization of the principal polarization component of said signal of the first channel group outputted from said filter into said fifth path, and for orthogonalizing a plane of polarization of the principal polarization component of said signal of the second channel group outputted from said filter into said fourth path, with a plane of polarization of the principal polarization component of said signal of the second channel group outputted from said filter into said sixth path;

polarized wave multiplexing means for multiplexing polarized waves of the principal polarization component of said signal of the first channel group outputted from said polarization plane orthogonalizing means into said third path and the principal polarization component of said signal of the first channel group outputted from said polarization plane orthogonalizing means into said fifth path and outputting said multiplexed signals of the first channel group to said first output port, and for multiplexing polarized waves of the principal polarization component of said signal of the second channel group outputted from said polarization plane orthogonalizing means into said fourth path and the principal polarization component of said signal of the second channel group outputted from said polarization plane orthogonalizing means into said sixth path and outputting said multiplexed signals of the second channel group to said second output port.

**15.** A filter applied to an interleaver according to claim 14, comprising:

first wavelength selection means for outputting the signal of the first channel group out of a signal group arriving through said first path, while maintaining the signal as the polarization component of the first orientation, and converting the signal of the second channel group out of said arriving signal group into a polarization component of the second orientation, and for outputting the signal of the first channel group out of a signal group arriving through said second path, while maintaining said signal as the polarization component of the first orientation, and converting the signal of the second channel group out of said arriving signal group into a polarization component of the second orientation; second polarization separating means for separating polarized waves of said signal of the first channel group and said signal of the second channel group outputted from said first wavelength selection means into said first path, from each other, thereafter outputting said signal of the first channel group corresponding to said polarization component of the first orientation into a third path, and outputting said signal of the second channel group corresponding to said polarization component of the second orientation into a fourth path, and for separating polarized waves of said signal of the first channel group and said signal of the second channel group outputted from said first wavelength selection means into said second path, from each other, thereafter outputting said signal of the first channel group corresponding to said first polarization component into a fifth path, and outputting said signal of the second channel group corresponding to said polarization component of the second orientation into a sixth path; and second wavelength selection means for converting one of said signals of the first channel group outputted from said second polarization separating means into said third path and into said fifth path, into a polarization state a principal component of which is the polarization component of the first orientation, and for converting one of said signals of the second channel group outputted from said second polarization separating means into said fourth path and into said sixth path, into a polarization state a principal component of which is the polarization component of the second orientation.

16. A filter according to claim 15, further comprising:

    third wavelength selection means for outputting the signal of the first channel group propagating in a path without said second wavelength selection means out of said third path and said fifth path, as the polarization component of the first orientation.

17. A filter according to claim 15, further comprising:

    fourth wavelength selection means for outputting the signal of the second channel group propagating in a path without said second wavelength selection means out of said fourth path and said sixth path, as the polarization component of the second orientation.

18. A filter according to claim 15, further comprising:

    optical path length adjusting means for adjusting a path length difference between path lengths of said third path and said fifth path and for adjusting a path length difference between path lengths of said fourth path and said sixth path.

19. A filter according to claim 15,

    wherein said first wavelength selection means outputs said polarization component of the first orientation and said polarization component of the second orientation at a predetermined wavelength interval; and
    wherein said second wavelength selection means reverses each of said polarization component of the first orientation and said polarization component of the second orientation into a reverse orientation at a wavelength interval equal to half of said predetermined wavelength interval.

20. A filter according to claim 15, wherein a polarization split ratio between said polarization component of the first orientation and said polarization component of the second orientation in said second wavelength selection means is neither 1:0 nor 0:1.

21. A filter according to claim 16, wherein said third wavelength selection means has the same transmission characteristics as said first wavelength selection means does.

22. A filter according to claim 17, wherein said fourth wavelength selection means has transmission characteristics reverse to those of said first wavelength selection means, for each of said polarization component of the first orientation and said polarization component of the second orientation.

23. A filter according to claim 16, wherein said second wavelength selection means and said third wavelength selection means are integrated into one.

24. A filter according to claim 17, wherein said second wavelength selection means and said fourth wavelength selection means are integrated into one.

25. A filter according to claim 15, further comprising:

    third wavelength selection means for outputting the signal of the first channel group propagating in a path without said second wavelength selection means out of said third path and said fifth path, as the polarization component of the first orientation; and
    fourth wavelength selection means for outputting the signal of the second channel group propagating in a path without said second wavelength selection means out of said fourth path and said sixth path, as the polarization component of the second orientation,

wherein said third wavelength selection means and said fourth wavelength selection means are integrated into one.

26. A filter according to claim 25, wherein said second wavelength selection means, said third wavelength selection means, and said fourth wavelength selection means are integrated into one.

27. An interleaver system comprising:

splitting means for splitting a signal of multiple channels into two signal groups;
a first interleaver having the same structure as the interleaver as set forth in Claim 14, for separating one of said signal groups split by said splitting means, into a signal of a first channel group and a signal of a second channel group;
a second interleaver having the same structure as the interleaver as set forth in Claim 14, for separating the other of said signal groups split by said splitting means, into a signal of the first channel group and a signal of the second channel group; and
multiplexing means for multiplexing said signal of the first channel group outputted from said first interleaver and said signal of the first channel group outputted from said second interleaver, and for multiplexing said signal of the second channel group outputted from said first interleaver and said signal of the second channel group outputted from said second interleaver,

wherein a path in said first interleaver where said second wavelength selection means is provided is different from a path in said second interleaver where said second wavelength selection means is provided.

28. An interleaver according to claim 1, further comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;
first wavelength selection means for outputting the signal of the first channel group outputted from said first polarization separating means into said first path, while maintaining said signal as the polarization component of the first orientation, and converting the signal of the second channel group outputted from said first polarization separating means into said first path, into a polarization component of the second orientation, and for outputting the signal of the first channel group outputted from said first polarization separating means into said second path, while maintaining said signal as the polarization component of the second orientation, and converting the signal of the second channel group outputted from said first polarization separating means into said second path, into a polarization component of the first orientation;
second polarization separating means for outputting said signal of the first channel group corresponding to said polarization component of the first orientation outputted from said first wavelength selection means into said first path, into a third path, and outputting said signal of the second channel group corresponding to said polarization component of the second orientation into a fourth path, and for outputting said signal of the first channel group corresponding to said polarization component of the second orientation outputted from said first wavelength selection means into said second path, into a fifth path, and outputting said signal of the second channel group corresponding to said polarization component of the second orientation outputted from said first wavelength selection means into said second path, into a sixth path;
second wavelength selection means for converting each of the signals of the channel groups outputted as the polarization components of the first orientation from said second polarization separating means, into a polarization state a principal component of which is the polarization component of the first orientation and for converting each of the signals of the channel groups outputted as the polarization components of the second orientation from said second polarization separating means, into a polarization state a principal component of which is the polarization component of the second orientation; and
polarized wave multiplexing means for multiplexing polarized waves of the principal polarization component of said signal of the first channel outputted from said second wavelength selection means into said third path and the principal polarization component of said signal of the first channel- group outputted from said second wavelength selection means into said fifth path, and outputting the multiplexed principal polarization components of the signals of the first channel group to said first output port, and for multiplexing polarized waves of the principal polarization component of said signal of the second channel group outputted from said second wavelength selection means into said fourth path and the principal polarization component of said signal of the second channel group outputted from said second wavelength selection means into said sixth path, and outputting the multiplexed principal polarization components of the signals of the second channel group to said second output port.

29. An interleaver according to claim 28,
wherein said first wavelength selection means outputs each of said polarization component of the first orientation and said polarization component of the second orientation at a predetermined wavelength interval; and
wherein said second wavelength selection means reverses each of said polarization component of the first orientation and said polarization component of the second orientation into a reverse orientation at a wavelength interval equal to half of said predetermined wavelength interval.

30. A filter according to claim 28, wherein a polarization split ratio between said polarization component of the first orientation and said polarization component of the second orientation in said second wavelength selection means is neither 1:0 nor 0:1.

31. An interleaver according to claim 1, further comprising:

first polarization separating, means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;
polarization plane parallelizing means for parallelizing a plane of polarization of the signal group outputted from said first polarization separating means into said first path, with a plane of polarization of the signal group outputted from said first polarization separating means into said second path;
first wavelength selection means for outputting the signal of the first channel group out of the signal group outputted from said polarization plane parallelizing means into said first path, as the polarization component of the first orientation into the first path, and outputting said signal of the second channel group out of said signal group outputted from said polarization plane parallelizing means into said first path, as the polarization component of the second orientation into the first path, and for outputting said signal of the first channel group out of the signal group outputted from said polarization plane parallelizing means into said second path, as the polarization component of the first orientation into the second path, and outputting said signal of the second channel group out of the signal group outputted from said polarization plane parallelizing means into said second path, as the polarization component of the second orientation into the second path;
second polarization separating means for separating the signal group outputted from said first wavelength selection means into said first path, into the polarization components of said first orientation and second orientation, thereafter outputting said signal of the first channel group corresponding to said first polarization component into a third path, and outputting said signal of the second channel group corresponding to said second polarization component into a fourth path, and for separating the signal group outputted from said first wavelength selection means into said second path, into the polarization components of said first orientation and said second orientation, thereafter outputting said signal of the first channel group corresponding to said first polarization component into a fifth path, and outputting said signal of the second channel group corresponding to said second polarization component into a sixth path;
polarization plane orthogonalizing means for orthogonalizing a plane of polarization of said signal of the first channel group outputted from said second polarization separating means into said third path, with a plane of polarization of said signal of the first channel group outputted from said second polarization separating means into said fifth path, and for orthogonalizing a plane of polarization of said signal of the second channel group outputted from said second polarization separating means into said fourth path, with a plane of polarization of said signal of the second channel group outputted from said second polarization separating means into said sixth path;
first polarized wave -multiplexing means for multiplexing polarized waves of said signal of the first channel group outputted from said polarization plane orthogonalizing means into said third path and said signal of the first channel group outputted from said polarization plane orthogonalizing means into said fifth path

and outputting the multiplexed signals of the first channel group to said first output port, and for multiplexing polarized waves of said signal of the second channel group outputted from said polarization plane orthogonalizing means into said fourth path and said signal of the second channel group outputted from said polarization plane orthogonalizing means into said sixth path and outputting the multiplexed signals of the second channel group to said second output port; and

a filter having such loss characteristics that a loss becomes maximum at each channel wavelength in said signal of the multiple channels, for outputting a polarization component of the first orientation arriving at a first input end, to a first output end and for outputting a polarization component of the second orientation arriving at a second input end, to a second output end, said filter being disposed on either of the following locations: on said first path and on said second path between said first polarization separating means and said polarization plane parallelizing means; on said third path and on said fourth path between said second polarization separating means and said polarization plane orthogonalizing means; on said fifth path and on said sixth path between said second polarization separating means and said polarization plane orthogonalizing means; on said third path and on said fifth path between said polarization plane orthogonalizing means and said first polarized wave multiplexing means; and on said fourth path and on said sixth path between said polarization plane orthogonalizing means and said first polarized wave multiplexing means.

**32.** A filter applied to an interleaver according to claim 31, comprising:

first optical rotation means for rotating a plane of polarization of a signal group received through said first input end, by an angle θ and outputting the signal group into a seventh path, and for rotating a plane of polarization of a signal group received through said second input end, by the angle θ and outputting the signal group into an eighth path;

third polarization separating means for separating the signal group outputted from said first optical rotation means into said seventh path, into a polarization component of the first orientation and a polarization component of the second orientation, thereafter outputting the polarization component of the first orientation separated, into a ninth path and outputting the polarization component of the second orientation separated, into a tenth path, and for separating the signal group outputted from said first optical rotation means into said eighth path, into a polarization component of the first orientation and a polarization component of the second orientation, thereafter outputting the polarization component of the first orientation separated, into an eleventh path and outputting the polarization component of the second orientation separated, into a twelfth path;

second wavelength selection means for converting said polarization component of the second orientation outputted from said third polarization separating means into said tenth path, into a polarization state a principal component of which is the polarization component of the second orientation, and for converting said polarization component of the first orientation outputted from said third polarization separating means into said eleventh path, into a polarization state a principal component of which is the polarization component of the first orientation;

second polarized wave multiplexing means for multiplexing polarized waves of the polarization component of the first orientation outputted from said third polarization separating means into said ninth path and the principal polarization component of the signal group outputted from said second wavelength selection means into said tenth path and outputting the multiplexed polarization components into a thirteenth path, and for multiplexing polarized waves of the principal polarization component of the signal group outputted from said second wavelength selection means into said eleventh path and said second polarization component outputted from said third polarization separating means into said twelfth path and outputting the multiplexed polarization components into a fourteenth path;

second optical rotation means for rotating planes of polarization of the polarization components outputted from said second polarized wave multiplexing means into said thirteenth path, by an angle -θ and for rotating planes of polarization of the polarization components outputted from said second polarized wave multiplexing means into said fourteenth path, by the angle -θ;

first polarizing means for transmitting said polarization component of the first orientation out of the polarization components outputted from said second optical rotation means into said thirteenth path to guide the transmitted polarization component to said first output end; and second polarizing means for transmitting said polarization component of the second orientation out of the polarization components outputted from said second optical rotation means in-

to said fourteenth path to guide the transmitted polarization component to said second output end.

33. A filter according to claim 32, wherein the rotation angle θ of the plane of polarization in said first optical rotation means is variable.

34. A filter according to Claim 32, wherein the rotation angle -θ of the plane of polarization in said second optical rotation means is variable.

35. A filter according to claim 32, further comprising:

optical path length adjusting means for adjusting a path length difference between path lengths of said ninth path and said tenth path caused by provision of said second wavelength selection means and for adjusting a path length difference between path lengths of said eleventh path and said twelfth path caused by provision of said second wavelength selection means.

36. An interleaver for separating a signal of multiple channels received through an input port, into a signal of a first channel group and a signal of a second channel group, for outputting the signal of the first channel group from a first output port, and for outputting the signal of the second channel group from a second output port, comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path; polarization plane parallelizing means for parallelizing a plane of polarization of the signal group outputted from said first polarization separating means into said first path, with a plane of polarization of the signal group outputted from said first polarization separating means into said second path; wavelength selection means for outputting the signal of the first channel group out of the signal group outputted from said polarization plane parallelizing means into said first path, as the polarization component of the first orientation into the first path and outputting the signal of the second channel group out of said signal group outputted from said polarization plane parallelizing means into said first path, as the polarization component of the second orientation into the first path, and for outputting the signal of the first channel group out of the signal group outputted from said polarization plane parallelizing means into said second path, as the polarization component of the first orientation into the second path and outputting the signal of the second channel group out of the signal group outputted from said polarization plane parallelizing means into said second path, as the polarization component of the second orientation into the second path; second polarization separating means for separating the signal group outputted from said wavelength selection means into said first path, into the polarization components of said first orientation and second orientation, thereafter outputting the signal of the first channel group corresponding to said polarization component of the first orientation into a third path, and outputting the signal of the second channel group corresponding to said polarization component of the second orientation into a fourth path, and for separating the signal group outputted from said wavelength selection means into said second path, into the polarization components of said first orientation and said second orientation, thereafter outputting the signal of the first channel group corresponding to said polarization component of the first orientation into a fifth path, and outputting the signal of the second channel group corresponding to said polarization component of the second orientation into a sixth path; polarization plane orthogonalizing means for orthogonalizing a plane of polarization of said signal of the first channel group outputted from said second polarization separating means into said third path, with a plane of polarization of said signal of the first channel group outputted from said second polarization separating means into said fifth path, and for orthogonalizing a plane of polarization of said signal of the second channel group outputted from said second polarization separating means into said fourth path, with a plane of polarization of said signal of the second channel group outputted from said second polarization separating means into said sixth path; polarized wave multiplexing means for multiplexing polarized waves of said signal of the first channel group outputted from said polarization plane orthogonalizing means into said third path and said signal of the first channel group outputted from said polarization plane orthogonalizing means into said fifth path and outputting the multiplexed signals of the first channel group to said first output port, and for multiplexing polarized waves of said signal of the second channel group outputted from said polarization plane orthogonalizing means into said fourth path and said signal of the second channel group outputted from said polarization plane orthogonalizing means into said sixth path and outputting the multiplexed signals of the second channel group to said second output port; and

an etalon filter having such loss characteristics that a loss becomes maximum at each channel wavelength in said signal of the multiple channels, for providing the loss to one of the signal groups respectively propagating in said third path and in said fourth path and the signal group propagating in said first path and for providing the loss to one of the signal groups respectively propagating in said fifth path and in said sixth path and the signal group propagating in said second path.

37. An interleaver for separating a signal of multiple channels received through an input port, into a signal of a first channel group and a signal of a second channel group, for outputting the signal of the first channel group from a first output port, and for outputting the signal of the second channel group from a second output port, comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;

polarization plane parallelizing means for parallelizing a plane of polarization of the signal group outputted from said first polarization separating means into said first path, with a plane of polarization of the signal group outputted from said first polarization separating means into said second path;

wavelength selection means for outputting the signal of the first channel group out of the signal group outputted from said polarization plane parallelizing means into said first path, as the polarization component of the first orientation into the first path and outputting the signal of the second channel group out of said signal group outputted from said polarization plane parallelizing means into said first path, as the polarization component of the second orientation into the first path, and for outputting the signal of the first channel group out of the signal group outputted from said polarization plane parallelizing means into said second path, as the polarization component of the first orientation into the second path and outputting the signal of the second channel group out of the signal group outputted from said polarization plane parallelizing means into said second path, as the polarization component of the second orientation into the second path;

second polarization separating means for separating the signal group outputted from said wavelength selection means into said first path, into the polarization components of said first orientation and second orientation, thereafter outputting the signal of the first channel group corresponding to said polarization component of the first orientation into a third path, and outputting the signal of the second channel group corresponding to said polarization component of the second orientation into a fourth path, and for separating the signal group outputted from said wavelength selection means into said second path, into the polarization components of said first orientation and said second orientation, thereafter outputting the signal of the first channel group corresponding to said polarization component of the first orientation into a fifth path, and outputting the signal of the second channel group corresponding to said polarization component of the second orientation into a sixth path;

polarization plane orthogonalizing means for orthogonalizing a plane of polarization of said signal of the first channel group outputted from said second polarization separating means into said third path, with a plane of polarization of said signal of the first channel group outputted from said second polarization separating means into said fifth path, and for orthogonalizing a plane of polarization of said signal of the second channel group outputted from said second polarization separating means into said fourth path, with a plane of polarization of said signal of the second channel group outputted from said second polarization separating means into said sixth path;

polarized wave multiplexing means for multiplexing polarized waves of said signal of the first channel group outputted from said polarization plane orthogonalizing means into said third path and said signal of the first channel group outputted from said polarization plane orthogonalizing means into said fifth path and outputting the multiplexed signals of the first channel group to said first output port, and for multiplexing polarized waves of said signal of the second channel group outputted from said polarization plane orthogonalizing means into said fourth path and said signal of the second channel group outputted from said polarization plane orthogonalizing means into said sixth path and outputting the multiplexed signals of the second channel group to said second output port; and

an etalon filter having such loss characteristics that a loss becomes maximum at each channel wavelength in said signal of the multiple channels, for providing the loss to either one of the signal group propagating in said first path and the signal group propagating in said second path or for providing the loss to either one of the signal group propagating in said third path and the signal group propagating in said fifth path and to either one of the signal group propagating in said fourth path and the signal group propagating in said sixth path.

38. An interleaver according to claim 37, further comprising:

optical path length adjusting means for adjusting a path length difference between path lengths of said third path and said fifth path caused by said etalon filter and for adjusting a path length difference between path lengths of said fourth path and said sixth path caused by said etalon filter.

39. An interleaver for separating a signal of multiple channels received through an input port, into a signal of a first channel group and a signal of a second channel group, for outputting the signal of the first channel group from a first output port, and for outputting the signal of the second channel group from a second output port, comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;

wavelength selection means for outputting the signal of the first channel group out of the signal group outputted from said polarization separating means into said first path, while maintaining the signal of the first channel group as the polarization component of the first orientation, and converting the signal of the second channel group out of the signal group outputted from said polarization separating means into said first path, into a polarization component of the second orientation to output said signal of the second channel group, and for outputting the signal of the first channel group out of the signal group outputted from said polarization separating means into said second path, while maintaining the signal of the first channel group as the polarization component of the second orientation, and converting the signal of the second channel group out of the signal group outputted from said polarization separating means into said second path, into a polarization component of the first orientation to output said signal of the second channel group;

second polarization separating means for separating the signal group outputted from said wavelength selection means into said first path, into the polarization components of said first orientation and second orientation, thereafter outputting the signal of the first channel group corresponding to said polarization component of the first orientation into a third path, and outputting the signal of the second channel group corresponding to said polarization component of the second orientation into a fourth path, and for separating the signal group outputted from said wavelength selection means into said second path, into the polarization components of said first orientation and said second orientation, thereafter outputting the signal of the first channel group corresponding to said polarization component of the first orientation into a fifth path, and outputting the signal of the second channel group corresponding to said polarization component of the second orientation into a sixth path;

polarized wave multiplexing means for multiplexing polarized waves of said signal of the first channel group outputted from said second polarization separating means into said third path and said signal of the first channel group outputted from said second polarization separating means into said fifth path and outputting the multiplexed signals of the first channel group to said first output port, and for multiplexing polarized waves of said signal of the second channel group outputted from said second polarization separating means into said fourth path and said signal of the second channel group outputted from said second polarization separating means into said sixth path and outputting the multiplexed signals of the second channel group to said second output port; and

an etalon filter having such loss characteristics that a loss becomes maximum at each channel wavelength in said signal of the multiple channels, for providing the loss to one of the signal groups respectively propagating in said third path and in said fourth path and the signal group propagating in said first path and for providing the loss to one of the signal groups respectively propagating in said fifth path and in said sixth path and the signal group propagating in said second path.

**40.** An interleaver for separating a signal of multiple channels received through an input port, into a signal of a first channel group and a signal of a second channel group, for outputting the signal of the first channel group from a first output port, and for outputting the signal of the second channel group from a second output port, comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path; wavelength selection means for outputting the signal of the first channel group out of the signal group outputted from said polarization separating means into said first path, while maintaining the signal of the first channel group as the polarization component of the first orientation, and converting the signal of the second channel group out of the signal group outputted from said polarization separating means into said first path, into a polarization component of the second orientation to output said signal of the second channel group, and for outputting the signal of the first channel group out of the signal group outputted from said polarization separating means into said second path, while maintaining the signal of the first channel group as the polarization component of the second orientation, and converting the signal of the second channel group out of the signal group outputted from said polarization separating means into said second path, into a polarization component of the first orientation to output said signal of the second channel group; second polarization separating means for separating the signal group outputted from said wavelength selection means into said first path, into the polarization components of said first orientation and second orientation, thereafter outputting the signal of the first channel group corresponding to said polarization component of the first orientation into a third path, and outputting the signal of the second channel group corresponding to said polarization component of the second orientation into a fourth path, and for separating the signal group outputted from said wavelength selection means into said second path, into the polarization components of said first orientation and said second orientation, thereafter outputting the signal of the first channel group corresponding to said polarization component of the first orientation into a fifth path, and outputting the signal of the second channel group corresponding to said polarization component of the second orientation into a sixth path;
polarized wave multiplexing means for multiplexing polarized waves of said signal of the first channel group outputted from said second polarization separating means into said third path and said signal of the first channel group outputted from said second polarization separating means into said fifth path and outputting the multiplexed signals of the first channel group to said first output port, and for multiplexing polarized waves of said signal of the second channel group outputted from said second polarization separating means into said fourth path and said signal of the second channel group outputted from said second polarization separating means into said sixth path and outputting the multiplexed signals of the second channel group to said second output port; and
an etalon filter having such loss characteristics that a loss becomes maximum at each channel wavelength in said signal of the multiple channels, for providing the loss to either one of the signal group propagating in said first path and the signal group propagating in said second path or for providing the loss to either one of the signal group propagating in said third path and the signal group propagating in said fifth path and to either one of the signal group propagating in said fourth path and the signal group propagating in said sixth path.

**41.** An interleaver according to claim 40, further comprising:

optical path length adjusting means for adjusting a path length difference between path lengths of said third path and said fifth path caused by said etalon filter and for adjusting a path length difference between path lengths of said fourth path and said sixth path caused by said etalon filter.

**42.** An interleaver for separating a signal of multiple channels received through an input port, into a signal of a first channel group and a signal of a second channel group, for outputting the signal of the first channel group from a first output port, and for outputting the signal of the second channel group from a second output port, comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;

polarization plane parallelizing means for parallelizing a plane of polarization of the signal group outputted from said first polarization separating means into said first path, with a plane of polarization of the signal group outputted from said first polarization separating means into said second path;

a filter for converting the signal of the first channel group out of the signal group outputted from said polarization plane parallelizing means into said first path, into a polarization state a principal component of which is the polarization component of the first orientation, to output said signal of the first channel group into a third path, and converting said signal of the second channel group out of the signal group outputted from said polarization plane parallelizing means into said first path, into a polarization state a principal component of which is the polarization component of the second orientation, to output said signal of the second channel group into a fourth path, and for converting said signal of the first channel group out of the signal group outputted from said polarization plane parallelizing means into said second path, into a polarization state a principal component of which is the polarization component of the first orientation, to output said signal of the first channel group into a fifth path, and converting the signal of the second channel group out of the signal group outputted from said polarization plane parallelizing means into said second path, into a polarization state a principal component of which is the polarization component of the second orientation, to output said signal of the second channel group into a sixth path;

polarization plane orthogonalizing means for orthogonalizing a plane of polarization of the principal polarization component of said signal of the first channel group outputted from said filter into said third path, with a plane of polarization of the principal polarization component of said signal of the first channel group outputted from said filter into said fifth path, and for orthogonalizing a plane of polarization of the principal polarization component of said signal of the second channel group outputted from said filter into said fourth path, with a plane of polarization of the principal polarization component of said signal of the second channel group outputted from said filter into said sixth path;

and

polarized wave multiplexing means for multiplexing polarized waves of the principal polarization component of said signal of the first channel group outputted from said polarization plane orthogonalizing means into said third path and the principal polarization component of said signal of the first channel group outputted from said polarization plane orthogonalizing means into said fifth path and outputting a group of said multiplexed signals to said first output port, and for multiplexing polarized waves of the principal polarization component of said signal of the second channel group outputted from said polarization plane orthogonalizing means into said fourth path and the principal polarization component of said signal of the second channel group outputted from said polarization plane orthogonalizing means into said sixth path and outputting a group of said multiplexed signals to said second output port.

43. A filter applied to an interleaver according to claim 42, comprising:

first wavelength selection means for outputting one of said signals of the first channel group and second channel group arriving as the polarization component of the first orientation, while maintaining said signal as the polarization component of the first orientation, and for converting the other signal into a polarization component of the second orientation to output said other signal as the polarization component of the second orientation;

second polarization separating means for separating the signal group outputted from said first wavelength selection means, into the signal of the first channel group and the signal of the second channel group and outputting said signal of the first channel group and said signal of the second channel group into their respective paths different from each other; and

second wavelength selection means for converting a signal of one channel group outputted as the polarization component of the first orientation from said second polarization separating means, into a polarization state a principal component of which is the polarization component of the first orientation, and outputting said signal, and for converting a signal of the other channel group outputted as the polarization component of the second orientation from said second polarization separating means, into a polarization state a principal component of which is the polarization component of the second orientation, and outputting said signal.

**44.** A filter according to claim 43,

wherein said first wavelength selection means outputs each of said polarization component of the first orientation and said polarization component of the second orientation at a predetermined wavelength interval; and

wherein said second wavelength selection means reverses each of said polarization component of the first orientation and said polarization component of the second orientation into a reverse orientation at a wavelength interval equal to half of said predetermined wavelength interval.

**45.** A filter according to claim 43, wherein a polarization split ratio between said polarization component of the first orientation and said polarization component of the second orientation in said second wavelength selection means is neither 1:0 nor 0:1.

**46.** An interleaver for separating a signal of multiple channels received through an input port, into a signal of a first channel group and a signal of a second channel group, for outputting the signal of the first channel group from a first output port, and for outputting the signal of the second channel group from a second output port, comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;

polarization plane parallelizing means for parallelizing a plane of polarization of the signal group outputted from said first polarization separating means into said first path, with a plane of polarization of the signal group outputted from said first polarization separating means into said second path so as to match said planes of polarization with said first orientation;

a filter for converting one of said signal of the first channel group outputted from said polarization plane parallelizing means into said first path and said signal of the first channel group outputted from said polarization plane parallelizing means into said second path, into a polarization state a principal component of which is the polarization component of the first orientation, to output said converted signal into a third path, and outputting the other signal into a fifth path while maintaining said other signal as the polarization component of the first orientation, and for converting one of said signal of the second channel group outputted from said polarization plane parallelizing means into said first path and said signal of the second channel group outputted from said polarization plane parallelizing means into said second path, into a polarization state a principal component of which is the polarization component of the second orientation, to output said converted signal into a fourth path, and converting the other signal into a polarization component of the second orientation to output said other signal into a sixth path;

polarization plane orthogonalizing means for orthogonalizing a plane of polarization of the principal polarization component of said signal of the first channel group outputted from said filter into said third path, with a plane of polarization of the principal polarization component of said signal of the first channel group outputted from said filter into said fifth path, and for orthogonalizing a plane of polarization of the principal polarization component of said signal of the second channel group outputted from said filter into said fourth path, with a plane of polarization of the principal polarization component of said signal of the second channel group outputted from said filter into said sixth path;

polarized wave multiplexing means for multiplexing polarized waves of the principal polarization component of said signal of the first channel group outputted from said polarization plane orthogonalizing means into said third path and the principal polarization component of said signal of the first channel group outputted from said polarization plane orthogonalizing means into said fifth path and outputting said multiplexed signals of the first channel group to said first output port, and for multiplexing polarized waves of the principal polarization component of said signal of the second channel group outputted from said polarization plane orthogonalizing means into said fourth path and the principal polarization component of said signal of the second channel group outputted from said polarization plane orthogonalizing means into said sixth path and outputting said multiplexed signals of the second channel group to said second output port.

**47.** A filter applied to an interleaver according to claim 46, comprising:

first wavelength selection means for outputting the signal of the first channel group out of a signal group arriving through said first path, while maintaining the signal as the polarization component of the first orientation, and converting the signal of the second channel group out of said arriving signal group into a polarization component of the second orientation, and for outputting the signal of the first channel group out of a signal group arriving through said second path, while maintaining said signal as the polarization component of the first orientation, and converting the signal of the second channel group out of said arriving signal group into a polarization component of the second orientation; second polarization separating means for separating polarized waves of said signal of the first channel group and said signal of the second channel group outputted from said first wavelength selection means into said first path, from each other, thereafter outputting said signal of the first channel group corresponding to said polarization component of the first orientation into a third path, and outputting said signal of the second channel group corresponding to said polarization component of the second orientation into a fourth path, and for separating polarized waves of said signal of the first channel group and said signal of the second channel group outputted from said first wavelength selection means into said second path, from each other, thereafter outputting said signal of the first channel group corresponding to said first polarization component into a fifth path, and outputting said signal of the second channel group corresponding to said polarization component of the second orientation into a sixth path; and second wavelength selection means for converting one of said signals of the first channel group outputted from said second polarization separating means into said third path and into said fifth path, into a polarization state a principal component of which is the polarization component of the first orientation, and for converting one of said signals of the second channel group outputted from said second polarization separating means into said fourth path and into said sixth path, into a polarization state a principal component of which is the polarization component of the second orientation.

**48.** A filter according to claim 47, further comprising:

- third wavelength selection means for outputting the signal of the first channel group propagating in a path without said second wavelength selection means out of said third path and said fifth path, as the polarization component of the first orientation.

**49.** A filter according to claim 47, further comprising:

fourth wavelength selection means for outputting the signal of the second channel group propagating in a path without said second wavelength selection means out of said fourth path and said sixth path, as the polarization component of the second orientation.

**50.** A filter according to claim 47, further comprising:

optical path length adjusting means for adjusting a path length difference between path lengths of said third path and said fifth path and for adjusting a path length difference between path lengths of said fourth path and said sixth path.

**51.** A filter according to claim 47, wherein said first wavelength selection means outputs said polarization component of the first orientation and said polarization component of the second orientation at a predetermined wavelength interval; and wherein said second wavelength selection means reverses each of said polarization component of the first orientation and said polarization component of the second orientation into a reverse orientation at a wavelength interval equal to half of said predetermined wavelength interval.

**52.** A filter according to claim 47, wherein a polarization split ratio between said polarization component of the first orientation and said polarization component of the second orientation in said second wavelength selection means is neither 1:0 nor 0:1.

**53.** A filter according to claim 48, wherein said third wavelength selection means has the same transmission characteristics as said first wavelength selection means does.

**54.** A filter according to claim 49, wherein said fourth wavelength selection means has transmission characteristics reverse to those of said first wavelength selection means, for each of said polarization component of the first orientation and said polarization component of the second orientation.

**55.** A filter according to claim 48, wherein said second wavelength selection means and said third wavelength selection means are integrated into one.

**56.** A filter according to claim 49, wherein said second wavelength selection means and said fourth wavelength selection means are integrated into one.

**57.** A filter according to claim 47, further comprising:

third wavelength selection means for outputting the signal of the first channel group propagating in a path without said second wavelength selection means out of said third path and said fifth path, as the polarization component of the first orientation; and

fourth wavelength selection means for outputting the signal of the second channel group propagating in a path without said second wavelength selection means out of said fourth path and said sixth path, as the polarization component of the second orientation,

wherein said third wavelength selection means and said fourth wavelength selection means are integrated into one.

**58.** A filter according to claim 57, wherein said second wavelength selection means, said third wavelength selection means, and said fourth wavelength selection means are integrated into one.

**59.** An interleaver system comprising:

splitting means for splitting a signal of multiple channels into two signal groups;
a first interleaver having the same structure as the interleaver as set forth in Claim 46, for separating one of said signal groups split by said splitting means, into a signal of a first channel group and a signal of a second channel group;
a second interleaver having the same structure as the interleaver as set forth in Claim 46, for separating the other of said signal groups split by said splitting means, into a signal of the first channel group and a signal of the second channel group; and
multiplexing means for multiplexing said signal of the first channel group outputted from said first interleaver and said signal of the first channel group outputted from said second interleaver, and for multiplexing said signal of the second channel group outputted from said first interleaver and said signal of the second channel group outputted from said second interleaver,

wherein a path in said first interleaver where said second wavelength selection means is provided is different from a path in said second interleaver where said second wavelength selection means is provided.

**60.** An interleaver for separating a signal of multiple channels received through an input port, into a signal of a first channel group and a signal of a second channel group, for outputting the signal of the first channel group from a first output port, and for outputting the signal of the second channel group from a second output port, comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;
first wavelength selection means for outputting the signal of the first channel group outputted from said first polarization separating means into said first path, while maintaining said signal as the polarization component of the first orientation, and converting said signal of the second channel group outputted from said first polarization separating means into said first path, into a polarization component of the second orientation, and for outputting the signal of the first channel group outputted from said first polarization separating means into said second path, while maintaining said signal as the polarization component of the second orientation, and converting the signal of the second channel group outputted from said first polarization separating means into said second path, into a polarization component of the first orientation;
second polarization separating means for outputting said signal of the first channel group corresponding to said polarization component of the first orientation outputted from said first wavelength selection means into said first path, into a third path, and outputting said signal of the second channel group corresponding to said polarization component of the second orientation into a fourth path, and for outputting said signal of the first channel group corresponding to said polarization component of the second orientation outputted from said first wavelength selection means into said second path, into a fifth path, and outputting said signal of the second channel group corresponding to said polarization component of the second orientation outputted from said first wavelength selection means into said second path, into a sixth path;
second wavelength selection means for converting each of the signals of the channel groups outputted as the polarization components of the first orientation from said second polarization separating means, into a polarization state a principal component of which is the polarization component of the first orientation and for converting each of the signals of the channel. groups outputted as the polarization components of the second orientation from said second polarization separating means, into a polarization state a principal component of which is the polarization component of the second orientation; and

polarized wave multiplexing means for multiplexing polarized waves of the principal polarization component of said signal of the first channel outputted from said second wavelength selection means into said third path and the principal polarization component of said signal of the first channel group outputted from said second wavelength selection means into said fifth path, and outputting the multiplexed principal polarization components of the signals of the first channel group to said first output port, and for multiplexing polarized waves of the principal polarization component of said signal of the second channel group outputted from said second wavelength selection means into said fourth path and the principal polarization component of said signal of the second channel group outputted from said second wavelength selection means into said sixth path, and outputting the multiplexed principal polarization components of the signals of the second channel group to said second output port.

61. An interleaver according to claim 60,

wherein said first wavelength selection means outputs each of said polarization component of the first orientation and said polarization component of the second orientation at a predetermined wavelength interval; and

wherein said second wavelength selection means reverses each of said polarization component of the first orientation and said polarization component of the second orientation into a reverse orientation at a wavelength interval equal to half of said predetermined wavelength interval.

62. A filter according to claim 60, wherein a polarization split ratio between said polarization component of the first orientation and said polarization component of the second orientation in said second wavelength selection means is neither 1:0 nor 0:1.

63. An interleaver for separating a signal of multiple channels received through an input port, into a signal of a first channel group and a signal of a second channel group, for outputting the signal of the first channel group from a first output port, and for outputting the signal of the second channel group from a second output port, comprising:

first polarization separating means for separating said signal of the multiple channels received through said input port, into polarization components of a first orientation and a second orientation orthogonal to each other, for outputting the polarization component of the first orientation separated, into a first path, and for outputting the polarization component of the second orientation separated, into a second path;

polarization plane parallelizing means for parallelizing a plane of polarization of the signal group outputted from said first polarization separating means into said first path, with a plane of polarization of the signal group outputted from said first polarization separating means into said second path;

first wavelength selection means for outputting the signal of the first channel group out of the signal group outputted from said polarization plane parallelizing means into said first path, as the polarization component of the first orientation into the first path, and outputting said signal of the second channel group out of said signal group outputted from said polarization plane parallelizing means into said first path, as the polarization component of the second orientation into the first path, and for outputting said signal of the first channel group out of the signal group outputted from said polarization plane parallelizing means into said second path, as the polarization component of the first orientation into the second path, and outputting said signal of the second channel group out of the signal group outputted from said polarization plane parallelizing means into said second path, as the polarization component of the second orientation into the second path;

second polarization separating means for separating the signal group outputted from said first wavelength selection means into said first path, into the polarization components of said first orientation and second orientation, thereafter outputting said signal of the first channel group corresponding to said first polarization component into a third path, and outputting said signal of the second channel group corresponding to said second polarization component into a fourth path, and for separating the signal group outputted from said first wavelength selection means into said second path, into the polarization components of said first orientation and said second orientation, thereafter outputting said signal of the first channel group corresponding to said first polarization component into a fifth path, and outputting said signal of the second channel group corresponding to said second polarization component into a sixth path;

polarization plane orthogonalizing means for orthogonalizing a plane of polarization of said signal of the first channel group outputted from said second polarization separating means into said third path, with a plane of polarization of said signal of the first channel group outputted from said second polarization separating means into said fifth path, and for orthogonalizing a plane of polarization of said signal of the second channel group outputted from said second polarization separating means into said fourth path, with a plane of polarization of said signal of the second channel group outputted from said second polarization separating means into said sixth path;

first polarized wave multiplexing means for multiplexing polarized waves of said signal of the first channel group outputted from said polarization plane orthogonalizing means into said third path and said signal of the first channel group outputted from said polarization plane orthogonalizing means into said fifth path and outputting the multiplexed signals of the first channel group to said first output port, and for multiplexing polarized waves of said signal of the second channel group outputted from said polarization plane orthogonalizing means into said fourth path and said signal of the second channel group outputted from said polarization plane orthogonalizing means into said sixth path and outputting the multiplexed signals of the second channel group to said second output port; and

a filter having such loss characteristics that a loss becomes maximum at each channel wavelength in said signal of the multiple channels, for outputting a polarization component of the first orientation arriving at a first input end, to a first output end and for outputting a polarization component of the second orientation arriving at a second input end, to a second output end, said filter being disposed on either of the following locations: on said first path and on said second path between said first polarization separating means and said polarization plane parallelizing means; on said third path and on said fourth path between said second polarization separating means and said polarization plane orthogonalizing means; on said fifth path and on said sixth path between said second polarization separating means and said polarization plane orthogonalizing means; on said third path and on said fifth path between said polarization plane orthogonalizing means and said first polarized wave multiplexing means; and on said fourth path and on said sixth path between said polarization plane orthogonalizing means and said first polarized wave multiplexing means.

64. A filter applied to an interleaver according to claim 63, comprising:

first optical rotation means for rotating a plane of polarization of a signal group received through said first input end, by an angle $\theta$ and

outputting the signal group into a seventh path, and for rotating a plane of polarization of a signal group received through said second input end, by the angle $\theta$ and outputting the signal group into an eighth path;

third polarization separating means for separating the signal group outputted from said first optical rotation means into said seventh path, into a polarization component of the first orientation and a polarization component of the second orientation, thereafter outputting the polarization component of the first orientation separated, into a ninth path, and outputting the polarization component of the second orientation separated, into a tenth path, and for separating the signal group outputted from said first optical rotation means into said eighth path, into a polarization component of the first orientation and a polarization component of the second orientation, thereafter outputting the polarization component of the first orientation separated, into an eleventh path and outputting the polarization component of the second orientation separated, into a twelfth path;

second wavelength selection means for converting said polarization component of the second orientation outputted from said third polarization separating means into said tenth path, into a polarization state a principal component of which is the polarization component of the second orientation, and for converting said polarization component of the first orientation outputted from said third polarization separating means into said eleventh path, into a polarization state a principal component of which is the polarization component of the first orientation;

second polarized wave multiplexing means for multiplexing polarized waves of the polarization component of the first orientation outputted from said third polarization separating means into said ninth path and the principal polarization component of the signal group outputted from said second wavelength selection means into said tenth path and outputting the multiplexed polarization components into a thirteenth path, and for multiplexing polarized waves of the principal polarization component of the signal group outputted from said second wavelength selection means into said eleventh path and said second polarization component outputted from said third polarization separating means into said twelfth path and outputting the multiplexed polarization components into a fourteenth path;

second optical rotation means for rotating planes of polarization of the polarization components outputted from said second polarized wave multiplexing means into said thirteenth path, by an angle -θ and for rotating planes of polarization of the polarization components outputted from said second polarized wave multiplexing means into said fourteenth path, by the angle -θ;

first polarizing means for transmitting said polarization component of the first orientation out of the polarization components outputted from said second optical rotation means into said thirteenth path to guide the transmitted polarization component to said first output end; and second polarizing means for transmitting said polarization component of the second orientation out of the polarization components outputted from said second optical rotation means into said fourteenth path to guide the transmitted polarization component to said second output end.

**65.** A filter according to claim 63, wherein the rotation angle θ of the plane of polarization in said first optical rotation means is variable.

**66.** A filter according to claim 63, wherein the rotation angle -θ of the plane of polarization in said second optical rotation means is variable.

**67.** A filter according to claim 64, further comprising:

optical path length adjusting means for adjusting a path length difference between path lengths of said ninth path and said tenth path caused by provision of said second wavelength selection means -and for adjusting a path length difference between path lengths of said eleventh path and said twelfth path caused by provision of said second wavelength selection means.

Fig.1

# Fig.2A

# Fig.2B

**Fig.3**

EP 1 333 310 A1

# Fig.4

EP 1 333 310 A1

## Fig.5

## Fig.6

## Fig.7A

## Fig.7B

# Fig.8A

# Fig.8B

EP 1 333 310 A1

*Fig.9*

## Fig.10

# Fig.11A

# Fig.11B

## Fig.12A

## Fig.12B

EP 1 333 310 A1

*Fig.13*

Fig.14

# Fig.15

## *Fig.16A*

## *Fig.16B*

EP 1 333 310 A1

**Fig.17**

## Fig.18A

## Fig.18B

*Fig.19A*

*Fig.19B*

*Fig.20*

# Fig.21

## Fig.22A

## Fig.22B

## Fig.23A

## Fig.23B

## Fig.24A

## Fig.24B

**Fig.25**

Fig.26

# Fig.27A

# Fig.27B

# Fig.28

Fig.29

*Fig.30*

## Fig.31A

## Fig.31B

## Fig.32A

## Fig.32B

Fig.33

## INTERNATIONAL SEARCH REPORT

International application No.

PCT/JP01/09836

**A. CLASSIFICATION OF SUBJECT MATTER**
Int.Cl$^7$  G02B 27/28

According to International Patent Classification (IPC) or to both national classification and IPC

**B. FIELDS SEARCHED**

Minimum documentation searched (classification system followed by classification symbols)
Int.Cl$^7$  G02B 27/28

Documentation searched other than minimum documentation to the extent that such documents are included in the fields searched
Jitsuyo Shinan Koho        1926-1996      Toroku Jitsuyo Shinan Koho  1994-2001
Kokai Jitsuyo Shinan Koho  1971-2001      Jitsuyo Shinan Toroku Koho  1996-2001

Electronic data base consulted during the international search (name of data base and, where practicable, search terms used)
JOIS (JICST)

**C. DOCUMENTS CONSIDERED TO BE RELEVANT**

| Category* | Citation of document, with indication, where appropriate, of the relevant passages | Relevant to claim No. |
|---|---|---|
| X | US 5694233 A (Micro-Vision Communications, LLC), 02 December, 1997 (02.12.1997), Full text & WO 98/04056 A1     & WO 98/19425 A1 & WO 98/33289 A1     & EP 916198 A1 & EP 951764 A2 | 1-3,10,11, 13-15,20,28, 30,42,43, 45-47,52,60,62 |
| A |  | 4-9,12,16-19, 21-27,29, 31-41,44, 48-51,53-59, 61,63-67 |
| A | US 5978116 A (Chorum Technologies, Inc.), 02 November, 1999 (02.11.1999), Full text  (Family: none) | 1-67 |

☐  Further documents are listed in the continuation of Box C.        ☐  See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 28 January, 2002 (28.01.02) | Date of mailing of the international search report <br> 12 February, 2002 (12.02.02) |
|---|---|
| Name and mailing address of the ISA/ <br> Japanese Patent Office | Authorized officer |
| Facsimile No. | Telephone No. |

Form PCT/ISA/210 (second sheet) (July 1992)